(19) Europäisches Patentamt
European Patent Office
Office européen des brevets

(11) EP 2 135 915 A1

(12) **EUROPEAN PATENT APPLICATION**
published in accordance with Art. 153(4) EPC

(43) Date of publication:
**23.12.2009 Bulletin 2009/52**

(21) Application number: **08722003.4**

(22) Date of filing: **13.03.2008**

(51) Int Cl.:
***C09K 11/06*** *(2006.01)* ***C08K 5/23*** *(2006.01)*
***C08L 101/00*** *(2006.01)* ***C09K 11/00*** *(2006.01)*
***C09B 29/12*** *(2006.01)*

(86) International application number:
**PCT/JP2008/054599**

(87) International publication number:
**WO 2008/111637 (18.09.2008 Gazette 2008/38)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.03.2007 JP 2007064242**

(71) Applicant: **Riken**
**Wakou-shi, Saitama 351-0198 (JP)**

(72) Inventors:
- **HAN, Mina**
**Wako-shi**
**Saitama**
**3510198 (JP)**
- **HARA, Masahiko**
**Wako-shi**
**Saitama 351-0198 (JP)**
- **FUKASAWA, Keiko**
**Wako-shi**
**Saitama 351-0198 (JP)**
- **SHIMOMURA, Masatsugu**
**Wako-shi**
**Saitama 351-0198 (JP)**

(74) Representative: **Zimmermann & Partner**
**Postfach 330 920**
**80069 München (DE)**

# (54) FLUORESCENT FILM

(57) Disclosed is a fluorescent film containing an azobenzene derivative represented by the general formula (I) below and a binder. (In the general formula (I), $R^1$ represents a hydrogen atom or the like; $Ar^1$ and $Ar^2$ independently represent an optionally substituted arylene group or aromatic heterocyclic ring; X represents an alkylene group which may contain a heteroatom; $X^1$ represents -NH- or the like; Y represents a hydrogen atom or the like; a represents an integer of 0-2; m and n independently represent an integer of 1-8, and when m and n are integers of not less than 2, a plurality of $Ar^1$'s and $Ar^2$'s may be the same as or different from each other.)

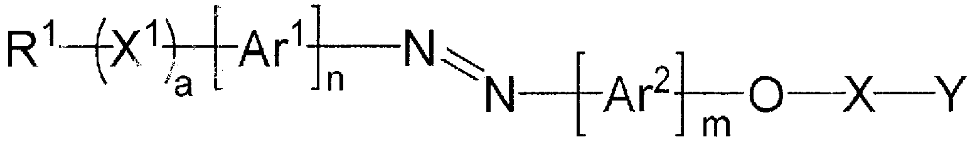

(I)

EP 2 135 915 A1

## Description

Cross-reference of Related Application

The present invention claims priority on Japanese Patent Application No. 2007-064242 filed in Japan on March 13, 2007, the entire contents of which are hereby incorporated by reference.

Technical Field

The present invention relates to a fluorescent film with variable fluorescence property.

Background Art

Recently, there have been developed materials that emit fluorescence with plural colors. For example, there have been reported use of a fluorescent polymer including light-emitting units corresponding to three colors (blue, green, and red) (Adv. Funct. Mater. 2005, 15, 1647, whole descriptions thereof are hereby incorporated by reference), a mixture of fluorescent polymers that emit red fluorescence, blue fluorescence, and green fluorescence, respectively (JACS 2006, 128, 15968, whole descriptions thereof are hereby incorporated by reference), and the like.
However, although these fluorescent materials emit intense fluorescence in a diluted solution, they drop the intensity of fluorescence in a solid state due to formation of assembly. Even if these fluorescent materials are formed into thin films and devices including the thin films are produced, the devices hardly emit fluorescence with high intensity.

Disclosure of Invention

An object of the present invention is to provide a fluorescent film capable of emitting fluorescence with plural colors with high intensity.
In order to achieve the object, the inventors of the present invention have diligently studied and found that azobenzene derivatives with a predetermined structure hardly emit light before aggregation, but when aggregated to form aggregation, the azobenzene derivatives emit fluorescence with greatly higher intensity than that of the azobenzene derivatives before aggregation, that the azobenzene derivatives have plural excitation wavelengths, and that in the form of a thin film, the azobenzene derivatives can stably emit different colored fluorescence with high intensity in response to irradiation of excitation lights with different wavelengths. Thus, the inventors have completed the present invention.
The present invention relates to a fluorescent film, comprising an azobenzene derivative represented by General Formula (I) and a binder,

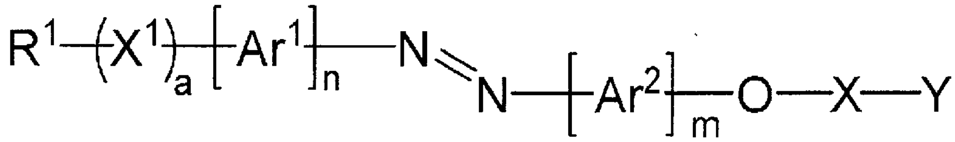

(I)

wherein $R^1$ represents a hydrogen atom, a halogen atom, an alkoxy group, an alkyl group, a cycloalkyl group, an aryl group, a heterocyclic group, a cyano group, an ester group, a ketone group, a nitro group, $-CA_3$, -(C=O)A, -(C=O)$NA_2$, -BA, -OA, -SA, $-NA_2$, -(P=O)$A_2$ (A is a hydrogen atom, a halogen atom, an alkoxy group, or an alkyl group, and when a plurality of A are included in a single group, A may be identical or different), or an organic fluorescent group,
$Ar^1$ and $Ar^2$ independently represent an arylene group or an aromatic heterocycle each optionally containing a substituent,
X represents an alkylene group that may include a hetero atom,
$X^1$ represents -NH-, -O-, -S-, or an alkylene group that may include a heteroatom or a linking group,
Y represents a hydrogen atom, -BA', $-CA'_3$, -OA', $-NA'_2$, $-PA'_2$, or -SA' (A' is a hydrogen atom, a halogen atom, an alkoxy group, or an alkyl group, and when a plurality of A' are included in a single group, A' may be identical or different),
a represents an integer ranging from 0 to 2, and

m and n independently represent an integer of 1 to 8, plural $Ar^1$ and plural $Ar^2$ exist in a case where m and n are integers of 2 or more, and the plural $Ar^1$ and the plural $Ar^2$ may be identical or different.

In accordance with an aspect of the present invention, in General Formula (I), $Ar^1$ and $Ar^2$ independently represent an arylene group or an aromatic heterocycle, and the substituent R is one of a halogen atom, an alkoxy group, an alkyl group, a cycloalkyl group, an aryl group, a heterocyclic group, a cyano group, an ester group, a ketone group, -CA"$_3$, -(C=O)A", -(C=O)NA"$_2$, -BA", -OA", -SA", -NA"$_2$, -(P=O)A"$_2$ (A" is a hydrogen atom, a halogen atom, an alkoxy group, or an alkyl group, and when a plurality of A" are included in a single group, A" may be identical or different), or an organic fluorescent group.

In accordance with an aspect of the present invention, the binder is at least one selected from the group consisting of polycaprolactone, polycarbonate resin, poly(2-ethyl-2-oxazoline), and poly(methyl methacrylate).

In accordance with an aspect of the present invention, the azobenzene derivative represented by General Formula (I) is an azobenzene derivative represented by General Formula (III)

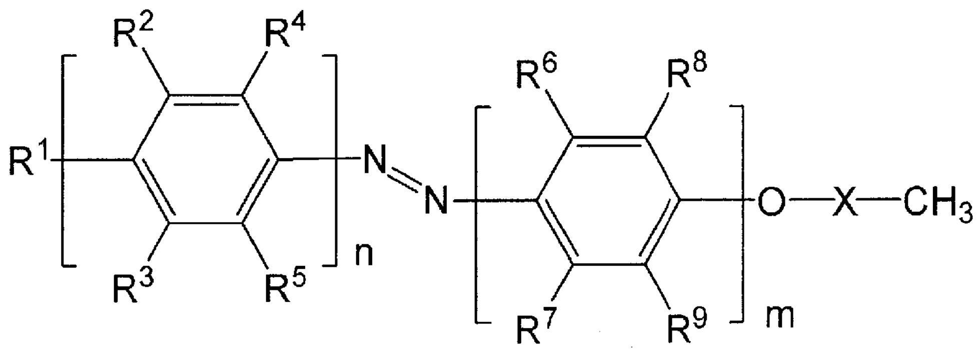

(III)

wherein $R^2$-$R^9$ independently represent a halogen atom, an alkoxy group, an alkyl group, a cycloalkyl group, an aryl group, a heterocyclic group, a cyano group, an ester group, a ketone group, -CA"$_3$, -(C=O)A", -(C=O)NA"$_2$, -BA", -OA", -SA", -NA"$_2$, -(P=O)A"$_2$ (A" is a hydrogen atom, a halogen atom, an alkoxy group, or an alkyl group, and when a plurality of A" are included in a single group, A" may be identical or different), or an organic fluorescent group, at least two of $R^2$-$R^9$ in two phenylene cycles that bind to each other via an azo group are substituents other than hydrogen atoms, $R^1$, X, m, and n are defined in the same manner as in General Formula (I), and when m and n are integers of 2 or more, a plurality of $R^2$-$R^9$ exist, and they may be identical or different.

In accordance with an aspect of the present invention, the azobenzene derivative represented by General Formula (I) exists in a form of fluorescent particles obtained by aggregating the azobenzene derivative.

The present invention provides a fluorescent film with a variable fluorescence property that allows emitting fluorescence with different wavelengths (colors) with high intensity in response to irradiation of excitation light with different wavelengths.

Brief Description of Drawings

Fig. 1 shows SEM and TEM photographs of a solution containing azobenzene derivative.

Fig. 2 shows $^1$H-NMR (in $CD_2Cl_2$) spectra of the azobenzene derivative 1 before irradiation of ultraviolet light, after irradiation of ultraviolet light for 20 hours, left at room temperature for 2 weeks after the irradiation, and left one month after the irradiation, respectively.

Fig. 3 shows absorption spectra and fluorescence spectra of a solution containing the azobenzene derivative 1 before irradiation of ultraviolet light, after irradiation of ultraviolet light for 3 minutes, after irradiation of ultraviolet light for 780 minutes, left at room temperature for 2 weeks, and left at room temperature for 1 month.

Fig. 4 shows absorption spectra and fluorescence spectra of a solution containing the azobenzene derivative 2 before irradiation of ultraviolet light, during the irradiation, and left at room temperature.

Fig. 5 shows absorption spectra and fluorescence spectra of a solution containing the azobenzene derivative 3 before irradiation of ultraviolet light, during the irradiation, and left at room temperature.

Fig. 6 shows absorption spectra and fluorescence spectra of a solution containing azobenzene derivative 4 before irradiation of ultraviolet light, during the irradiation, and left at room temperature.

Fig. 7 shows absorption spectra and fluorescence spectra of a solution containing azobenzene derivative 5 before irradiation of ultraviolet light, during the irradiation, and left at room temperature.

Fig. 8 shows absorption spectra and fluorescence spectra of a solution containing azobenzene derivative 6 before irradiation of ultraviolet light, during the irradiation, and left at room temperature.

Fig. 9 shows absorption spectra and fluorescence spectra of a solution containing azobenzene derivative 7 before irradiation of ultraviolet light, during the irradiation, and left at room temperature.

Fig. 10 shows $^1$H-NMR (in $CD_2Cl_2$) spectra of the azobenzene derivative 7 before irradiation of ultraviolet light, after irradiation of ultraviolet light for 13 hours, and left at room temperature for one day after the irradiation, respectively.

Fig. 11 shows fluorescence spectrum of fluorescent particles made of the azobenzene derivative 1 (change in color of fluorescence of the azobenzene derivative 1 in response to change in excitation light).

Fig. 12 shows fluorescence spectrum of fluorescent particles made of the azobenzene derivative 4 (change in color of fluorescence of the azobenzene derivative 4 in response to change in excitation light).

Fig. 13 shows fluorescence spectrum of fluorescent particles made of the azobenzene derivative 8 (change in color of fluorescence of the azobenzene derivative 8 in response to change in excitation light).

Fig. 14 shows fluorescence spectrum of fluorescent particles made of the azobenzene derivative 9 (change in color of fluorescence of the azobenzene derivative 9 in response to change in excitation light).

Fig. 15-1 shows fluorescence spectra of fluorescent particles made of azobenzene derivatives 10-12, respectively.

Fig. 15-2 shows fluorescence spectra of fluorescent particles made of azobenzene derivatives 13-16, respectively.

Fig. 16 shows a relation between Hammett constants of terminal substituents of the azobenzene derivatives 10, 11, 12, 13, 14, 15 and 17 and $\lambda_{max}$ of fluorescence obtained by irradiating excitation light.

Fig. 17-1 shows absorption spectra of fluorescent particles made of the azobenzene derivatives 17, 18, 20, and 21.

Fig. 17-2 shows fluorescence spectra of fluorescent particles made of the azobenzene derivatives 17, 18, 20, and 21.

Fig. 18 is a drawing in which fluorescence spectra of the azobenzene derivatives 17-21 are overlapped.

Fig. 19 shows fluorescence spectra of fluorescent particles made of the azobenzene derivatives 15 and 16, respectively.

Fig. 20-1 shows fluorescent spectrum of a fluorescent film containing fluorescent particles made of the azobenzene derivative 4.

Fig. 20-2 shows fluorescent spectrum of a fluorescent film containing fluorescent particles made of the azobenzene derivative 1.

Fig. 20-3 shows fluorescent spectrum of a fluorescent film containing fluorescent particles made of the azobenzene derivative 9.

Fig. 21 shows fluorescence microscope photographs of a fluorescent film containing fluorescent particles made of the azobenzene derivative 4.

Fig. 22 shows fluorescence microscope photographs of a fluorescent film containing fluorescent particles made of the azobenzene derivative 1.

Fig. 23 shows fluorescence microscope photographs of a fluorescent film containing fluorescent particles made of the azobenzene derivative 8.

Best Mode for Carrying Out the Invention

A fluorescent film of the present invention includes an azobenzene derivative represented by General Formula (I) and a binder. "Fluorescent film" in the present invention indicates a film capable of emitting fluorescence in response to irradiation of excitation light. The fluorescent film may be in various forms such as films and sheets.

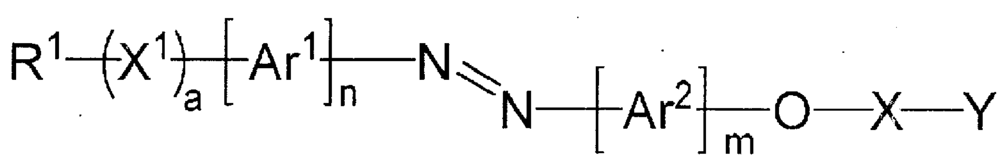

(I)

Conventional organic fluorescent materials have a problem that they drop the intensity of fluorescence in a high concentration state such as a solid state due to formation of assembly. Consequently, in the form of a film, it is difficult for conventional organic fluorescent materials to stably emit fluorescence with high intensity. In contrast thereto, when the azobenzene derivative represented by General Formula (I) is isomerized from *trans* form to *cis* form in response

to irradiation of ultraviolet light and then further irradiated with ultraviolet light, the azobenzene derivative is self-assembled and aggregated to form aggregation (fluorescent particles) that emits fluorescence with high intensity. Therefore, the azobenzene derivative can stably emit fluorescence with high intensity in the form of a film. Further, the fluorescent particles have a nature of emitting fluorescence with different wavelengths (different colors) in response to irradiation of excitation lights with different wavelengths. Further surprisingly, this nature appears when the fluorescent particles are in the form of a film.

Therefore, the present invention provides a fluorescent film capable of stably emitting intensive fluorescence with different wavelengths (colors).

Azobemene derivative

The following explains General Formula (I).

In General Formula (I), $R^1$ represents a hydrogen atom, a halogen atom, an alkoxy group, an alkyl group, a cycloalkyl group, an aryl group, a heterocyclic group, a cyano group, an ester group, a ketone group, a nitro group, $-CA_3$, $-(C{=}O)A$, $-(C{=}O)NA_2$, -BA, -OA, -SA, $-NA_2$, $-(P{=}O)A_2$ (A is a hydrogen atom, a halogen atom, an alkoxy group, or an alkyl group, and when a plurality of A are included in a single group, A may be identical or different), or an organic fluorescent group.

Examples of the halogen atom include fluorine, chlorine, and iodine.

The alkoxy group may be an alkoxy group having 1 to 28 carbon atoms. Specific examples of the alkoxy group include a $CH_3O$- group and a $CH_3CH_2O$- group.

The alkyl group may be a linear or branched chain alkyl group having 1-28 carbon atoms for example. Specific examples of the alkyl group include a $CH_3$- group, a $CH_3CH_2$-group, a $CH_3CH_2CH_2CH_2CH_2CH_2$- group, and a $CH_3CH_2(CH_3)CH$-(sec-butyl) group.

The cycloalkyl group may be a cycloalkyl group having 5 or 6 carbon atoms, that is, a cyclopentyl group or a cyclohexyl group.

The aryl group may be a monocyclic phenyl group for example, or may be a condenses ring-derived aryl group such as naphthalene, anthracene, phenanthrene, phenalene, triphenalene, and pyrene.

The heterocyclic group may be a heterocyclic group including a nitrogen atom (e.g. pyridyl group) for example. The ester group may be an R'OCO- group (R' represents a hydrogen atom or an alkyl group). R' is preferably a hydrogen atom, a methyl group, or an ethyl group.

In a group represented by $-CA_3$, $-(C{=}O)A$, $-(C{=}O)NA_2$, -BA, -OA, -SA, $-NA_2$, $-(P{=}O)A_2$, A represents a hydrogen atom, a halogen atom, an alkoxy group, or an alkyl group. When a plurality of A are included in a single group, A may be identical or different. The alkoxy group and the alkyl group that may be included in these groups have been already explained above. In the above groups, C represents a carbon atom, O represents an oxygen atom, N represents a nitrogen atom, B represents a boron atom, S represents a sulfur atom, and P represents a phosphorous atom. Specific examples of the above groups include $-CF_3$, $-(C{=}O)H$, $-(C{=}O)CH_3$, $-CONHCH_3$, $-B(CH_3)_2$, $-(P{=}O)(OCH_2CH_3)_2$, -OH, $-NH(CH_3)$, and -SH.

The organic fluorescent group may be a commonly known organic fluorescent material such as a thiophene derivative, a p-phenyleneethynylene derivative, a carbazole derivative, and a pyrene derivative. If a group that emits fluorescence in response to excitation light with a different wavelength from excitation light for fluorescent particles made of aggregation of an azobenzene derivative is introduced as the organic fluorescent group, it is possible to obtain a fluorescent film that emits fluorescence with more number of colors.

In consideration of availability of materials etc., $R^1$ is preferably a hydrogen atom, a halogen atom, an aryl group, an amid group, an aldehyde group, a heterocyclic group, an ester group, a ketone group, an alkyl group having 1-28 carbon atoms, an alkoxy group having 1-28 carbon atoms, or a cyano group.

$Ar^1$ and $Ar^2$ independently represent an arylene group or an aromatic heterocycle each optionally containing a substituent R (R will be explained later). The arylene group may be a monocyclic group or may be a condensed ring-derived group such as naphthaleneanthracene, phenanthrene, phenalene, triphenalene, and pyrene. The arylene group is preferably a phenylene group.

An example of the aromatic heterocycle is a ring structure in which at least one carbon atom of the arylene group is replaced with a heteroatom. A specific example of the aromatic heterocycle is a pyridinylene group in which one carbon atom of the phenylene group is replaced with a nitrogen atom.

Examples of the substituent R that can be included in $Ar^1$ and $Ar^2$ include a halogen atom, an alkoxy group, an alkyl group, a cycloalkyl group, an aryl group, a heterocyclic group, a cyano group, an ester group, a ketone group, $-CA''_3$, $-(C{=}O)A''$, $-(C{=}O)NA''_2$, -BA", -OA", -SA", $-NA''_2$, $-(P{=}O)A''_2$ (A" is a hydrogen atom, a halogen atom, an alkoxy group or an alkyl group, and when a plurality of A" are included in a single group, A" may be identical or different) or an organic fluorescent group. Details thereof have been already explained in the explanation of $R^1$.

X represents an alkylene group that may include a heteroatom. Examples of the heteroatom that may be

included include B, N, O, P, and S. Preferable embodiments of X will be explained later in the explanation of General Formula (III).

$X^1$ represents -NH-, -O-, -S-, or an alkylene group that may include a heteroatom or a linking group. The details of the alkylene group represented by $X^1$ are the same as to those of X. The heteroatom is preferably B, P, and S. An example of the linking group is -(C=O)-.

Y represents a hydrogen atom, -BA', $-CA'_3$, -OA', $-NA'_2$, $-PA'_2$, or -SA' (A' is a hydrogen atom, a halogen atom, an alkoxy group, or alkyl group. When a plurality of A' are included in a single group, A' may be identical or different). Examples of the halogen atom represented by A' include a fluorine atom, a chlorine atom, and an iodine atom. An example of the alkoxy group represented by A' is an alkoxy group having 1-28 carbon atoms. An example of the alkyl group represented by A' is a linear or branched chain alkyl group having 1-28 carbon atoms. Y is preferably a hydrogen atom, -BA', $-CA'_3$, -OA', or $-NA'_2$, more preferably $-CA'_3$, particularly preferably a methyl group.

a may be 0, 1, or 2.

m and n independently represent an integer of 1 to 8. In consideration of formation of particles (aggregation), n is preferably 2 or more, and m is preferably 1 or 2. Plural $Ar^1$ and plural $Ar^2$ exist in a case where m and n are integers of 2 or more, and they may be identical or different.

One embodiment of the azobenzene derivative represented by General Formula (I) is an azobenzene derivative represented by General Formula (II) below.

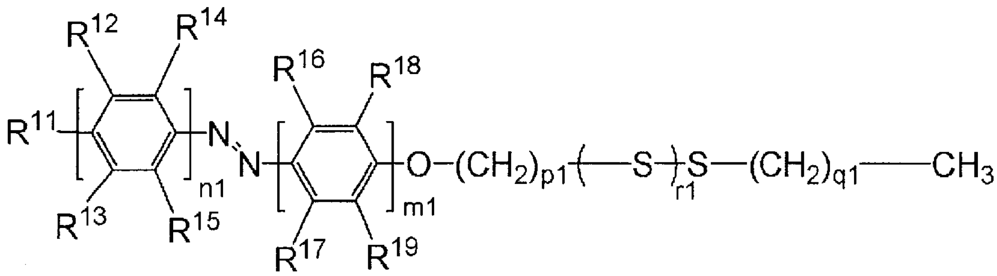

(II)

In General Formula (II), $R^{11}$ represents a hydrogen atom, a halogen atom, an alkoxy group, an alkyl group, a cycloalkyl group, an aryl group, a heterocyclic group, a cyano group, an ester group, a ketone group, a nitro group, $-CA_3$, -(C=O)A, $-(C=O)NA_2$, -BA, -OA, -SA, $-NA_2$, $-(P=O)A_2$ (A is a hydrogen atom, a halogen atom, an alkoxy group or an alkyl group, and when a plurality of A are included in a single group, A may be identical or different) or an organic fluorescent group. m1 and n1 independently represent an integer of 1 to 8. $R^{12}$-$R^{19}$ independently represent a hydrogen atom, a halogen atom, an alkoxy group, an alkyl group, a cycloalkyl group, an aryl group, a heterocyclic group, a cyano group, an ester group, a ketone group, $-CA''_3$, -(C=O)A", $-(C=O)NA''_2$, -BA", -OA", -SA", $-NA''_2$, $-(P=O)A''_2$ (A" is a hydrogen atom, a halogen atom, an alkoxy group or an alkyl group, and when a plurality of A" are included in a single group, A" may be identical or different) or an organic fluorescent group. Details thereof have been already explained in the explanation of R in General Formula (I). p1 and q1 independently represent an integer of 0 to 28. r1 represents 0 or 1.

$R^{11}$ represents a hydrogen atom, a halogen atom, an alkoxy group, an alkyl group, a cycloalkyl group, an aryl group, a heterocyclic group, a cyano group, an ester group, a ketone group, a nitro group, $-CA_3$, -(C=O)A, $-(C=O)NA_2$, -BA, -OA, -SA, $-NA_2$, $-(P=O)A_2$ (A is a hydrogen atom, a halogen atom, an alkoxy group or an alkyl group, and when a plurality of A are included in a single group, A may be identical or different) or an organic fluorescent group. Details thereof have been already explained in the explanation of R in General Formula (I). To be more specific, examples of the halogen atom include fluorine, chlorine, and iodine. The ester group may be an R'OCO- group (R' represents an alkyl group) and R' may be a methyl group, an ethyl group etc. for example. The alkyl group may be a linear or branched chain alkyl group having 1-28 carbon atoms. The alkoxyl group may be an alkoxy group having 1-28 carbon atoms. Specifically, the alkoxyl group may be $CH_3O$- group, $CH_3CH_2O$- group etc. Further, the cycloalkyl group may be a cycloalkyl group having 6 carbon atoms for example. The heterocyclic group may be a heterocyclic group containing a nitrogen atom (e.g. pyridyl group) for example.

In consideration of availability of a material, $R^{11}$ is preferably a hydrogen atom, a halogen atom, an aryl group, an amid group, an aldehyde group, a heterocyclic group, an ester group, a ketone group, an alkyl group having 1-28 carbon atoms, an alkoxy group having 1-28 carbon atoms, or a cyano group.

In General Formula (II), m1 and n1 independently represent an integer of 1 to 8. In consideration of availability of a material and formation of particles, n1 is preferably 2 or more, and m1 is preferably 1 or 2.

$R^{12}$-$R^{19}$ independently represent a hydrogen atom, a halogen atom, an alkoxy group, an alkyl group, a cycloalkyl group an aryl group, a heterocyclic group, a cyano group, an ester group, a ketone group, $-CA''_3$, -(C=O)A", $-(C=O)NA''_2$,

-BA", -OA", -SA", -NA"$_2$, -(P=O)A"$_2$ (A" is a hydrogen atom, a halogen atom, an alkoxy group or an alkyl group, and when a plurality of A" are included in a single group, A" may be identical or different) or an organic fluorescent group. Details thereof have been already explained in the explanation of R in General Formula (I). Further, in General Formula (II), in a case where m1 and n1 are 2 or more, a substituent of a phenylene group in a repeating unit may be identical or different.

In General Formula (I), p1 and q1 independently represent an integer of 0-28. In consideration of availability of a material etc., it is preferable that p1 and q1 independently represent an integer of 1-28, and it is more preferable that p1 and q1 independently represent an integer of 5-28.

In General Formula (II), r1 represents 0 or 1, and preferably 0.

Specific examples of the azobenzene derivative represented by General Formula (II) are shown below.

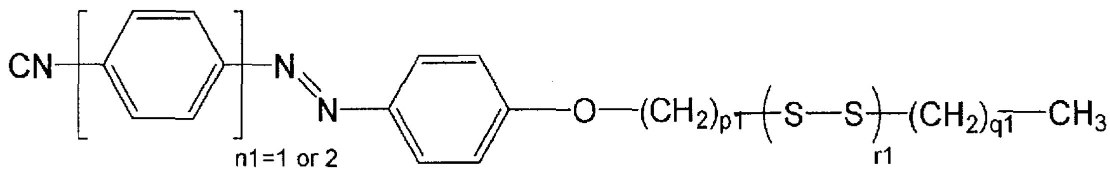

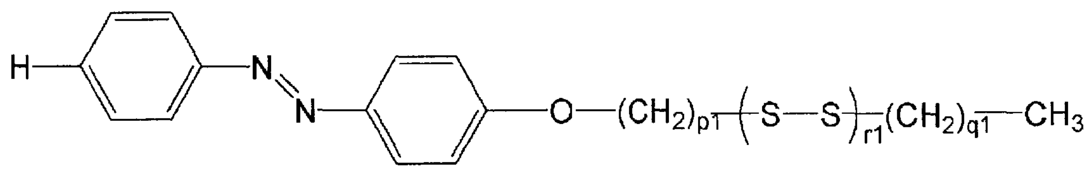

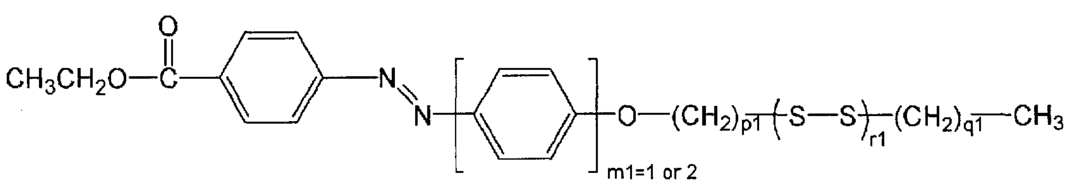

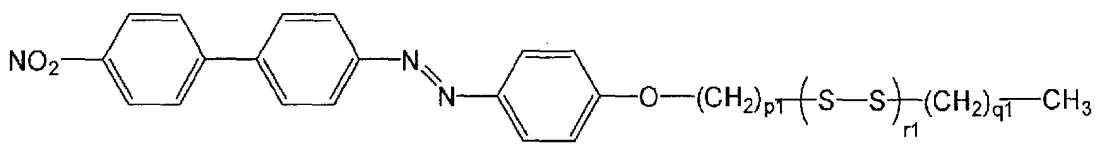

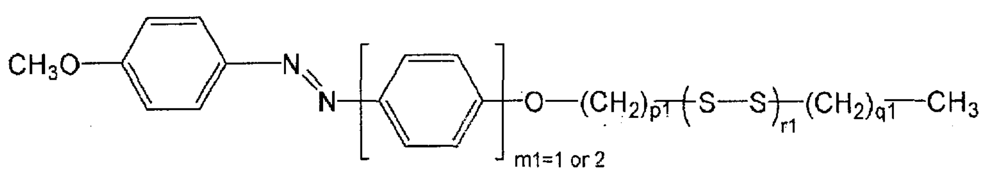

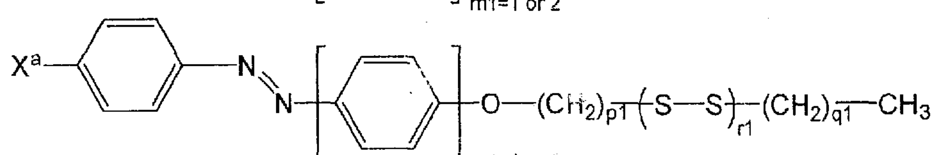

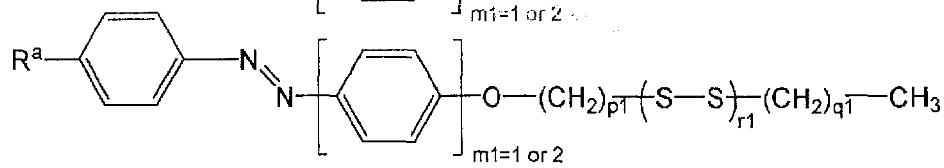

wherein $X^a$ represents a halogen atom and $R^a$ represents an alkyl group. p1, q1, and r1 are as defined above.

Details of the azobenzene derivative represented by General Formula (II), which has been explained above, are described in Japanese Patent Application Publication No. 2006-160715 A.

When irradiation of ultraviolet light to an aggregation consisting of the azobenzene derivative represented by General Formula (II) (fluorescent particles) is stopped and the aggregation is left in a dark place at a room temperature, isomerization from *cis* form to *trans* form occurs in the aggregation, thereby further increasing emission intensity.

On the other hand, the azobenzene derivative represented by General Formula (I) in which $Ar^1$ and $Ar^2$ binding to each other through an azo group include at least two substituents R has high stability in fluorescence intensity after an aggregation of the azobenzene derivative is formed. This is because introducing a substituent into an azobenzene site increases solvent-solubility and thus forms a strong aggregation, and because operation of the substituent increases stability of *cis* form after formation of the aggregation and thus prevents isomerization from *cis* form to *trans* form. There is a case where one of $Ar^1$ and $Ar^2$ binding to each other through the azo group includes two or more Rs and the other does not include R, and there is a case where $Ar^1$ and $Ar^2$ individually include one or more Rs. This will be detailed in the explanation on General Formula (III). When plural substituents R exist in General Formula (II), the substituents R may be identical or different.

A preferable embodiment of General Formula (I) is General Formula (IV) below.

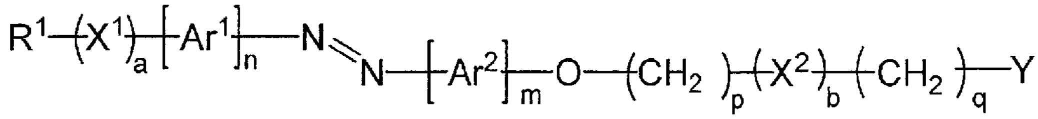 (IV)

In General Formula (IV), p and q independently represent an integer of 0 to 28. p is preferably an integer of 1 to 28, and q is preferably an integer of 1 to 28.

$X^2$ represents a heteroatom or an alkylene group including a heteroatom. Examples of the heteroatom include a halogen atom (e.g. fluorine atom, chlorine atom, and iodine atom), B, N, O, P, and S. b is an integer of 0 to 2. When b is an integer of 2 or more, plural $X^2$ exist, which may be identical or different.

$R^1$, $X^1$, $Ar^1$, $Ar^2$, Y, a, m and n in General Formula (IV) have been already explained in the above explanation of General Formula (I).

A preferable embodiment of General Formula (I) may be General Formula (III) below.

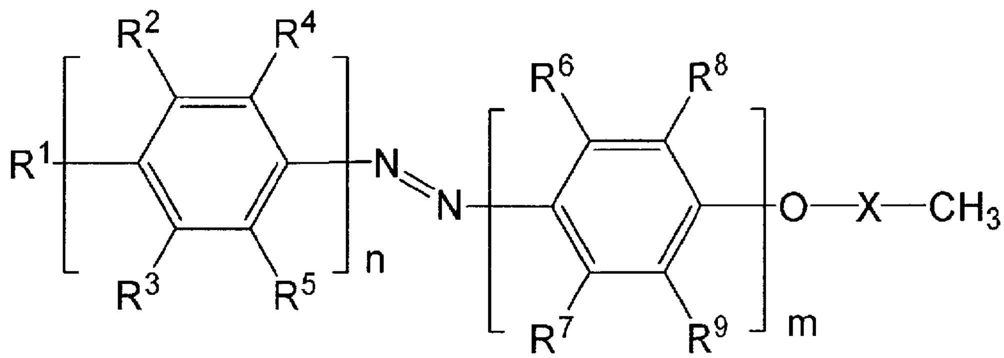 (III)

In General Formula (III), $R^2$-$R^9$ independently represent a halogen atom, an alkoxy group, an alkyl group, a cycloalkyl group, an aryl group, a heterocyclic group, a cyano group, an ester group, a ketone group, -CA"$_3$, -(C=O)A", -(C=O)NA"$_2$, -BA", -OA", -SA", -NA"$_2$, -(P=O)A"$_2$ (A" is a hydrogen atom, a halogen atom, an alkoxy group or an alkyl group, and when a plurality of A" are include in a single group, A" may be identical or different) or an organic fluorescent group. Details thereof have been already explained with respect to R in General Formula (I).

In General Formula (III), at least two of $R^2$-$R^9$ in two phenylene rings that bind to each other through an azo group are substituents other than hydrogen atoms. In consideration of stability of *cis* form, it is preferable that at least $R^4$ and $R^5$, or $R^6$ and $R^7$, of $R^2$-$R^9$ in the two phenylene rings that bind to each other through an azo group are substituents other than hydrogen atoms or that $R^4$ and $R^5$ and at least one (e.g. $R^9$) of $R^6$-$R^9$ is a substituent other than hydrogen.

The substituent other than hydrogen may be a substituent having an electron-donating ability or a substituent having an electron-withdrawing ability. The substituent having an electron-donating ability (electron-donating group) and

the substituent having an electron-withdrawing ability (electron-withdrawing group) are detailed in C. Hansch et al. Chem. Rev. 1991, 91, 165, Smith, M.B.; March, J. March's Advanced Organic Chemistry: Reactions, Mechanisms, and Structure; 5th Ed.; Wiley-Interscience: John Wiley & Sons, Inc: 2001.). Specifically, preferable examples of the substituent other than hydrogen include an alkyl group, an alkoxy group, a cycloalkyl group, an amid group, an aldehyde group, a cyano group, an ester group, a ketone group, and a heterocyclic group. In consideration of availability of a material etc., it is preferable that the alkyl group includes 1-28 carbon atoms, and the alkoxy group includes 1-28 carbon atoms. It should be noted that in order to obtain fluorescent particles that emit desired fluorescence, it is preferable to determine a substituent to be introduced in consideration of an electron-withdrawing ability and an electron-donating ability.

$R^1$, X, m and n in General Formula (III) are defined identically with those in General Formula (I). When m and n are integers of two or more, each of $R^2$-$R^9$ exist in plural numbers, which may be identical or different.

The following explains a specific example of the azobenzene derivative represented by General Formula (III). More specific examples of the azobenzene derivative are those in Examples. However, the present invention is not limited to these Examples. In the Examples below, $R^4$-, $R^5$-, and $R^9$-sites include substituents. Alternatively, in order to adjust the color of fluorescence, the electron-withdrawing group and/or the electron-donating group may be introduced to other site of the phenylene group, or at least one of carbon atom constituting the phenylene group may be replaced with an atom with higher electron-withdrawing ability and/or electron-donating ability (e.g. nitrogen atom).

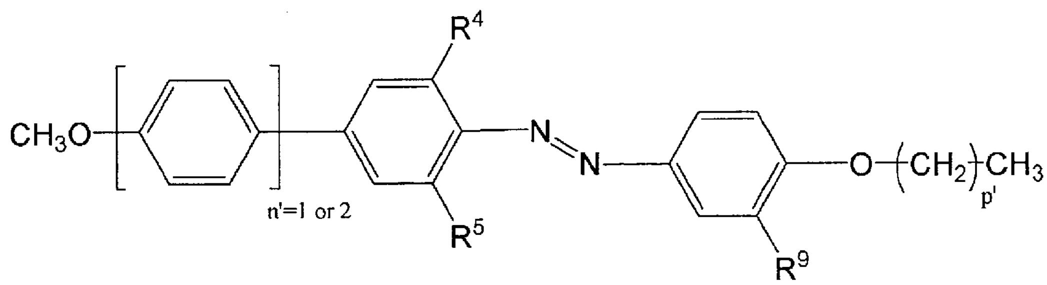

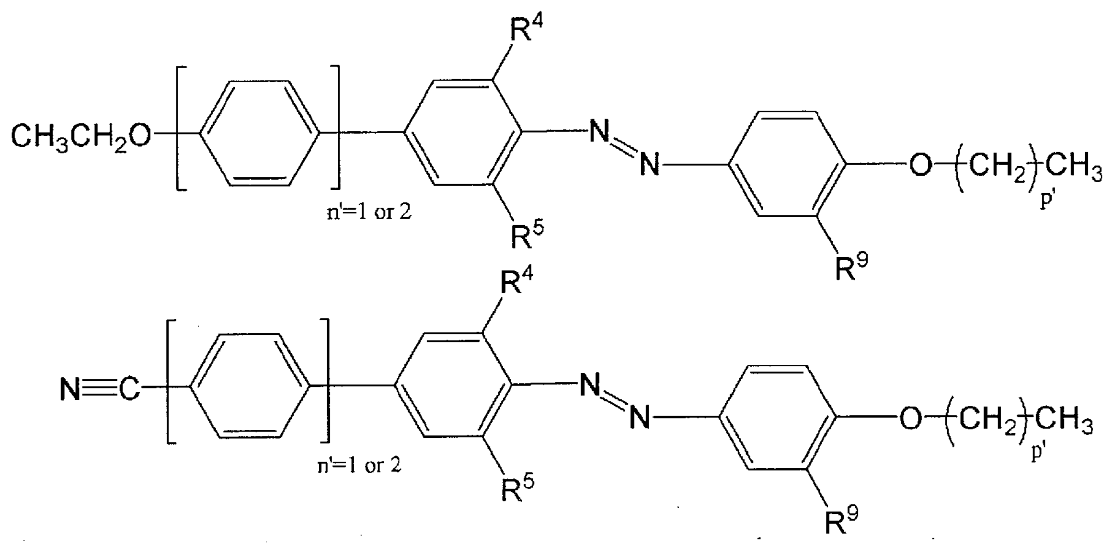

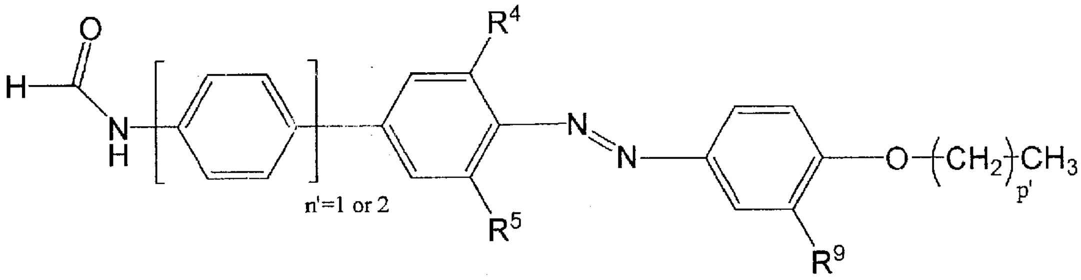

n'=1 or 2

In the Formula, $R^4$ and $R^5$ are as defined above. $R^4$ and $R^5$ are preferably a substituent having greater steric hindrance than a hydrogen atom, and more preferably an alkyl group, an alkoxy group, a cycloalkyl group, an amid group, an aldehyde group, an ester group, a ketone group, a cyano group, or a heterocyclic group. $R^9$ is as defined above. $R^9$ is preferably a hydrogen atom, an alkyl group, an alkoxy group, a cycloalkyl group, an amid group, an aldehyde group, an ester group, a ketone group, a cyano group, or a heterocyclic group. p' is an integer of 0-28, and is preferably an integer of 5-28.

The azobenzene derivative represented by General Formula (I) can be synthesized by a publicly known method. A synthesizing method is detailed in, for example, Xu, Z-S.; Lemieux, R.P.; Natansohn, A.; Rochon, P.; Shashidhar, R. Liq. Cryst. 1999, 26, 351-359.

The following explains an example of the synthesizing method. $R^1$-$R^9$, n and p' in General Formulae (V)-(IX) below have been already explained above. Z is a substituent such as a halogen atom, a -OH group, a -COOH group, a $-NH_2$ group, and -NHR" group (R" is an alkyl group).

Initially, a raw material compound represented by General Formula (V) and the raw material compound represented by General Formula (V) are subjected to diazo-coupling to obtain a hydroxyazobenzene derivative represented by General Formula (VII).

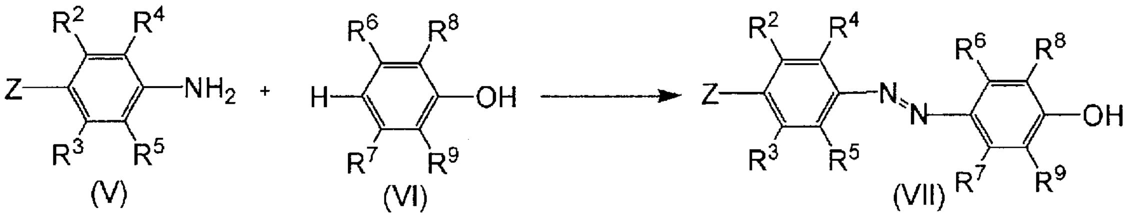

(V) (VI) (VII)

Next, an alkyl group is introduced into the obtained hydroxyazobenzene derivative (VII) to obtain an intermediate (VIII) below.

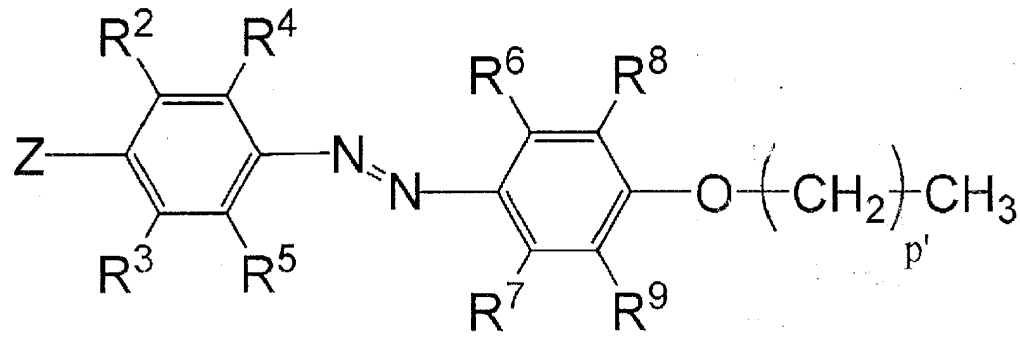

(VIII)

Thereafter, a predetermined substituent is introduced into a Z site of the intermediate (VIII) to obtain an azobenzene derivative (IX) below that is a target object. The azobenzene derivative thus obtained may be purified by a publicly known method such as column chromatography. The resulting product may be confirmed by a publicly known method such as NMR, IR, Mass (mass spectrometry), and element analysis. The raw material components used in synthesizing the azobenzene derivative can be synthesized by a publicly known method. Some of the raw material components are commercially available.

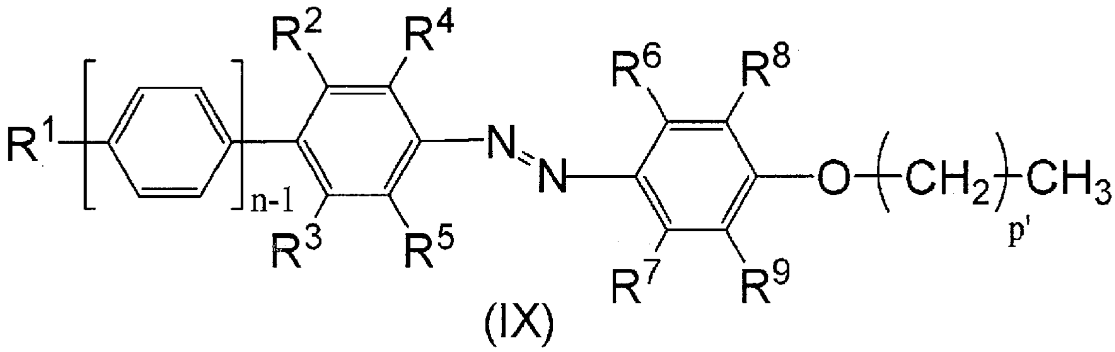

(IX)

Binder

The fluorescent film of the present invention includes the azobenzene derivative and a binder. The binder in use may be polymers normally used when forming a macromolecule film. When selecting a polymer, it is preferable to give consideration to factors such as good solubility of the azobenzene derivative used for forming particles, non-dissolvability and stability of the formed particles under long irradiation of light, non-overlapping of absorption wavelength of the azobenzene derivative in use and absorption wavelength of the binder, and non-fluorescent property of the binder (fluorescent according to purpose).

Specific examples of polymer used as a binder include polycaprolactone, polycarbonate resin, poly(2-ethyl-2-oxazoline), and poly(methyl methacrylate). More specific examples of the polymer include polymers below.

(1) Poly (ε-caprolactone)

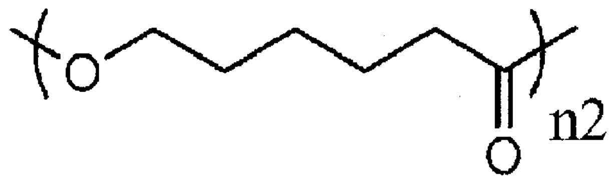

(2) Acrylamide polymer

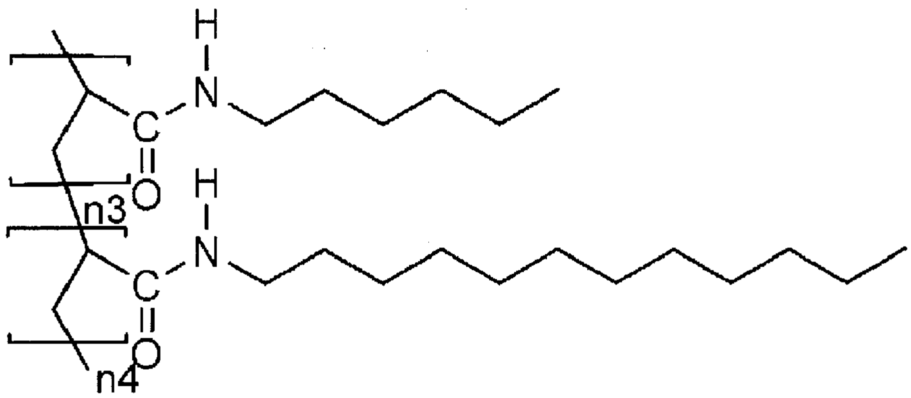

(3) Polycaprolactone

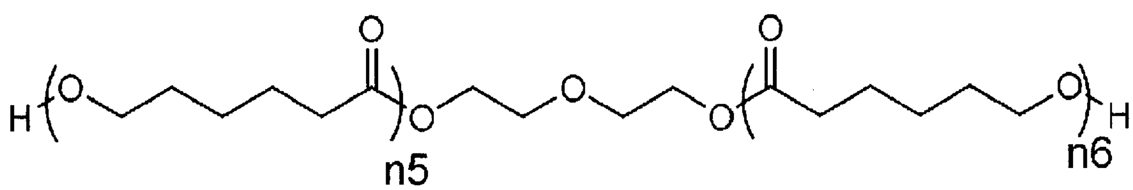

wherein, for example, n2, n3, n4, n5, and n6 independently represent an integer of 1 or more, the upper limits of n2, n3, n4, n5, and n6 are not specified and may be determined to be within a range that makes molecular weight several million.

The polymers (1)-(3) may be used individually or may be used in combination. For example, combination of the polymers (1) and (2) results in a film with a honeycomb structure.

The fluorescent film of the present invention can be prepared by applying an application liquid containing the azobenzene derivative and the binder on a substrate and drying the liquid. According to purpose, the fluorescent film may be used while attached to the substrate, or may be used while peeled off from the substrate. The substrate may be a publicly known substrate such as quartz, glass, poly(methyl methacrylate), polystyrene, polyvinylalcohol, polycarbonate, and polyimide. In order to cause fluorescent particles that are aggregation of the azobenzene derivative to be evenly dispersed in the fluorescent film, it is preferable to use a hydrophilic substrate in a case of using a hydrophilic polymer as a binder, and it is preferable to use a hydrophobic substrate in a case of using a hydrophobic polymer as a

binder. Application may be carried out by a publicly known method. In particular, spin coating allows an evenly thin film to be easily formed. If necessary, a solvent may be added to the application liquid in order to adjust viscosity. When selecting the solvent, it is preferable to take care that the solvent excellently solves the azobenzene derivative to be formed as particles. Examples of such solvent include dichloromethane, chloroform, cyclohexane, hexane, benzene, toluene, THF, and DMF. Various additives generally used for an optical film may be added to the application liquid.

Concentration of the azobenzene derivative in the fluorescent film is not particularly limited, and may be determined according to desired fluorescence intensity. For example, concentration of the azobenzene derivative in the fluorescent film may be $10^{-10}$M to $10^{-1}$M. As concentration of the azobenzene derivative in the fluorescent film is higher, fluorescence has higher intensity. Concentration of the binder in the fluorescent film is not particularly limited, and may be $10^{-4}$ weight % to $10^{4}$ weight % for example. Composition of the application liquid may be determined according to composition of a desired fluorescent film and the thickness of the desired fluorescent film. Concentration of an azobenzene derivative compound in the application liquid may be $10^{-8}$M or more for example, and preferably ranges from $10^{-6}$ to $10^{-1}$M. The thickness of the fluorescent film of the present invention ranges approximately from several nm to several mm.

In order to form fluorescent particles, ultraviolet light is irradiated to the application liquid for forming a fluorescent film. The irradiation of ultraviolet light allows formation of fluorescent particles that are aggregation of the azobenzene derivative. Alternatively, this process may be arranged such that a solution containing the azobenzene derivative and a solution containing the binder are separately prepared, ultraviolet light is irradiated to the azobenzene derivative solution to form fluorescent particles, and then the azobenzene derivative solution is mixed with the binder solution. Ultraviolet light used in forming fluorescent particles may be normally used ultraviolet light (wavelength 320-400nm for example), and may be ultraviolet light of 365nm or 366nm in wavelength for example.

Azobenzene has a *cis* form and a *trans* form. The *trans* form is thermally stable. It is known that irradiation of ultraviolet light to *trans* form causes isomerization to *cis* form, and leaving the *cis* form in a dark place at room temperature causes isomerization to *trans* form. Also in the case of the azobenzene derivative, irradiation of ultraviolet light to the azobenzene derivative for a few minutes causes isomerization from *trans* form to *cis* form. Further, when irradiation of ultraviolet light to the azobenzene derivative is continued after the isomerization from *trans* form to *cis* form, the azobenzene derivative is self-assembled to form aggregation (particles). Further, out of the azobenzene derivatives represented by General Formula (I), in the case of azobenzene derivatives in which $Ar^1$ and $Ar^2$ binding to each other through an azo group include at least two substituents R, once the azobenzene derivatives are formed into aggregation (particles), they undergo little or no dissociation even when the particles are left standing after stopping irradiation of ultraviolet light, and there is little change in absorption spectrum, fluorescence wavelength, and fluorescence intensity before and after standing. Consequently, it is possible to obtain fluorescent particles capable of stably emitting fluorescence for an extended period. It should be noted that little change in absorption spectrum indicates that reisomerization from *cis* form to *trans* form in the aggregation is prevented, that is, *cis* form is stable in the aggregation.

It is desirable that the period of irradiation of ultraviolet light to the azobenzene derivative solution in order to form particles is longer than the period required for the azobenzene derivatives to isomerize from *trans* form to *cis* form. The period of the irradiation may range from 3 minutes to 30 hours for example, and preferably ranges from 6 to 30 hours. In a case where the azobenzene derivative solution has high concentration, it is preferable to increase the period of irradiation of ultraviolet light for the purpose of sufficient formation of particles. The period required for the azobenzene derivative to form particles varies according to intensity of ultraviolet light. In a case of forming particles in a short period, it is preferable to irradiate ultraviolet light with high intensity. The intensity of ultraviolet light may range approximately from 0.1 to $30mW/cm^2$ for example.

Fluorescent particles that are aggregation of the azobenzene derivative may be spherical particles for example. The particle size may range approximately from several nm to several hundred nm. The particle size may be determined by observing the particles with a scanning electron microscope (SEM) or a transmission electron microscope (TEM). In some of the particles, a crystal lattice structure can be observed with TEM.

The azobenzene derivative hardly emits light before it is formed into aggregation, but once it is formed into aggregation, it emits fluorescence with greatly higher intensity than that before it is formed into aggregation. Out of the azobenzene derivatives represented by General Formula (I), the azobenzene derivative in which $Ar^1$ and $Ar^2$ binding to each other through an azo group include at least two substituents R can maintain stable fluorescence long after the formation of aggregation. For example, some of the azobenzene derivatives can emit stable fluorescence (e.g. rate of change of fluorescence intensity at $\lambda_{max}$ is approximately 5% or less) over a period of 6 months or more after irradiation of light to the aggregation is stopped.

Further, as shown in later-mentioned Examples, fluorescent particles that are aggregation of the azobenzene derivative can emit fluorescence with different wavelengths in response to irradiation of different excitation lights. Using this property, it is possible to cause one kind of fluorescent particles to emit fluorescence with different wavelengths (different colors).

Further, by changing the kinds and the number of functional groups introduced into an azobenzene skeleton of the azobenzene derivative and the kinds of atoms constituting a ring structure, it is possible to control the color of

fluorescence emitted by fluorescent particles. This is explained below.

Irradiation of excitation light is necessary in order to cause fluorescent particles to emit fluorescence. For example, in a case where excitation light with a predetermined wavelength is emitted to aggregation (fluorescent particles) of a certain azobenzene derivative, if obtained fluorescence does not have desired color (wavelength), a new azobenzene derivative is used in order to obtain fluorescent particles that emit desired fluorescence. As shown in the later-mentioned Examples, the azobenzene derivative used for forming a fluorescent film in the present invention has a property such that when a substituent with a higher electron-withdrawing ability is introduced into the azobenzene derivative, fluorescent particles made of the azobenzene derivative emit fluorescence with a shorter wavelength, and when a substituent with a higher electron-donating ability is introduced into the azobenzene derivative, fluorescent particles made of the azobenzene derivative emit fluorescence with a longer wavelength. Further, when atoms included in a ring structure (e.g. $Ar^1$ and $Ar^2$ in General Formula (I)) in the azobenzene derivative are replaced with atoms with a higher electron-withdrawing ability, fluorescent particles made of the azobenzene derivative emit fluorescence with a shorter wavelength, and when the atoms are replaced with atoms with a higher electron-donating ability, the fluorescent particles emit fluorescence with a longer wavelength. Using these properties, it is possible to easily design, based on a molecular structure (atoms constituting a functional group and a ring structure), fluorescent particles that emit fluorescence with a desired color (wavelength) in response to certain excitation light.

That is, by using the azobenzene derivative, it is possible to produce fluorescent particles that emit desired fluorescence in response to excitation light with a predetermined wavelength by the following steps. By using the fluorescent particles, it is possible to obtain a fluorescent film that emits desired fluorescence.

The step of determining a candidate derivative that is a candidate of an azobenzene derivative selected from the aforementioned azobenzene derivative and used in obtaining the fluorescent particles.

The step of forming aggregation of the candidate derivative by irradiating ultraviolet light to a solution containing the candidate derivative and an organic solvent.

The step of irradiating excitation light with the aforementioned wavelength to the aggregation thus formed.

The step of

(1) when fluorescence emitted in response to irradiation of the excitation light is desired one, determining the candidate derivative as an azobenzene derivative for use in producing the fluorescent particles,

(2) when the fluorescence is one with a shorter wavelength than desired one, determining an azobenzene derivative obtained by replacing at least one substituent of the candidate derivative with a substituent with a higher electron-donating ability than the at least one substituent, and/or introducing at least one electron-donating group into the candidate derivative, and/or replacing atoms included in a ring structure of the candidate derivative with atoms with a higher electron-donating ability than the atoms, as an azobenzene derivative for use in producing the fluorescent particles, or

(3) when the fluorescence is one with a longer wavelength than desired one, determining an azobenzene derivative obtained by replacing at least one substituent of the candidate derivative with a substituent with a higher electron-withdrawing ability than the at least one substituent, and/or introducing at least one electron-withdrawing group into the candidate derivative, and/or replacing atoms included in a ring structure of the candidate derivative with atoms with a higher electron-withdrawing ability than the atoms, as an azobenzene derivative for use in producing the fluorescent particles.

The step of forming aggregation of the azobenzene derivative by irradiating ultraviolet light to a solution containing the azobenzene derivative thus determined and the organic solvent.

The wavelength of the excitation light and the wavelength (color) of desired fluorescence are determined in consideration of a light source in use and the purpose of use of the fluorescence. For example, in a case where the candidate derivative emits green fluorescence, if desired fluorescence is blue one (light with shorter wavelength), a structure of the azobenzene derivative for obtaining fluorescent particles may be determined by the step (2), and if desired fluorescence is red one (light with longer wavelength), a structure of the azobenzene derivative for obtaining fluorescent particles may be determined by the step (3). As indices of an electron-donating ability and an electron-withdrawing ability of a substituent and an atom, Hammett constant may be used for example. Hammett constant is described in Chem. Rev. 1991, 91, 165 for example. An example is CN-(0.66), $-CF_3$(0.54), -COOMe(0.45), $-CF_3O$(0.35), -H(O), $-CH_3$(-0.17), -EtO(-0.24), -MeO(-0.27), BuO-(-0.32), and $NMe_2$(-0.83) (number in parentheses is Hammett constant).

As described above, shift in the wavelength of fluorescence can be made by (i) replacing one substituent with other substituent, (ii) introducing a new substituent, and (iii) replacing atoms constituting a ring structure with other atoms. By freely combining (i), (ii), and (iii), it is possible to obtain fluorescent particles that emit fluorescence with a desired color.

As explained above, the fluorescent film of the present invention has a plurality of excitation wavelengths, and

can emit fluorescence, preferably fluorescence with different wavelengths (colors), in response to irradiation of excitation light with different wavelengths.

Examples

The following further explains the present invention with reference to Examples. It should be noted that the present invention is not limited to these Examples.

1. Synthesis of azobenzene derivative

An azobenzene derivative 1 was synthesized by the following method.

(1) Synthesis of hydroxyl azobenzene derivative (IX)

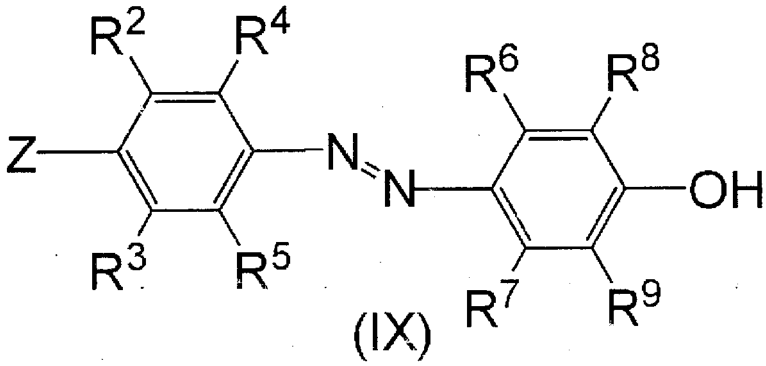

(IX)

[Z= -Br, $R^4$=$R^5$= $-CH_2CH_3$, $R^9$= $-CH(CH_3)CH_2CH_3$, $R^2$=$R^3$=$R^6$=$R^7$= $R^8$=-H]

$NaNO_2$ (1.035g) was dissolved in 20mL of water, and the resultant was slowly dropped into a mixture solution of 4-bromo-2,6-diethylaniline (3g), HCl (8mL) and water (100mL) at a temperature of 0-5˚C, and stirred for 30 minutes. To the solution was added a mixture solution of 2-sec-butylphenol (2.25g), NaOH (1.04g), $Na_2CO_3$ (2.75g) and water, and the resultant was stirred for 2 hours. Ethyl acetate was added to the resultant. The resultant was stirred and an organic layer was collected from the resultant. The organic layer was subjected to separation by column chromatography using a mixture solvent of hexane and ethyl acetate (10: 1) as a developing solvent. Thus, 3.6g of hydroxyazobenzene derivative (IX) was obtained.

$^1$H NMR (270 MHz, $CDCl_3$) 0.8-1.8 (m, 14, C$\underline{H}_3$ and C$\underline{H}_2$), 2.59 (q, 4H, C$\underline{H}_2$$CH_3$), 2.94 (m, 1H, C$\underline{H}$), 6.69-7.74 (m, 5H, Ar-$\underline{H}$)

(2) Synthesis of intermediate (X)

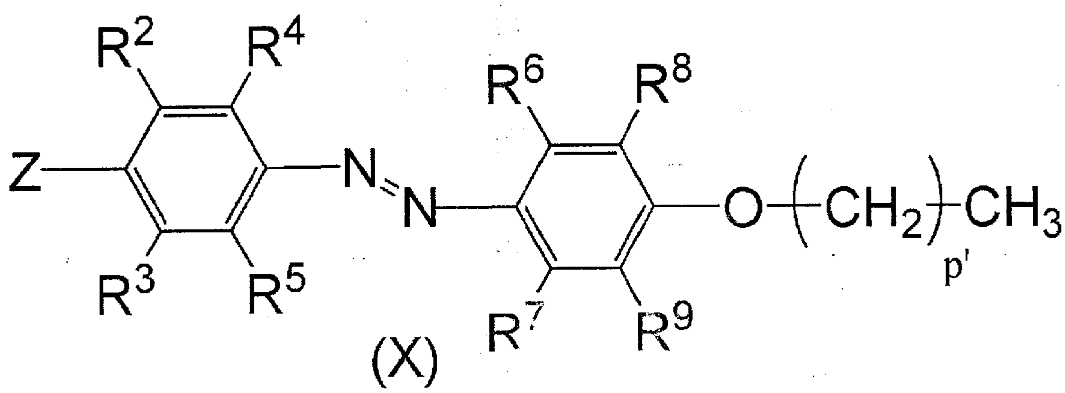

(X)

[Z= -Br, $R^4$=$R^5$= -$CH^2CH^3$, R9= -$CH(CH_3)CH_2CH_3$, $R^2$=$R^3$=$R^6$=$R^7$=$R^8$=-H, p'=15]

A mixture solution of $K_2CO_3$ (2.13g), tetraethylammoniumbromide (catalyst quantity), 1-bromohexadecane (7.06g) and acetone (100mL) was stirred under $N_2$ atmosphere at 60°C for 30 minutes. To the mixture solution was slowly added an acetone solution of a hydroxyazobenzene derivative (IV) (3.0g) synthesized in the (1), and the resultant was stirred at 60°C for 13 hours. Acetone was removed from the resultant, and the resultant was washed with water three times. Then, ethyl acetate was added to the resultant, the resultant was stirred, and an organic layer was collected from the resultant. The organic layer was subjected to separation by column chromatography using hexane as a developing solvent, and 3.3g of intermediate (X) was obtained.

$^1$H NMR (270 MHz, $CDCl_3$) δ 0.85 (m, 6H, C<u>H</u>$_3$), 1.0-1.8 (m, 19H, C<u>H</u>$_2$ and C<u>H</u>$_3$), 2.57 (q, 4H, Ar-C<u>H</u>$_2$CH$_3$), 3.12 (m, 1H, C<u>H</u>), 4.02 (t, 2H, ArOC<u>H</u>$_2$), 6.70-7.72 (m, 5H, Ar-<u>H</u>)

(3) Synthesis of azobenzene derivative 1

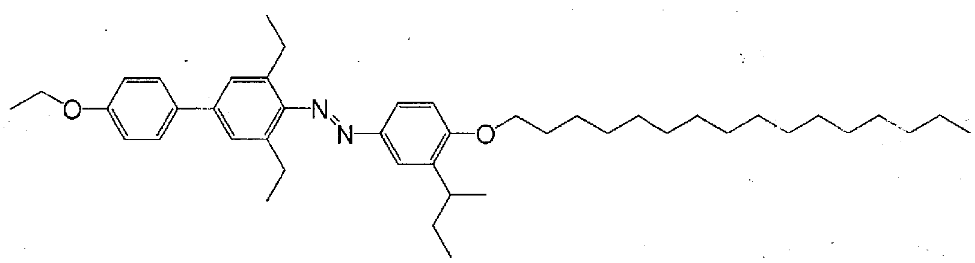

(1)

The intermediate (X) synthesized in the (2) (2.46g) was dissolved in 50mL of DMF in $N^2$ atmosphere, $Pd(PPh_3)_4$ (catalyst quantity) was added to the resultant, and the resultant was stirred for 10 minutes. To the mixture solution was added 4-ethoxyphenylboronic acid (1g), $NaHCO_3$ (1.68g) dissolved in distilled water (30mL), and toluene (20mL), and the resultant was stirred at 100°C for 28 hours. Thereafter, the resultant was cooled down to a room temperature, water and ethyl acetate were added to the resultant, the resultant was stirred, and an organic layer was collected from the resultant. The organic layer was subjected to separation by column chromatography using a mixture solvent of hexane and dichloromethane (6: 1) as a developing solvent. The product (azobenzene derivative 1) was a crystal with orange color, and the yield was 0.39g.

$^1$H NMR (270 MHz, $CD_2Cl_2$) δ 0.88 (tt, 6H, C<u>H</u>$_3$), 1.16-1.87 (m, 42H, C<u>H</u>$_2$ and C<u>H</u>$_3$), 2.74 (q, 4H, ArC<u>H</u>$_2$CH$_3$), 3.18 (m, 1H, ArOC<u>H</u>(CH$_3$)CH$_2$CH$_3$), 4.04-4.12 (tq, 4H, ArOC<u>H</u>)$_2$CH$_3$ and ArOC<u>H</u>$_2$), 6.96-7.00 (dd, 3H, Ar-<u>H</u>), 7.33 (s, 2H, Ar-<u>H</u>), 7.59 (d, 2H, Ar-<u>H</u>), 7.71-7.77 (m, 3H, Ar-<u>H</u>)).

Anal. Calcd: C, 80.68; H, 10.16; N, 4.28. Found: C, 80.65; H, 10.14; N. 4.22.

A raw material compound etc. in the method was changed and azobenzene derivatives 2-7 below were synthesized. The results of analyzing the products are shown below.

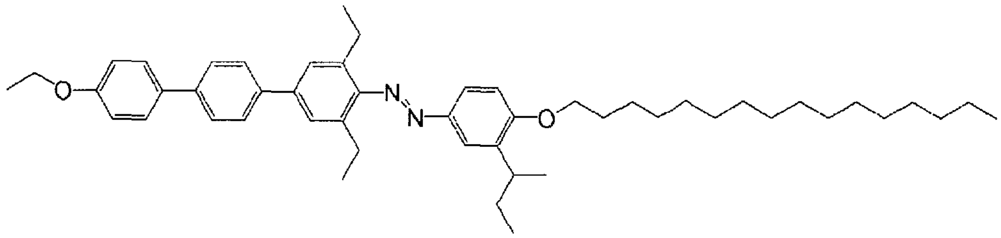

(2)

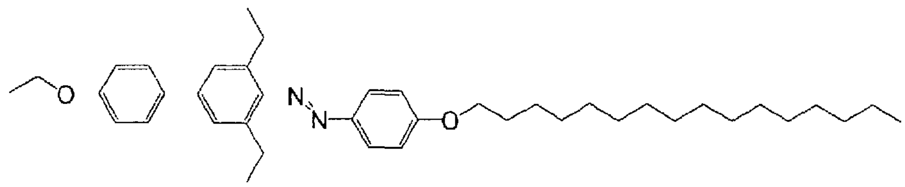

(3)

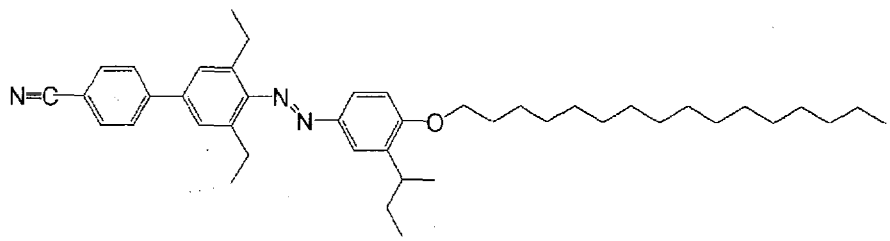

(4)

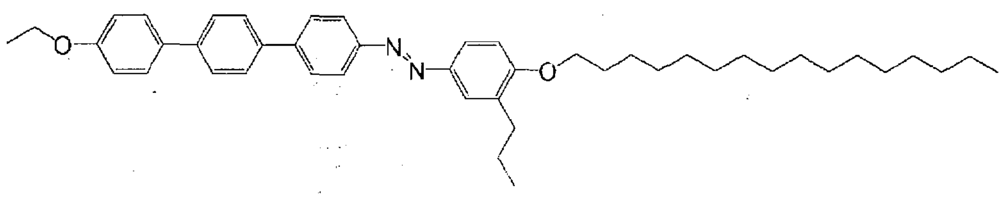

(5)

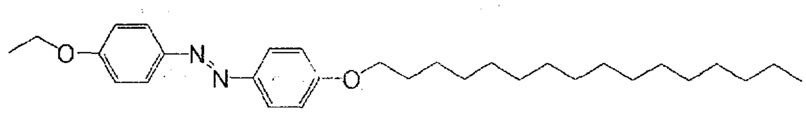

(6)

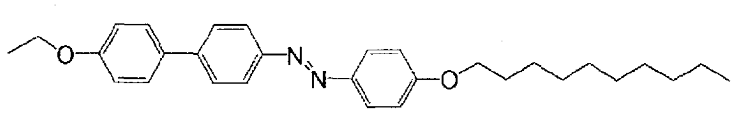

(7)

Azobenzene derivative 2:

$^1$H NMR (270 MHz, $CDCl_3$) δ 0.86 (tt, 6H, $C\underline{H}_3$), 1.16-1.87 (m, 42H, $C\underline{H}_2$ and $C\underline{H}_3$), 2.74 (q, 4H, $ArC\underline{H}_2C\underline{H}_3$), 3.17 (m, 1H, $ArOC\underline{H}(CH_3)CH_2CH_3$), 4.01-4.11 (tq, 4H, $ArOC\underline{H}_2CH_3$ and $ArOC\underline{H}_2$), 6.93-6.99 (m, 3H, Ar-$\underline{H}$), 7.38 (s, 2H, Ar-$\underline{H}$), 7.54-7.77 (m, 8H, Ar-$\underline{H}$).
Anal. Calcd: C, 82.14; H, 9.65; N, 3.69. Found: C, 81.95; H, 9.77; N, 3.69.

Azobenzene derivative 3:

$^1$H NMR (270 MHz, $CDCl_3$) δ 0.81 (t, 3H, $C\underline{H}_3$), 1.08-1.78 (m, 37H, $C\underline{H}_2$ and $C\underline{H}$), 2.67 (q, 4H, $ArC\underline{H}_2CH_3$), 3.94-4.05 (tq, 4H, $ArOC\underline{H}_2CH_3$ and $ArOC\underline{H}_2$), 6.87-6.95 (m, 4H, Ar-$\underline{H}$), 7.17-7.82 (m, 6H, Ar-$\underline{H}$).

Azobenzene derivative 4:

$^1$H NMR (270 MHz, $CD_2Cl_2$) δ 0.88 (tt, 6H, $C\underline{H}_3$), 1.14-1.86 (m, 39H, $C\underline{H}_2$ and $C\underline{H}_3$), 2.70 (q, 4H, $ArC\underline{H}_2CH_3$), 3.16 (m, 1H, $ArOC\underline{H}(CH_3)CH_2CH_3$), 4.04 (t, 2H, $ArOC\underline{H}_2CH_3$), 6.96 (d, 1H, Ar-$\underline{H}$), 7.33 (s, 2H, Ar-$\underline{H}$), 7.71-7.78 (m, 6H, Ar-$\underline{H}$)
Anal. Calcd: C, 81.21; H, 9.67; N, 6.61. Found: C, 81.19; H, 9.64; N, 6.45.

Azobenzene derivative 5:

$^1$H NMR (270 MHz, $CD_2Cl_2$) δ 0.87 (t, 3H, $C\underline{H}_3$), 0.98 (t, 3H, $C\underline{H}_3$), 1.24-1.87 (m, 33H, $C\underline{H}_2$ and $C\underline{H}_3$), 2.66 (t, 2H, $ArC\underline{H}_2CH_2CH_3$), 4.01-4.11 (tq, 4H, $ArOC\underline{H}_2$), 6.90-6.99 (m, 3H, Ar-$\underline{H}$), 7.55-7.81 (m, 10H, Ar-$\underline{H}$), 7.93 (d, 2H, Ar-$\underline{H}$)
Anal. Calcd: C, 81.77; H, 9.15; N, 4.24. Found: C, 81.75; H, 9.23; N, 4.22.

Azobenzene derivative 6:

$^1$H NMR (270 MHz, $CDCl_3$) δ0.87 (t, 3H, $C\underline{H}_3$), 1.28-1.54 (m, 29H, $C\underline{H}_2$ and $ArOCH_2C\underline{H}_3$), 1.80 (m, 2H, $ArOCH_2C\underline{H})_2$), 4.01 (t, 2H, $ArOC\underline{H}_2$), 4.09 (q, 2H, $ArOC\underline{H}_2$), 6.97 (d, 4H, Ar-$\underline{H}$), 7.84 (d, 4H, Ar-$\underline{H}$).
Anal. Calcd: C, 77.21; H, 9.93; N, 6.00. Found: C, 77.15; H, 9.86; N, 5.95.

Azobenzene derivative 7:

$^1$H NMR (270 MHz, $CD_2Cl_2$) δ0.88 (t, 3H, $C\underline{H}_3$), 1.28-1.52 (m, 17H, $C\underline{H}_2$ and $C\underline{H}_3$), 1.81 (m, 2H, $C\underline{H}_2$), 4.02-4.12 (tq, 4H, $ArOC\underline{H}_2$), 6.97-7.04 (m, 4H, Ar-$\underline{H}$), 7.62 (d, 2H, Ar-$\underline{H}$), 7.69 (d. 2H, Ar-$\underline{H}$), 7.89-7.94 (m, 4H, Ar-$\underline{H}$).

2. Formation of particles

The individual azobenzene derivatives synthesized in the 1. were dissolved in dichloromethane so that concentrations of the individual azobenzene derivatives were $4\times10^{-5}$ M. These solutions were subjected to irradiation of ultraviolet light of 365nm in wavelength (intensity: 2-4mW/cm$^2$) until an increase in fluorescence got saturated (for approximately 300 to 800 minutes). The solutions after the irradiation of ultraviolet light were observed with a scanning electron microscope (SEM) and a transmitting electron microscope (TEM), and aggregations (particles) of several nm to several hundred nm in particle size were observed in the solutions containing the azobenzene derivatives 1 to 7, respectively. Further, crystalline lattice structures were also observed. Fig. 1 shows SEM and TEM photographs of the solution containing azobenzene derivative.

3. Confirmation of *cis* stability

Fig. 2 shows $^1$H-NMR (in $CD_2Cl_2$) spectra of the azobenzene derivative 1 before irradiation of ultraviolet light (of 365nm in wavelength), after irradiation of ultraviolet light for 20 hours (aggregation), left at room temperature for 2 weeks after the irradiation, and left one month after the irradiation, respectively. In the spectra in Fig. 2, peaks indicated by arrows derive from *cis.* As shown in Fig. 2, the peak derived from *cis* form appeared in the spectrum after irradiation of ultraviolet light for 20 hours, which confirmed that isomerization from *trans* form to *cis* form occurred due to the irradiation. Further, the peaks derived from *cis* form were observed in the spectra of the azobenzene derivatives left at room temperature for 2 weeks after the irradiation and left one month after the irradiation. This shows that the azobenzene derivative 1 has high *cis* stability in the aggregation.

On the other hand, Fig. 10 shows $^1$H-NMR (in $CD_2Cl_2$) spectra of the azobenzene derivative 7 before irradiation of ultraviolet light (of 365nm in wavelength), after irradiation of ultraviolet light for 13 hours (aggregation), and left at room temperature for 1 day after the irradiation, respectively. According to Fig. 10, it was confirmed from NMR data that when the azobenzene derivative 7 was left in a dark place for 1 day, all *cis* form is isomerized to *trans* form. This indicates that introducing a substituent to a predetermined position brings an azobenzene derivative with high *cis* stability.

4. Observation of absorption spectrum and fluorescence spectrum

In the same manner as the 2., a solution containing the azobenzene derivative 1 was subjected to irradiation of ultraviolet light (of 365nm in wavelength) for 780 minutes, and then left in a dark place at room temperature for 1 month. Fig. 3(a) shows absorption spectra of the solution containing the azobenzene derivative 1 before irradiation of ultraviolet light, after irradiation of ultraviolet light for 3 minutes, after irradiation of ultraviolet light for 780 minutes, left at room temperature for 2 weeks, and left at room temperature for 1 month. Fig. 3(b) shows fluorescence spectra thus obtained.

Further, in the same manner as the 2., solutions containing the azobenzene derivatives 2-7 were subjected to irradiation of ultraviolet light (of 365nm in wavelength) until an increase in fluorescence got saturated (for approximately 300 to 800 minutes) and then left in a dark place at room temperature. Figs. 4-9 show absorption spectra and fluorescence spectra of the individual solutions before irradiation of ultraviolet light is started, during the irradiation, and after the solutions were left at room temperature.

Further, Table 1 below shows $\lambda_{max}$ of fluorescence spectra and a change in fluorescence intensity of the solutions (i) after the irradiation of ultraviolet light and (ii) after standing at room temperature after the irradiation.

The fluorescence spectrum is a spectrum of fluorescence emitted in response to excitation light that is the irradiated ultraviolet light (of 365nm in wavelength).

Table 1

| | $\lambda_{max}$ | | Change in fluorescence intensity |
|---|---|---|---|
| | (i) After UV irradiation (time in parentheses is time for increase in fluorescence to get saturated) | (ii) After standing in dark place at room temperature (time in parentheses is standing time) | |
| Azobenzene derivative 1 | 529 (780 min) | 530 (1 month) | 0.017 |
| Azobenzene derivative 2 | 534 (720 min) | 533 (1 month) | 0.014 |
| Azebenzene derivative 3 | 538 (720 min) | 538 (2 days) | 0.024 |
| Azobenzene derivative 4 | 412 (540 min) | 413 (2 days) | -0.053 |
| Azobenzene derivative 5 | 389 (780 min) | 395 (1 week) | -0.16 |
| Azobenzene derivative 6 | 463 (300 min) | 463 (1 month) | 0.17 |
| Azobenzene derivative 7 | 558 (570 min) | 557 (1 month) | 0.49 |

Change in fluorescence intensity = (fluorescence intensity in (ii) − fluorescence intensity in (i))/fluorescence intensity in (i)

As shown in Figs. 3-6, in the solutions containing the azobenzene derivatives 1-4, changes in absorption spectra, fluorescence wavelength and fluorescence intensity were hardly observed. This shows that the azobenzene derivatives 1-4 are excellent in *cis* stability and can stably emit fluorescence over an extended period. Out of the individual spectra, the change between the spectrum before irradiation of ultraviolet light and the spectrum after irradiation of ultraviolet light for 3 minutes is due to isomerization from *trans* form to *cis* form, and the change between the spectrum after irradiation of ultraviolet light for 3 minutes and the spectrum after extended irradiation (approximately 300-800 minutes) of ultraviolet light is due to formation of aggregation.

In contrast thereto, when the solutions containing the azobenzene derivatives 5-7 were left in a dark place at room temperature after irradiation of ultraviolet light, absorption spectra thereof greatly changed. This is because isomerization from *cis* form to *trans* form occurred in the aggregation. Further, in these solutions, fluorescence intensity greatly changed before and after the irradiation of ultraviolet light, and the solution containing the azobenzene derivative 5 showed a great change in fluorescence wavelength.

Further, as is seen from the difference in $\lambda_{max}$ value shown in Table 1, the solutions containing the azobenzene derivatives 1-4 showed fluorescence with different colors. As described above, it is possible to cause the azobenzene derivative of the present invention to emit fluorescence with different colors by changing the kinds and the number of a substituent to be introduced into an azobenzene skeleton.

5. Change in color of fluorescence due to difference in excitation light

(1) Examination of color of fluorescence of azobenzene derivative 1

In the same manner as the 2., ultraviolet light (of 365nm in wavelength) was irradiated to the solution containing the azobenzene derivative 1 for 780 minutes. Thereafter, lights of 365nm, 435nm, and 500nm in wavelength were irradiated as excitation lights. Fig. 11 shows fluorescence spectra emitted in response to the excitation lights. The upper part of Fig. 11 shows standardized spectrum intensity obtained by standardizing spectrum intensity in the lower part of Fig. 11.

As shown in Fig. 11, the solution containing the azobenzene derivative 1 emitted yellow green fluorescence in response to excitation by light of 365nm and 435nm in wavelength and emitted red fluorescence in response to excitation by light of 500nm in wavelength.

(2) Examination of color of fluorescence of azobenzene derivatives 8 and 9

Azobenzene derivatives 8 and 9 were synthesized by changing raw material compound etc. in synthesis of the azobenzene derivative 1.

Azobenzene derivative 8:

$^1$H NMR (270 MHz, $CD_2Cl_2$) $\delta$ 0.81 (m, 6H, $C\underline{H}_3$), 1.19-1.79 (m, 36H, $C\underline{H}_2$ and $C\underline{H}_3$), 2.30 (s, 3H, $ArC\underline{H}_3$), 3.06 (m, 1H, $ArOC\underline{H}(CH_3)CH_2CH_3$), 4.01 (m, 4H, $ArOC\underline{H}_2CH_3$), 6.85-7.74 (m, 10H, Ar-$\underline{H}$)

Azobenzene derivative 9:

$^1$H NMR (270 MHz, $CD_2Cl_2$) $\delta$ 0.85 (t, 3H, C$\underline{H}$3), 1.07-1.86 (m, 26H, $C\underline{H}_2$ and $C\underline{H}_3$), 2.19 (s, 3H, $MHCOC\underline{H}_3$), 2.72(t, 4H, $ArC\underline{H}_2CH_3$), 3.34 (m, 1H, $ArOC\underline{H}(CH_3)CH_2CH_3$), 4.05 (m, 4H, $ArOC\underline{H}_2CH_3$), 6.92-7.82 (m, 9H, Ar-$\underline{H}$)

The azobenzene derivatives 8 and 9 thus obtained and the azobenzene derivative 4 obtained by the aforementioned method were subjected to irradiation of excitation lights with different wavelengths in the same manner as above, and the change in color of fluorescence was examined. Figs. 12-14 show fluorescence spectra thus obtained.

As shown in Fig. 12, the azobenzene derivative 4 emitted blue fluorescence, green fluorescence, and red fluorescence in response to excitation by lights of 365nm, 435nm, and 500nm in wavelength, respectively.

As shown in Fig. 13, the azobenzene derivative 8 emitted only yellow fluorescence in response to excitation by lights of 365nm, 435nm, and 500nm in wavelength.

As shown in Fig. 14, the azobenzene derivative 9 emitted yellow green fluorescence in response to excitation by lights of 365nm and 435nm in wavelength, and red fluorescence in response to excitation by light of 500nm in wavelength.

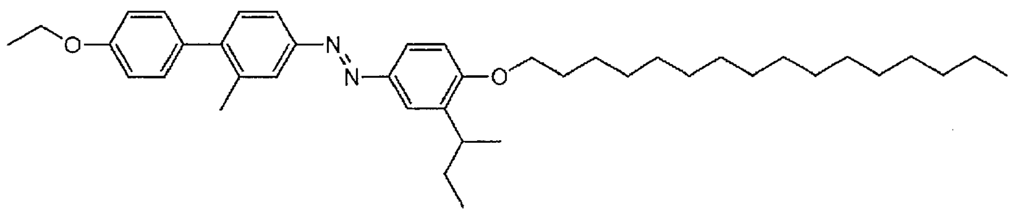

(8)

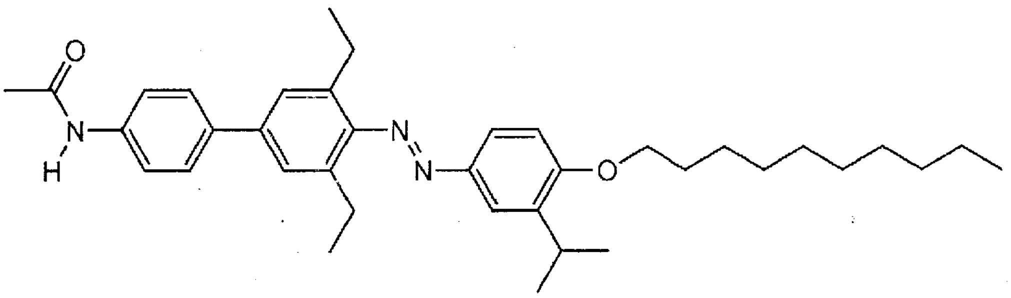

(9)

(3) Examination of color of fluorescence of azobenzene derivatives 10-16

Azobenzene derivatives 10-16 were synthesized by changing raw material compound etc. in synthesis of the azobenzene derivative 1. Synthesis scheme is shown below. In the scheme, "X" represents a substituent in $R^1$ site of a corresponding azobenzene derivative. Further, azobenzene derivative 16 was synthesized by changing raw material compound etc.

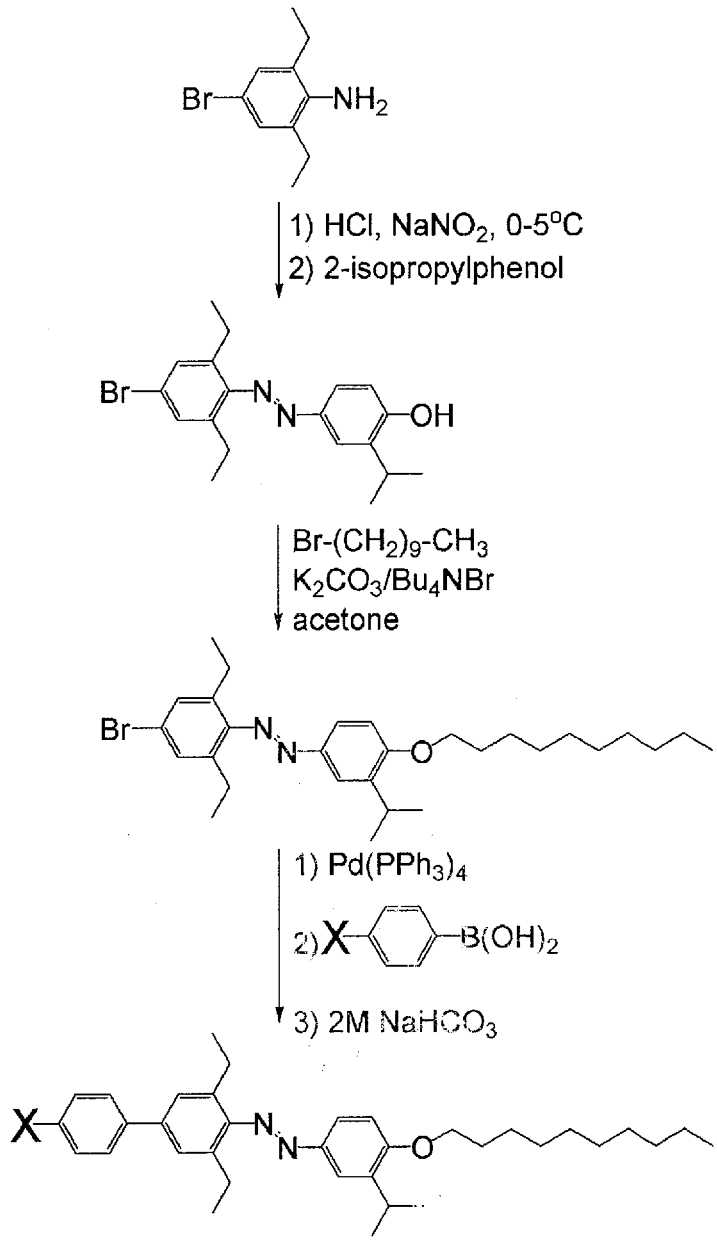
1) HCl, $NaNO_2$, 0-5°C
2) 2-isopropylphenol
Br-$(CH_2)_9$-$CH_3$
$K_2CO_3$/$Bu_4NBr$
acetone
1) $Pd(PPh_3)_4$
2)
3) 2M $NaHCO_3$

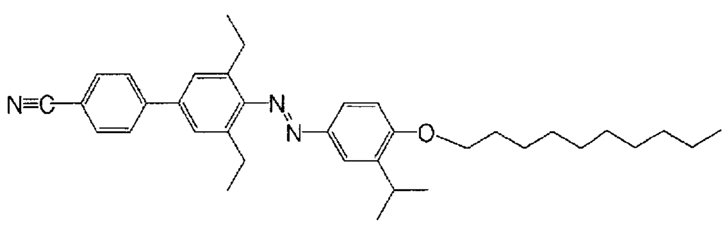

(1 0)

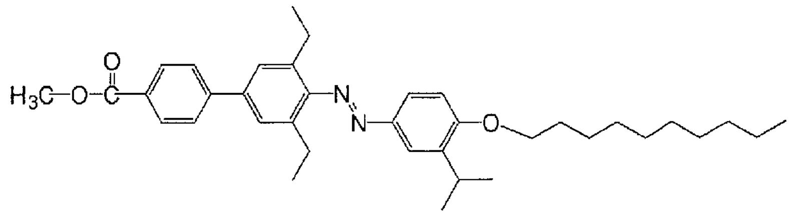

(11)

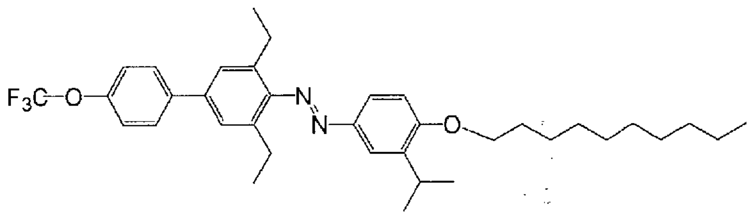

(12)

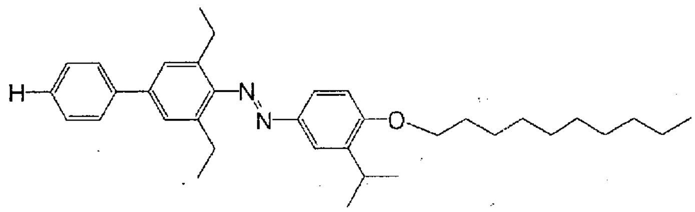

(13)

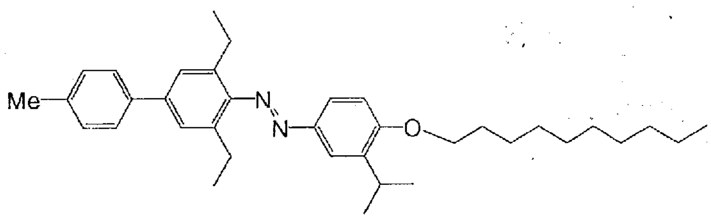

(14)

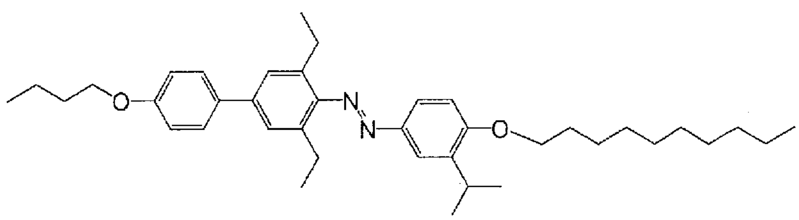

(15)

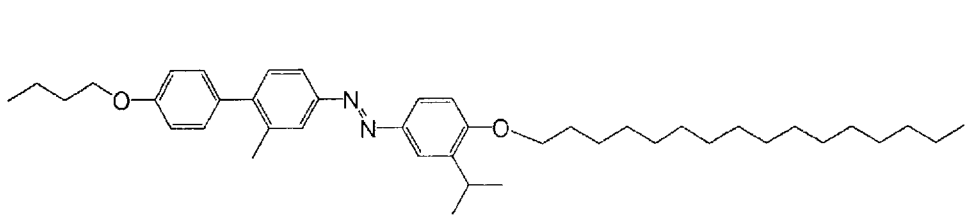

(16)

The following shows the results of identification of the azobenzene derivatives 10-16.
Azobenzene derivative 10:1H NMR (270 MHz, $CDCl_3$) δ 0.81 (t, 3H, $C\underline{H}_3$), 1.09-1.49 (m, 26H, $C\underline{H}_2$ and $C\underline{H}_3$), 1.79 (m,

2H, $CH_2$), 2.65 (q, 4H, $ArCH_2CH_3$), 3.28 (m, 1H, $ArOCH(CH_3)_2$), 4.00 (t, 2H, $ArOCH_2$), 6.87 (d, 1H, Ar-H), 7.18-7.77 (m, 8H, Ar-H).

Azobenzene derivative 11:1H NMR (270 MHz, $CDCl_3$) δ 0.85 (t, 3H, CH3), 1.03-1.55 (m, 26H, $CH_2$ and $CH_3$), 1.84 (m, 2H, $CH_2$), 2.69 (q, 4H, $ArCH_2CH_3$), 3.37 (m, 1H, $ArOCH(CH_3)_2$), 3.93 (s, 3H, $COOCH_3$), 4.05 (t, 2H, $ArOCH_2$), 6.96 (d, 1H, Ar-H), 7.37 (s, 2H, Ar-H), 7.67-7.83 (m, 4H, Ar-H), 8.07 (d, 2H, Ar-H).

Azobenzene derivative 12: 1H NMR (270 MHz, $CDCl_3$) δ 0.81 (t, 3H, $CH_3$), 0.98-1.49 (m, 26H, $CH_2$ and $CH_3$), 1.78 (m, 2H, $CH_2$), 2.65 (q, 4H, $ArCH_2CH_3$), 3.28 (m, 1H, $ArOCH(C_3)_2$), 3.99 (t, 2H, $ArOCH_2$), 6.86 (d, 1H, Ar-H), 7.16-7.76 (m, 8H, Ar-H). Anal. Calcd: C, 72.45; H, 7.94; N, 4.69; F, 9.55. Found: C, 72.55; H, 7.97; N, 9.53; F, 4.68

Azobenzene derivative 13:1H NMR (270 MHz, $CDCl_3$) δ 0.82 (t, 3H, $CH_3$), 1.02-1.48 (m, 26H, $CH_2$ and $CH_3$), 1.78 (m, 2H, $CH_2$), 2.65 (q, 4H, $ArCH_2CH_3$), 3.31 (m, 1H, $ArOCH(CH_3)_2$), 3.99 (t, 2H, $ArOCH_2$), 6.87 (d, 1H, Ar-H), 7.18-7.77 (m, 9H, Ar-H).

Azobenzene derivative 14: 1H NMR (270 MHz, $CDCl_3$) δ 0.85 (t, 3H, $CH_3$), 1.07-1.54 (m, 26H, $CH_2$ and $CH_3$), 1.81 (m, 2H, $CH_2$), 2.38 (s, 3H, Ar-$CH_3$), 2.70 (q, 4H, $ArCH_2CH_3$), 3.36 (m, 1H, $ArOCH(CH_3)_2$), 4.05 (t, 2H, $ArOCH_2$), 6.92 (d, 1H, Ar-H), 7.22-7.82 (m, 8H, Ar-H).

Azobenzene derivative 15:1H NMR (270 MHz, $CDCl_2$) δ 0.88 (t, 3H, $CH_3$), 0.99 (t, 3H, $CH_3$), 1.05-1.61 (m, 28H, $CH_2$ and $CH_3$), 1.82 (m, 4H, $CH_2$), 2.74 (q, 4H, $ArCH_2CH_3$), 3.38 (m, 1H, $ArOCH(CH_3)CH_2CH_3$), 4.04 (m, 4H, $ArOCH_2$), 6.92-7.83 (m, 9H, Ar-H).

Anal. Calcd: C, 80.09; H, 9.65; N, 4.79. Found: C, 80.03; H, 9.75; N, 4.72.

Azobenzene derivative 16:1H NMR (270 MHz, $CDCl_3$) δ 0.80 (m, 6H, $CH_3$), 0.90 (t, 3H, $CH_3$), 1.17-1.78 (m, 37H, $CH_2$ and $CH_3$), 2.30 (s, 3H, $ArCH_3$), 3.10 (m, 1H, $ArOCH(CH_3)(CH_2CH_3)$), 3.94 (t, 2H, $ArOCH_2$), 6.84-7.75 (m, 10H, Ar-H).

Lights to be irradiated to the azobenzene derivatives 10-16 were changed in the same manner as above and changes in the color of fluorescence were examined. Fluorescence spectra thus obtained are shown in Fig. 15-1 and Fig. 15-2. Each azobenzene derivative emitted fluorescence in response to plural excitation wavelengths. Some of the azobenzene derivatives emitted fluorescence with different wavelengths (colors) in response to different excitation lights.

As described above, fluorescent particles made of the azobenzene derivative of the present invention have plural excitation wavelengths. Further, some of the azobenzene derivatives can emit fluorescence with different wavelengths (colors) in response to different excitation lights. Use of this property allows one kind of fluorescent particles to emit fluorescent lights with different colors.

6. Shift in fluorescence wavelength due to difference in substituent etc.

(1) Synthesis of azobenzene derivative 17

Azobenzene derivative 17 was synthesized by changing raw material compound etc. in the above synthesis.

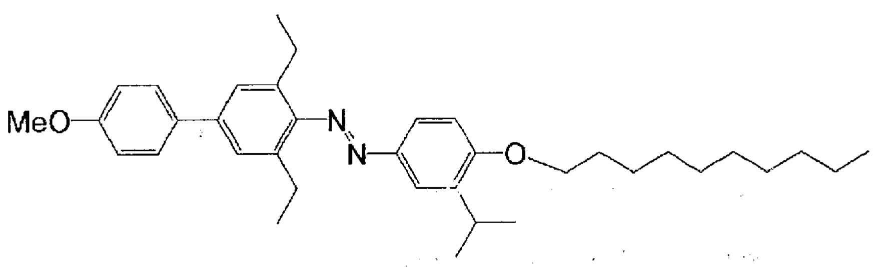

(1 7)

The result of identification is shown below.

Azobenzene derivative 17: 1H NMR (270 MHz, $CDCl_3$) δ 0.86 (t, 3H, $CH_3$), 1.04-1.54 (m, 26H, $CH_2$ and $CH_3$), 1.81 (m, 2H, $CH_2$), 2.70 (q, 4H, $ArCH_2CH_3$), 3.33 (m, 1H, $ArOCH(CH_3)_2$), 3.85 (s, 3H, $CH_3O$-), 4.04 (t, 2H, $ArOCH_2$), 6.92-7.82 (m, 9H, Ar-H).

(2) Observation of fluorescent spectrum

The azobenzene derivatives 10, 11, 12, 13, 14, 15 and 17 have the same structure except for their terminal substituents. Fig. 16 shows the relation between Hammett constant of a terminal substituent and $\lambda_{max}$ of fluorescence obtained by irradiating excitation light (of 365nm in wavelength).

It was confirmed from Fig. 16 that a linear relation exists between Hammett constant of the terminal substituent

and $\lambda_{max}$. Use of this result would allow expecting what fluorescent color is emitted with respect to what Hammett constant of a substituent.

(3) Synthesis of azobenzene derivatives 18-21

Azobenzene derivatives 18-21 were synthesized by changing raw material compound etc. in the method of synthesis of the azobenzene derivative 1. The result of identification is shown below.
Azobenzene derivative 18: 1H NMR (270 MHz, $CDCl_3$) δ 0.85 (t, 3H, $C\underline{H}_3$), 1.07-1.54 (m, 26H, $C\underline{H}_2$ and $C\underline{H}_3$), 1.81 (m, 2H, $C\underline{H}_2$), 2.19 (s, 3H, $NHCOC\underline{H}_3$), 2.69 (q, 4H, $ArC\underline{H}_2CH_3$), 3.36 (m, 1H, $ArOC\underline{H}(CH_3)_2$), 4.05 (t, 2H, $ArOC\underline{H}_2$), 6.92 (d, 1H, Ar-H), 7.17-7.82 (m, 8H, Ar-$\underline{H}$).
Azobenzene derivative 19: 1H NMR (270 MHz, $CDCl_3$) δ 0.85 (t, 3H, $C\underline{H}_3$), 1.07-1.54 (m, 26H, $C\underline{H}_2$ and $C\underline{H}_3$), 1.81 (m, 2H, $C\underline{H}_2$), 2.66 (q, 4H, $ArC\underline{H}_2CH_3$), 3.33 (m, 1H, $ArOC\underline{H}(CH_3)_2$), 3.94 (s, 3H, $C\underline{H}_3O$-), 4.02 (t, 2H, $ArOC\underline{H}_2$), 6.7-8.3 (m, 8H, Ar-$\underline{H}$).
Azobenzene derivative 20:1H NMR (270 MHz, $CDCl_3$) δ 0.85 (t, 3H, $C\underline{H}_3$), 1.05-1.54 (m, 26H, $C\underline{H}_2$ and $C\underline{H}_3$), 1.81 (m, 2H, $C\underline{H}_2$), 2.66 (q, 4H, $ArC\underline{H}_2CH_3$), 3.34 (m, 1H, $ArOC\underline{H}(CH_3)_2$), 3.89 (s, 3H, $C\underline{H}_3O$-), 4.05 (t, 2H, $ArOC\underline{H}_2$), 6.93 (d, 1H, Ar-H), 7.04-7.84 (m, 7H, Ar-$\underline{H}$). Azobenzene derivative 21:1H NMR (270 MHz, $CDCl_3$) δ 0.84 (t, 3H, $C\underline{H}_3$), 1.02-1.52 (m, 26H, $C\underline{H}_2$ and $C\underline{H}_3$), 1.81 (m, 2H, $C\underline{H}_2$), 2.69 (q, 4H, $ArC\underline{H}_2CH_3$), 3.35 (m, 1H, $ArOC\underline{H}(CH_3)_2$), 3.78 (s, 3H, $C\underline{H}_3O$-), 3.82 (s, 3H, $C\underline{H}_3O$-), 4.03 (t, 2H, $ArOC\underline{H}_2$), 6.53-7.80 (m, 8H, Ar-$\underline{H}$).

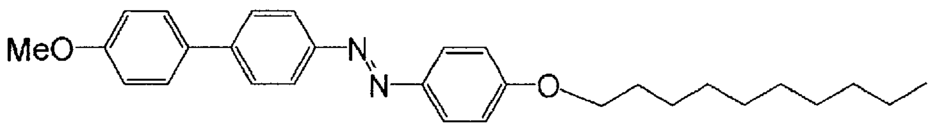
(18)

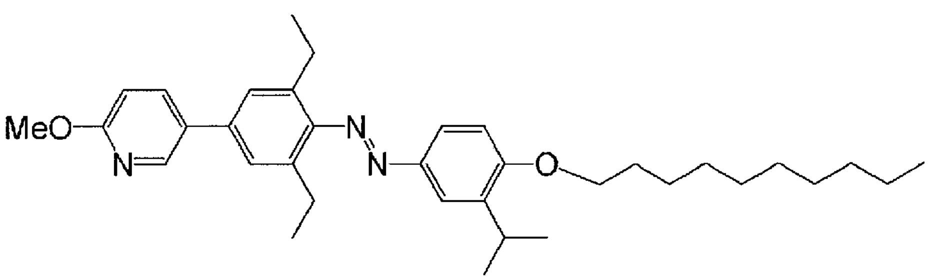
(19)

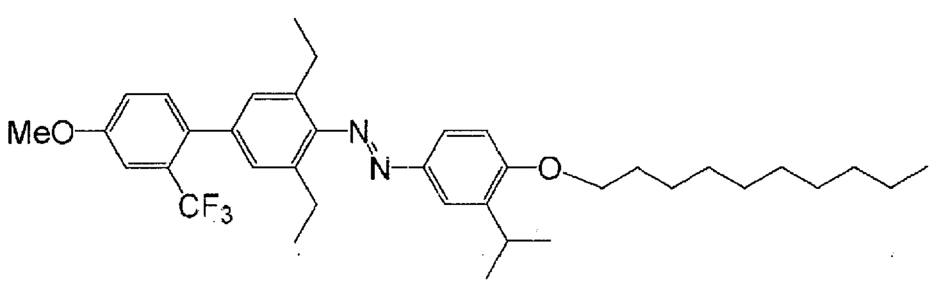
(20)

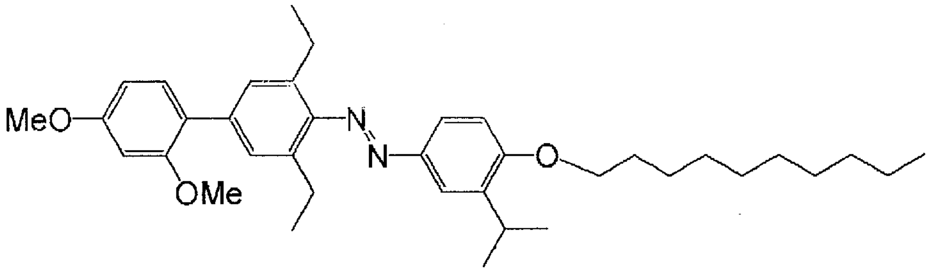

(2 1)

(4) Observation of absorption spectrum and fluorescence spectrum

In the same manner as the 2., ultraviolet light (of 365nm in wavelength) was irradiated to solutions containing the azobenzene derivatives 17-21 until an increase in fluorescence got saturated. Thereafter, the solutions were left in a dark place at room temperature for 12 days.

Fig. 17-1 shows absorption spectra of the solutions containing the azobenzene derivatives 17, 18, 20, and 21 before irradiation of ultraviolet light, after the irradiation, and left at room temperature. Fig. 17-2 shows fluorescence spectra of the solutions containing the azobenzene derivatives 17, 18, 20, and 21 before irradiation of ultraviolet light, after the irradiation, and left at room temperature.

Further, Table 2 below shows changes in $\lambda_{max}$ of fluorescence spectra and fluorescence intensity of the solutions containing the azobenzene derivatives 17, 18, 20, and 21 (i) after the irradiation of ultraviolet light and (ii) after standing at room temperature after the irradiation.

The fluorescence spectra are spectra of fluorescence emitted in response to excitation light that is the irradiated ultraviolet light (of 365nm in wavelength).

[Table 2]

| | $\lambda_{max}$ | | Change in fluorescence intensity |
|---|---|---|---|
| | (i) After UV irradiation (time in parentheses is time for increase in fluorescence to get saturated) | (ii) After standing in dark place at room temperature (time in parentheses is standing time) | |
| Azobenzene derivative 17 | 526 (960 min) | 527 (12 days) | 0.030 |
| Azobenzene derivative 18 | 551 (720 min) | 553 (12 days) | -0.082 |
| Azobenzene derivative 20 | 475 (1140 min) | 474 (12 days) | -0.010 |
| Azobenzene derivative 21 | 548 (1140 min) | 548 (12 days) | -0.017 |

Change in fluorescence intensity = (fluorescence intensity in (ii) - fluorescence intensity in (i))/fluorescence intensity in (i)

As shown in Figs. 17-1 and 17-2 and Table 2, only the azobenzene derivative 18 showed great changes in absorption spectrum and fluorescence spectrum when it was left in a dark place at room temperature after irradiation of ultraviolet light. It is considered that this is because leaving the azobenzene derivative 18 in a dark place at room temperature after the irradiation causes isomerization from cis form to *trans* form. On the other hand, since the azobenzene derivatives 17, 20, and 21 have substituents at predetermined positions, the azobenzene derivatives 17, 20, and 21 have high *cis* stability which derives from a molecular structure, allowing maintenance of stable absorption spectrum and stable fluorescence intensity. Further, the azobenzene derivative 19 also maintained stable absorption spectrum and stable fluorescence intensity.

Fig. 18 is a drawing in which fluorescence spectra of the azobenzene derivatives 17-21 are overlapped. If the azobenzene derivative 17 is considered as a reference, the azobenzene derivative 19, which has a structure in which the phenyl group of the azobenzene derivative 17 has been replaced with a pyridinyl group, shows a shorter fluorescence wavelength. It is considered that this is because a pyridinyl group has a higher electron withdrawing ability than a phenyl group. Further, the azobenzene derivative 20, which has a structure of azobenzene derivative 17 into which a $CF_3$ group that is an electron withdrawing group has been introduced, also shows a shorter fluorescence wavelength than the azobenzene derivative 17.

In contrast thereto, the azobenzene derivative 21, which has a structure of azobenzene derivative 17 into which -OMe group that is an electron donating group has been introduced, shows a longer fluorescence wavelength than the azobenzene derivative 17.

(5) Observation of fluorescence spectra of azobenzene derivatives 15 and 16

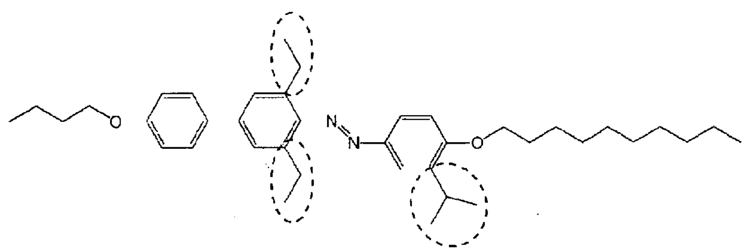

(1 5)

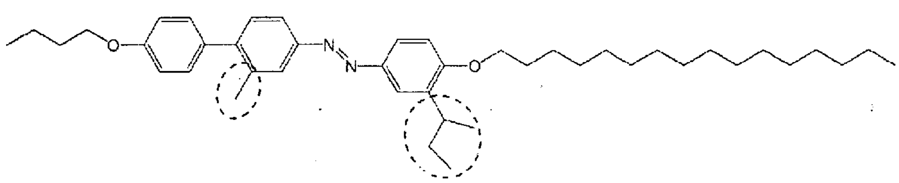

(1 6)

In the same manner as the 2., ultraviolet light (of 365nm in wavelength) was irradiated to solutions containing the azobenzene derivatives 15 and 16 until an increase in fluorescence got saturated. Fig. 19 shows the fluorescence spectra thus obtained. The fluorescence spectra are spectra of fluorescence emitted in response to excitation light that is the irradiated ultraviolet light (of 365nm in wavelength).

As shown in Fig. 19, fluorescent particles made of the azobenzene derivative 16 showed a longer fluorescent spectrum than that of fluorescent particles made of the azobenzene derivative 15.

The above results show that changing an electric property (electron withdrawing ability, electron donating ability) of atoms constituting a ring structure and a substituent of the azobenzene derivative allows shifting fluorescence wavelength to a shorter or longer wavelength side. Using this property, it is possible to easily design fluorescent particles that emit fluorescence with desired color such as violet, blue, green, yellow, orange, and red. Further, by taking a molecular structure and its functional group into consideration, it is possible to expect what color of fluorescence will be emitted.

7. Formation of fluorescent film I

(1) Formation of fluorescent particles

The azobenzene derivatives 1, 4, and 9 were dissolved in dichloromethane to prepare azobenzene derivative solutions of 8x 10-5M in concentration. The azobenzene derivative solutions were subjected to irradiation of ultraviolet light of 365nm in wavelength (of 2-4mW/$cm^2$ in intensity) until an increase in fluorescence got saturated (for approximately 300-800 minutes) to form fluorescent particles. 30mg of polycaprolactone (hereinafter "cap", manufactured by Aldrich, product number: 440752), polycarbonate resin (hereinafter "carb", manufactured by Acros, product number: 17831), poly(2-ethyl-2-oxazoline) (hereinafter "oxa", manufactured by Aldrich, product number: 372846), or poly(methyl methacrylate) (hereinafter "PMMA", manufactured by Aldrich, product number: 200336) was dissolved in 3mL of dichloromethane to prepare a polymer solution. 1mL of the azobenzene derivative solutions in which fluorescent particles had been formed by irradiation of ultraviolet light and 2mL of the polymer solution were mixed with each other to obtain application liquids.

Figs. 20-1, 20-2, and 20-3 show fluorescence spectra obtained by irradiating ultraviolet light (of 365nm in wavelength), blue light (of 435nm in wavelength), and green light (of 500nm in wavelength) to the application liquids in which fluorescent particles had been formed, respectively.

As shown in Figs. 20-1, 20-2, and 20-3, variations in fluorescence behavior and fluorescence intensity were observed in the application liquids according to the kinds of polymers and differences in excitation light.

(2) Formation of fluorescent film

The application liquids were dropped on quartz substrates and fluorescent films of several ten nm to several hundred μm in thickness were formed by spin coating. The fluorescent films thus formed were subjected to irradiation of ultraviolet light (of 365nm in wavelength), blue light (of 435nm in wavelength), and green light (of 500nm in wavelength). Each fluorescent film emitted blue fluorescence in response to irradiation of ultraviolet light, emitted green fluorescence in response to irradiation of blue light, and emitted red fluorescence in response to irradiation of green light. In particular, although the azobenzene derivatives 1 and 9 in the form of the application liquid showed variations in fluorescence behavior and fluorescence intensity according to the kinds of polymers, the azobenzene derivatives 1 and 9 in the form of the fluorescent film emitted fluorescence with high intensity.

8. Formation of fluorescent film II

Fluorescent films were formed using the azobenzene derivatives 1, 4, and 8 in the same manner as in the 7. except that a polymer in use was replaced with a polymer obtained by mixing polymers (1) and (2) below at a ratio of 10: 1 (by mass). The fluorescent films thus formed were subjected to irradiation of ultraviolet light (of 365nm in wavelength), blue light (of 435nm in wavelength), and green light (of 500nm in wavelength). Figs. 21-23 show optical microscope and fluorescent microscope photographs of the fluorescent films. As shown in Figs. 21-23, by using the polymer blend, a film with a honeycomb structure was formed.

Further, fluorescent films were formed using the azobenzene derivatives 4 and 9 in the same manner as in the 7. except that a polymer in use was replaced with polymer (3) below. The fluorescent films thus formed were subjected to irradiation of ultraviolet light (of 365nm in wavelength), blue light (of 435nm in wavelength), and green light (of 500nm in wavelength).

Polymer (1): poly(c-caprolactone), weight average molecular weight 67000, manufactured by Birmingham Polymers, Inc.

Polymer (2): acrylamide polymer, weight average molecular weight 22000, synthesized by a method described in Nishikawa, T. et al. Langmuir, 2003, 19, 6193.

Polymer (3): polycaprolactone (manufactured by Aldrich, product number: 400752, $M_W$~14000)

Each fluorescent film emitted blue fluorescence in response to irradiation of ultraviolet light, emitted green fluorescence in response to irradiation of blue light, and emitted red fluorescence in response to irradiation of green light. Further, although the azobenzene derivatives in the form of the application liquid showed variations in fluorescence intensity according to a change in excitation light, any of the azobenzene derivatives in the form of the fluorescent film emitted fluorescence with high intensity.

The above results show that the fluorescent film of the present invention can emit plural-colored fluorescence with high intensity. Further, it is possible to shift the fluorescence wavelength of the azobenzene derivative used in the present invention by replacing a substituent etc. By using the azobenzene derivative, it is possible to easily obtain a fluorescent film capable of emitting desired fluorescence in response to certain excitation light.

Industrial Applicability

The fluorescent film of the present invention is capable of emitting fluorescence in response to irradiation of different excitation lights. Using this property, the fluorescent film is expected to be applicable to various light-emitting devices, information storage materials, sensors, and supporting films with variable fluorescence.

## Claims

1. A fluorescent film, comprising an azobenzene derivative represented by General Formula (I) and a binder,

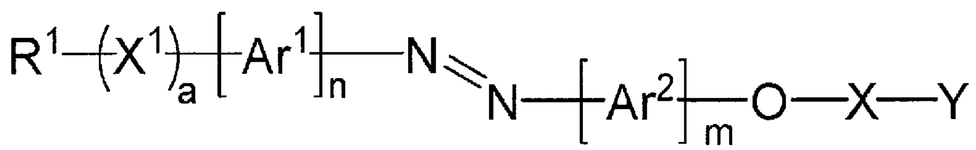

(I)

wherein $R^1$ represents a hydrogen atom, a halogen atom, an alkoxy group, an alkyl group, a cycloalkyl group, an aryl group, a heterocyclic group, a cyano group, an ester group, a ketone group, a nitro group, $-CA_3$, -(C=O)A, $-(C=O)NA_2$, -BA, -OA, -SA, $-NA_2$, $-(P=O)A_2$ (A is a hydrogen atom, a halogen atom, an alkoxy group or an alkyl group, and when a plurality of A are included in a single group, A may be identical or different) or an organic fluorescent group,
$Ar^1$ and $Ar^2$ independently represent an arylene group or an aromatic heterocycle each optionally containing a substituent,
X represents an alkylene group that may include a hetero atom,
$X^1$ represents -NH-, -O-, -S-, or an alkylene group that may include a heteroatom or a linking group,
Y represents a hydrogen atom, -BA', $-CA'_3$, -OA', $-NA'_2$,- $PA'_2$ or -SA' (A' is a hydrogen atom, a halogen atom, an alkoxy group or an alkyl group, and when a plurality of A' are included in a single group, A' may be identical or different),
a represents an integer ranging from 0 to 2, and
m and n independently represent an integer of 1 to 8, plural $Ar^1$ and plural $Ar^2$ exist in a case where m and n are integers of 2 or more, and the plural $Ar^1$ and the plural $Ar^2$ may be identical or different.

2. The fluorescent film as set forth in claim 1, wherein in General Formula (I), $Ar^1$ and $Ar^2$ independently represent an arylene group or an aromatic heterocycle, and the substituent R is a halogen atom, an alkoxy group, an alkyl group, a cycloalkyl group, an aryl group, a heterocyclic group, a cyano group, an ester group, a ketone group, $-CA''_3$, -(C=O)A", $-(C=O)NA''_2$, -BA", -OA", -SA", $-NA''_2$, $-(P=O)A''_2$ (A" is a hydrogen atom, a halogen atom, an alkoxy group or an alkyl group, and when a plurality of A" are included in a single group, A" may be identical or different) or an organic fluorescent group.

3. The fluorescent film as set forth in claim 1 or 2, wherein the binder is at least one selected from the group consisting of polycaprolactone, polycarbonate resin, poly(2-ethyl-2-oxazoline) and poly(methyl methacrylate).

4. The fluorescent film as set forth in any one of claims 1-3, wherein the azobenzene derivative represented by General Formula (I) is an azobenzene derivative represented by General Formula (III)

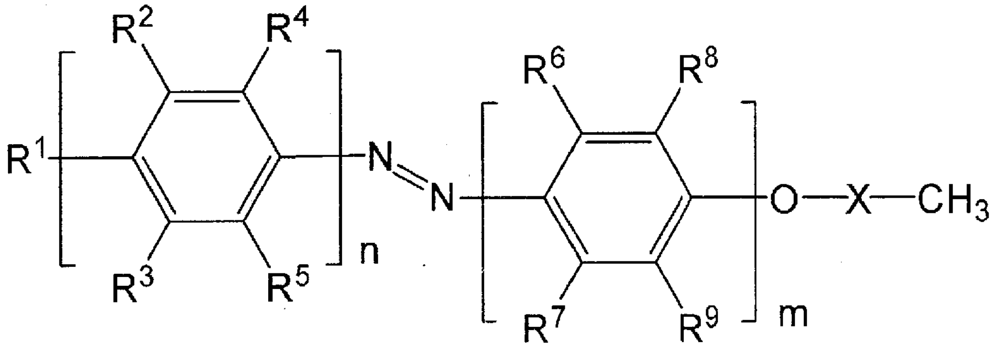

(III)

wherein $R^2$-$R^9$ independently represent a halogen atom, an alkoxy group, an alkyl group, a cycloalkyl group, an aryl group, a heterocyclic group, a cyano group, an ester group, a ketone group, -CA"$_3$, -(C=O)A", -(C=O)NA"$_2$, -BA", -OA", -SA", -NA"$_2$, -(P=O)A"$_2$ (A" is a hydrogen atom, a halogen atom, an alkoxy group or an alkyl group, and when a plurality of A" are included in a single group, A" may be identical or different) or an organic fluorescent group, at least two of $R^2$-$R^9$ in two phenylene rings that bind to each other through an azo group are substituents other than hydrogen atoms, $R^1$, X, m and n are defined in the same manner as in General Formula (I), and when m and n are integers of 2 or more, a plurality of $R^2$-$R^9$ exist, and the plurality of $R^2$-$R^9$ may be identical or different.

**5.** The fluorescent film as set forth in any one of claims 1-4, wherein the azobenzene derivative represented by General Formula (I) exists in a form of fluorescent particles obtained by aggregating the azobenzene derivative.

FIG. 1

SEM PHOTOGRAPH
(AZOBENZENE DERIVATIVE 1)

TEM PHOTOGRAPH
(AZOBENZENE DERIVATIVE 1)

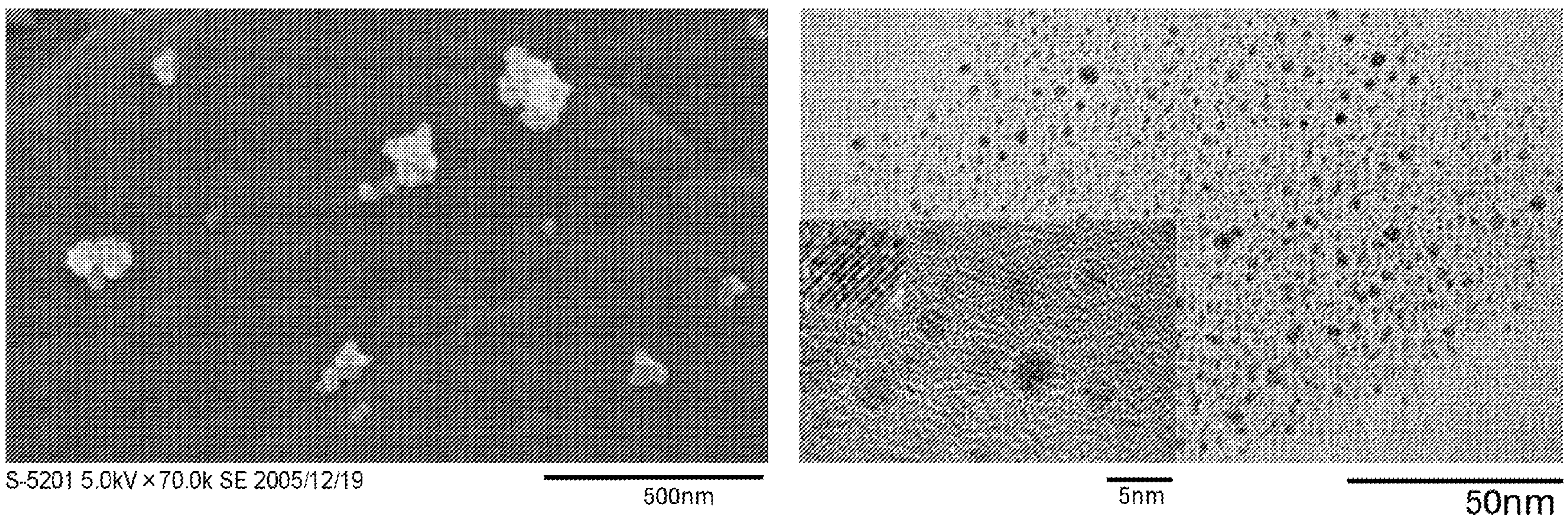

FIG. 2

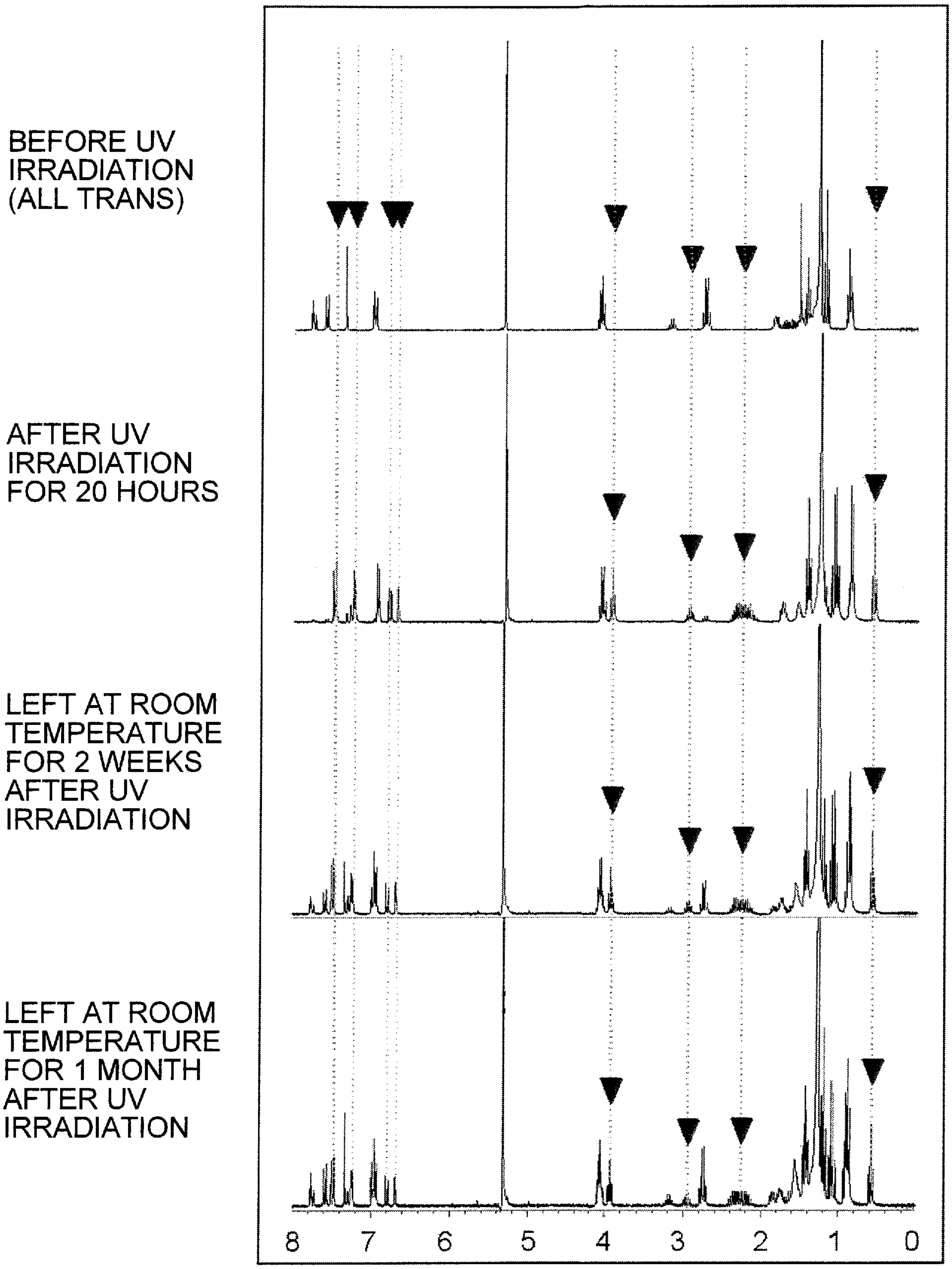
BEFORE UV IRRADIATION (ALL TRANS)
AFTER UV IRRADIATION FOR 20 HOURS
LEFT AT ROOM TEMPERATURE FOR 2 WEEKS AFTER UV IRRADIATION
LEFT AT ROOM TEMPERATURE FOR 1 MONTH AFTER UV IRRADIATION
8
7
6
5
4
3
2
1
0

FIG. 3

AZOBENZENE DERIVATIVE 1

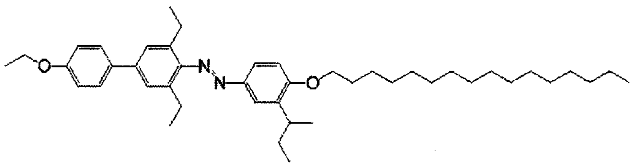

(1)

(a)ABSORPTION SPECTRUM

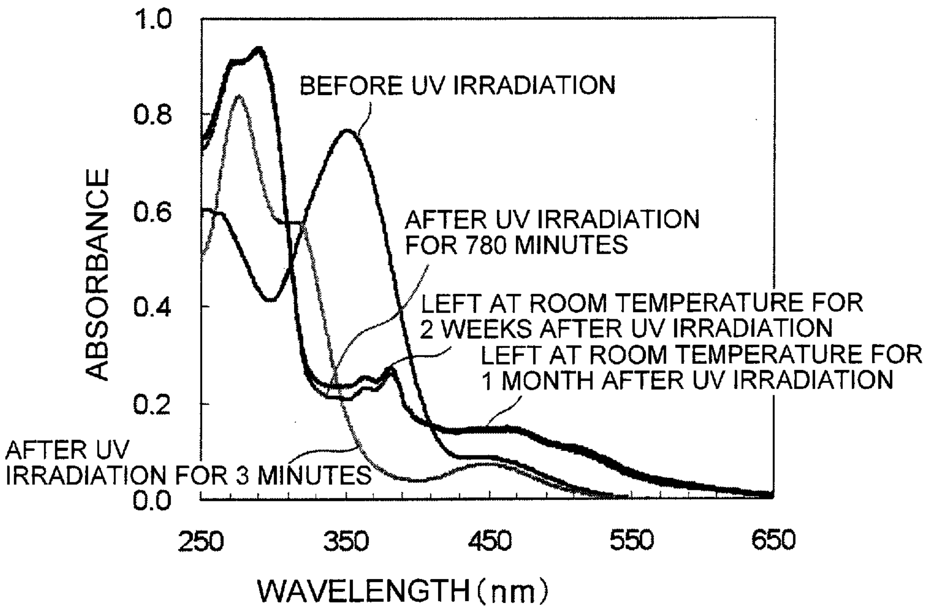


(b)FLUORESCENCE SPECTRUM

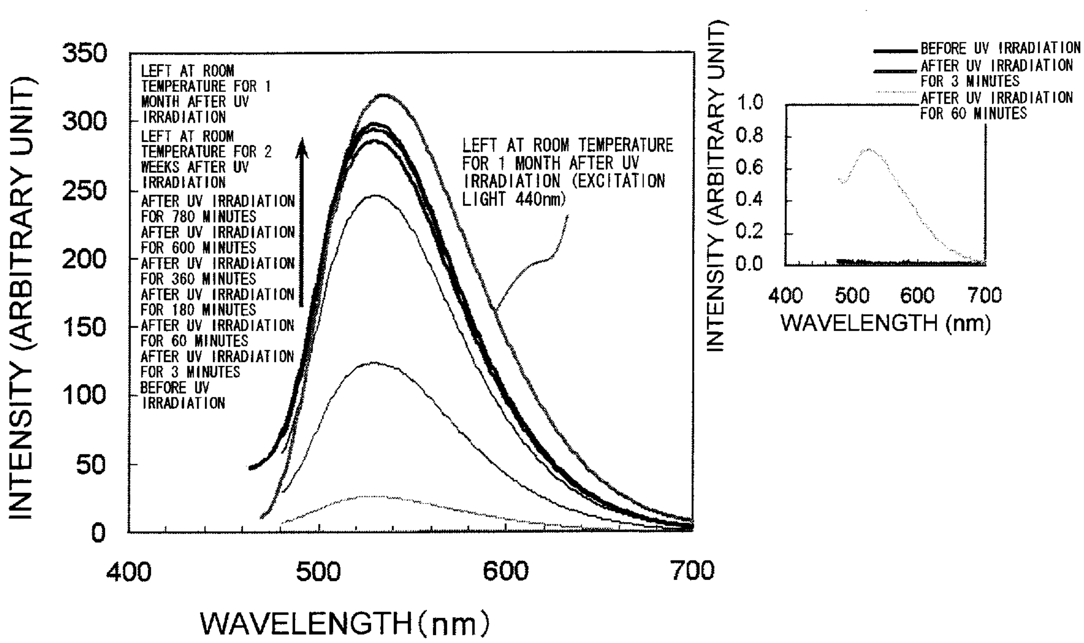

# FIG. 4

AZOBENZENE DERIVATIVE 2

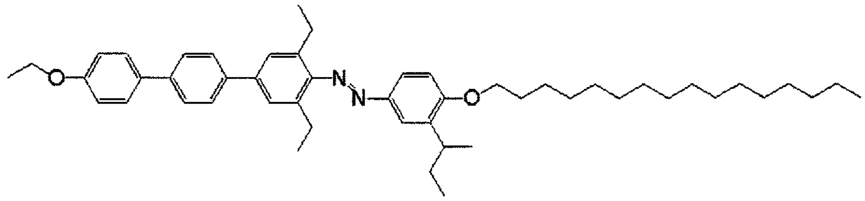

(2)

(a)ABSORPTION SPECTRUM

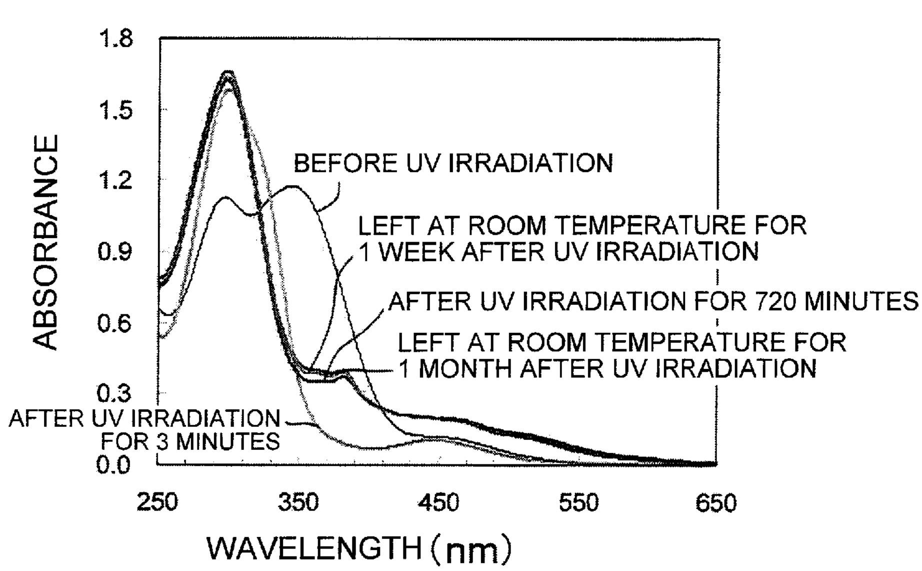


(b)FLUORESCENCE SPECTRUM

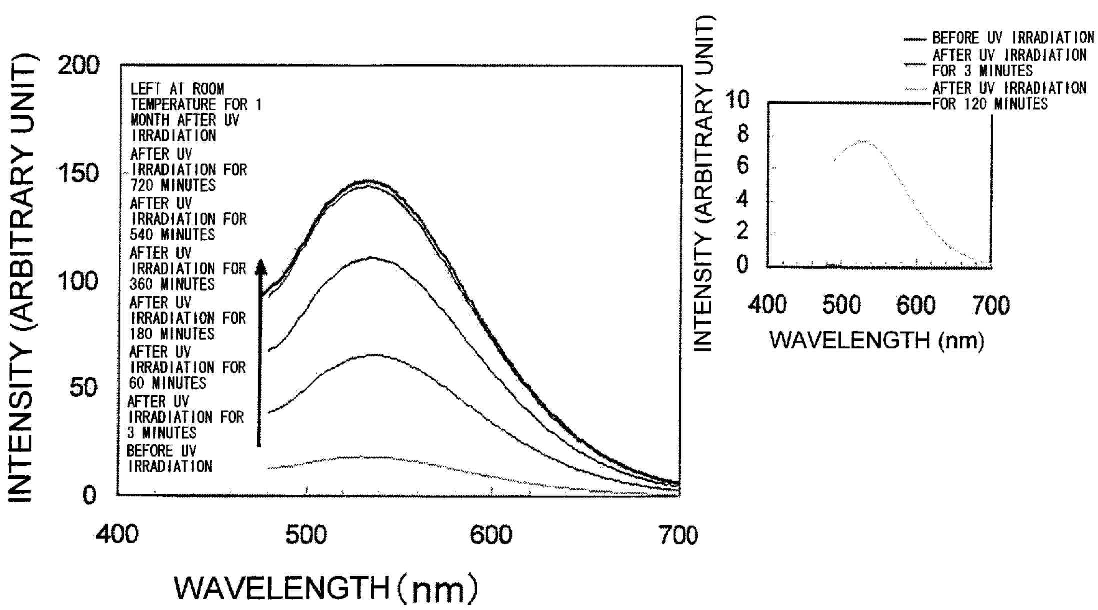

# FIG. 5

AZOBENZENE DERIVATIVE 3

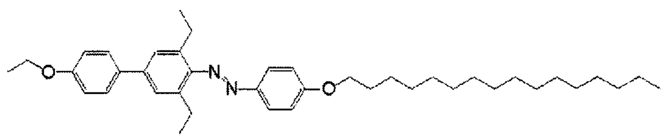
(3)

(a)ABSORPTION SPECTRUM

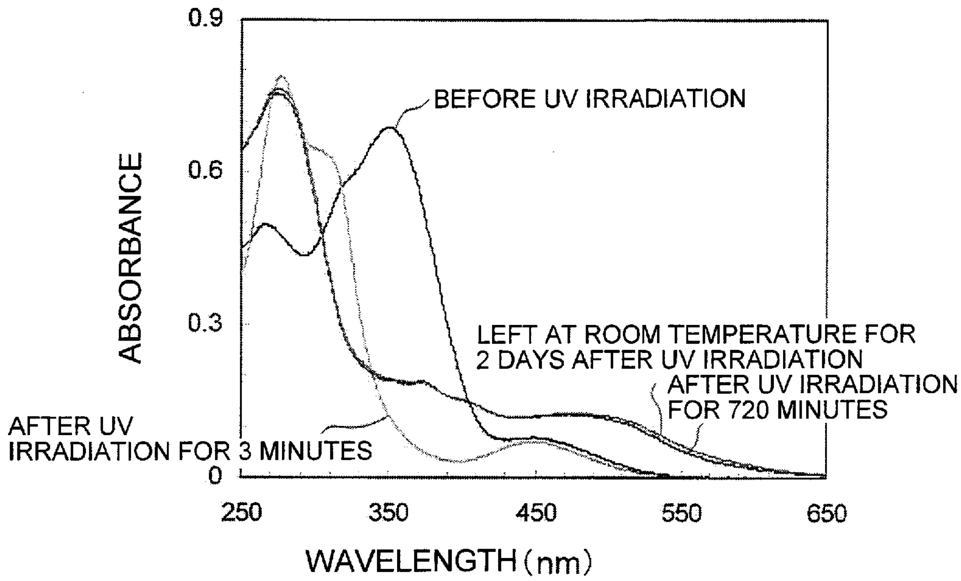


(b)FLUORESCENCE SPECTRUM

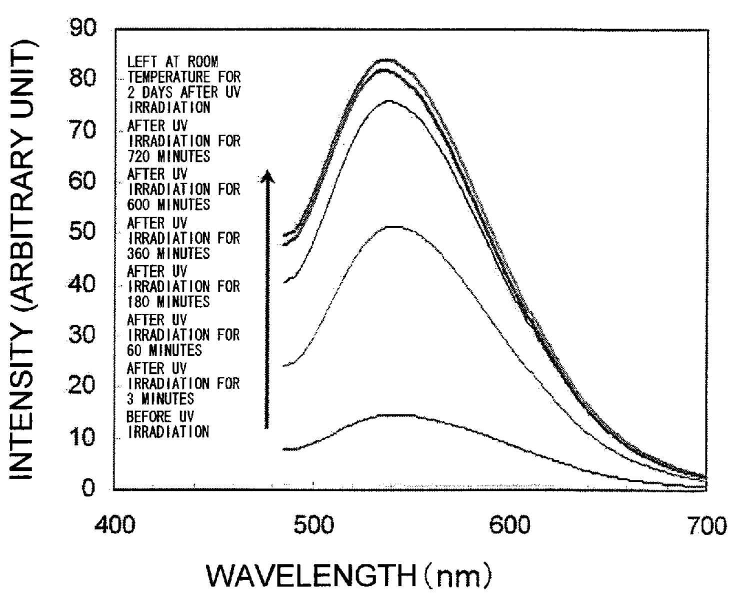

# FIG. 6

AZOBENZENE DERIVATIVE 4

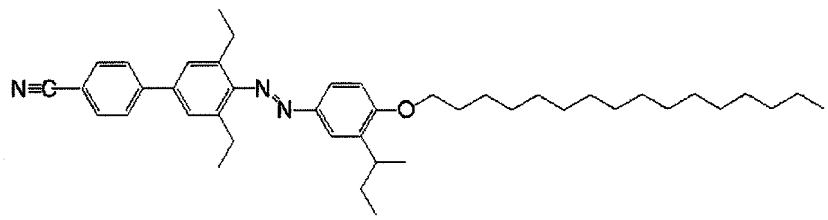

(4)

(a)ABSORPTION SPECTRUM

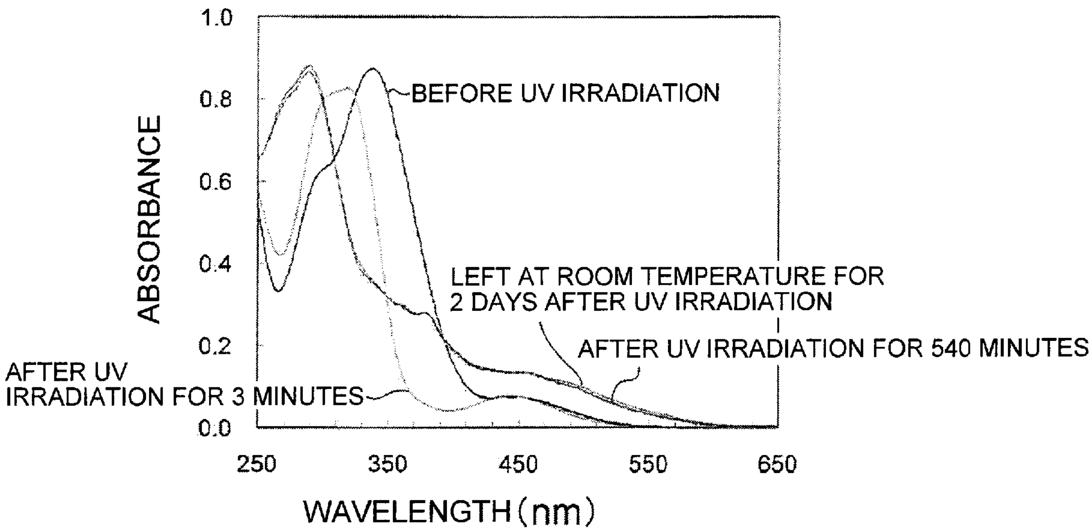


(b)FLUORESCENCE SPECTRUM

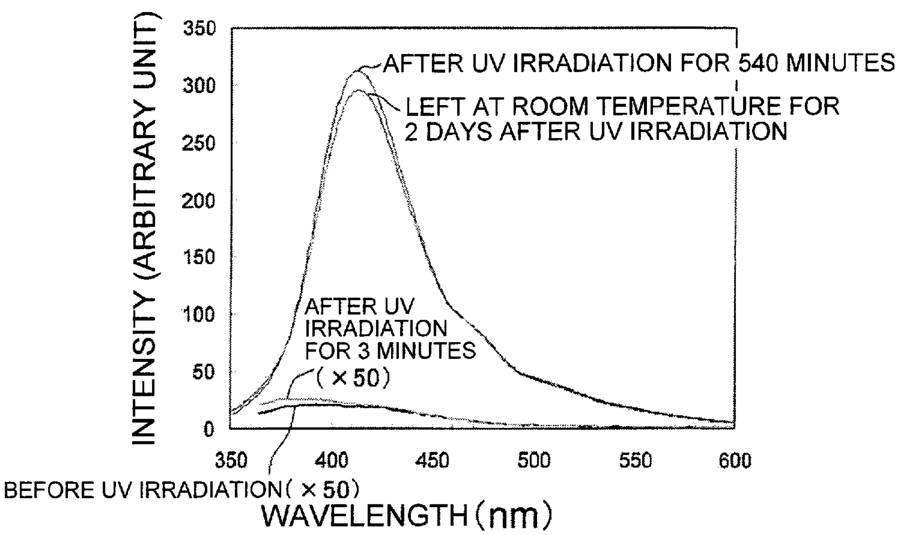

FIG. 7

AZOBENZENE DERIVATIVE 5

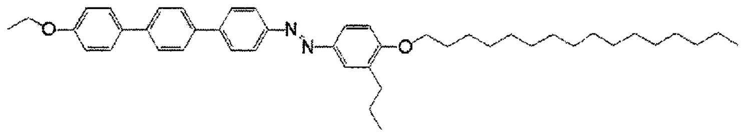

(5)

(a)ABSORPTION SPECTRUM

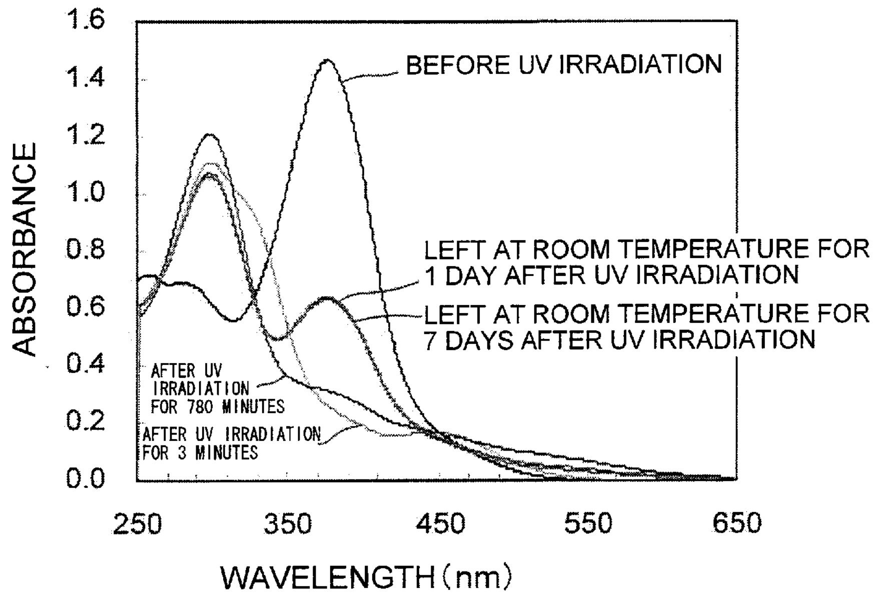


(b)FLUORESCENCE SPECTRUM

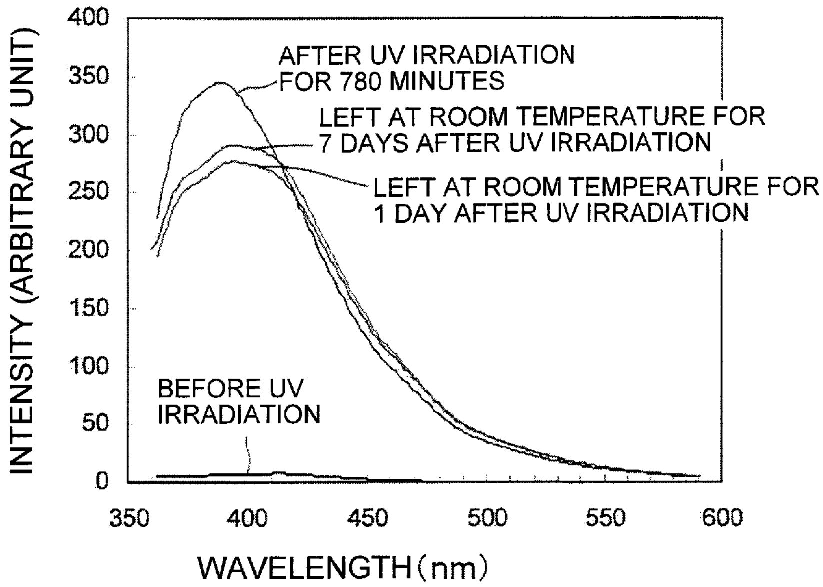

FIG. 8

AZOBENZENE DERIVATIVE 6

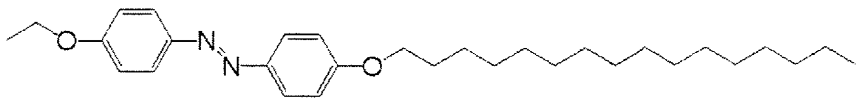

(6)

(a)ABSORPTION SPECTRUM

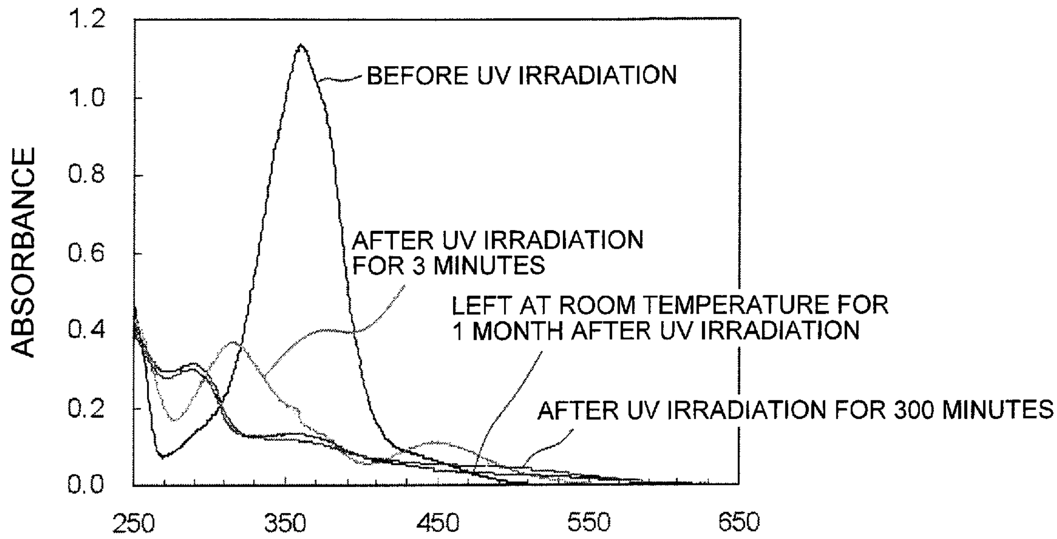


(b)FLUORESCENCE SPECTRUM

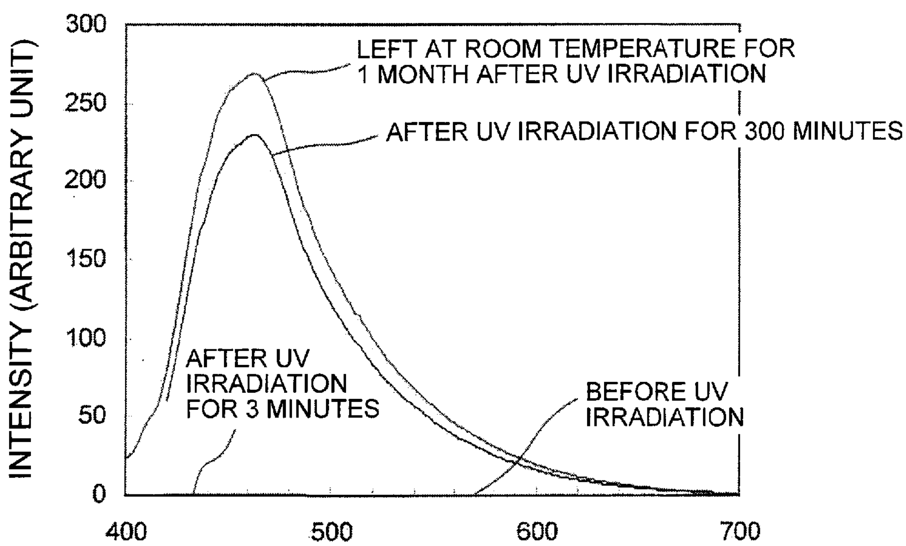

FIG. 9

AZOBENZENE DERIVATIVE 7

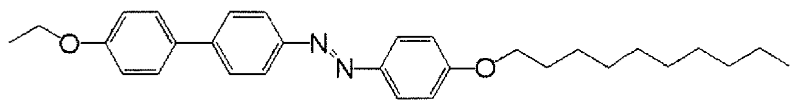

(7)

(a) ABSORPTION SPECTRUM

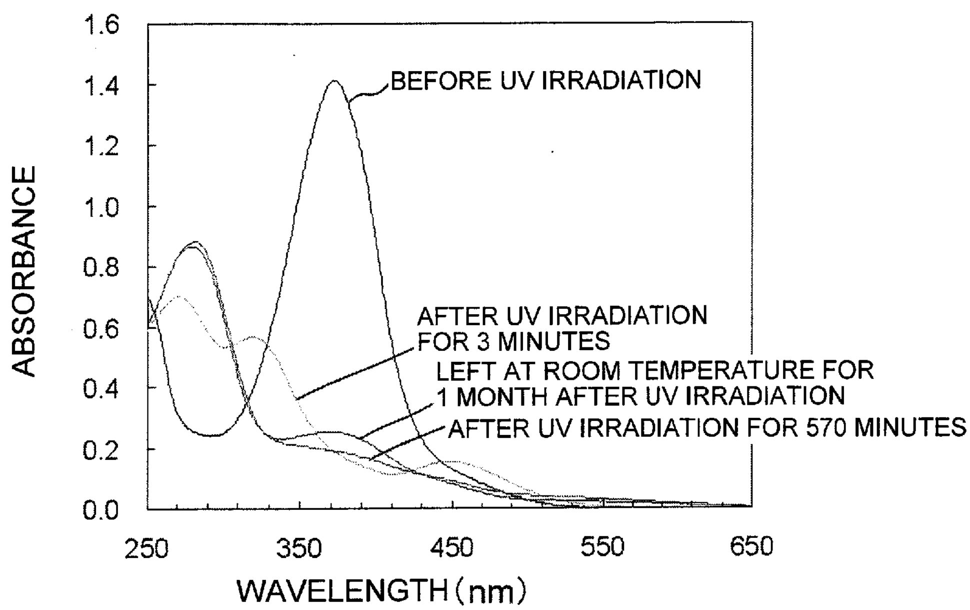


(b) FLUORESCENCE SPECTRUM

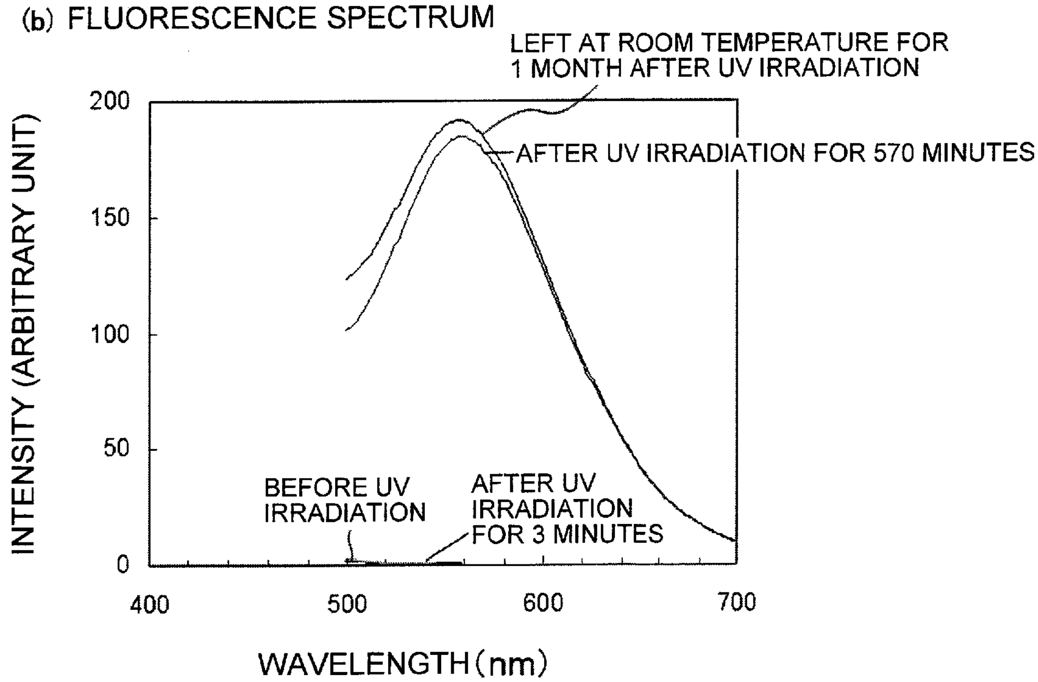

FIG. 10

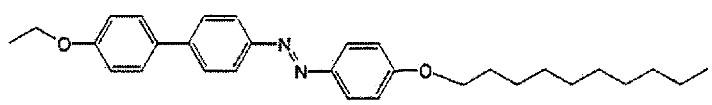

AZOBENZENE DERIVATIVE 7

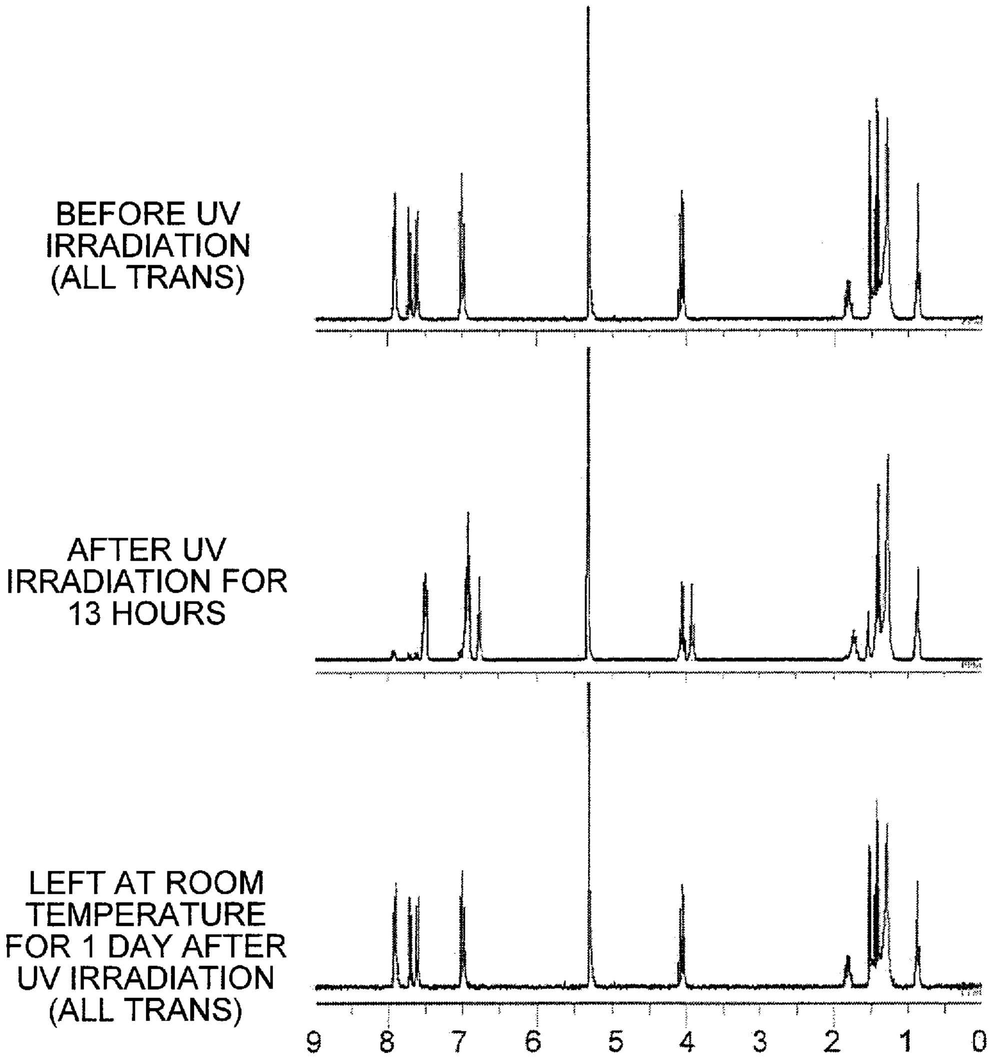

FIG. 11

(AFTER STANDARDIZATION)

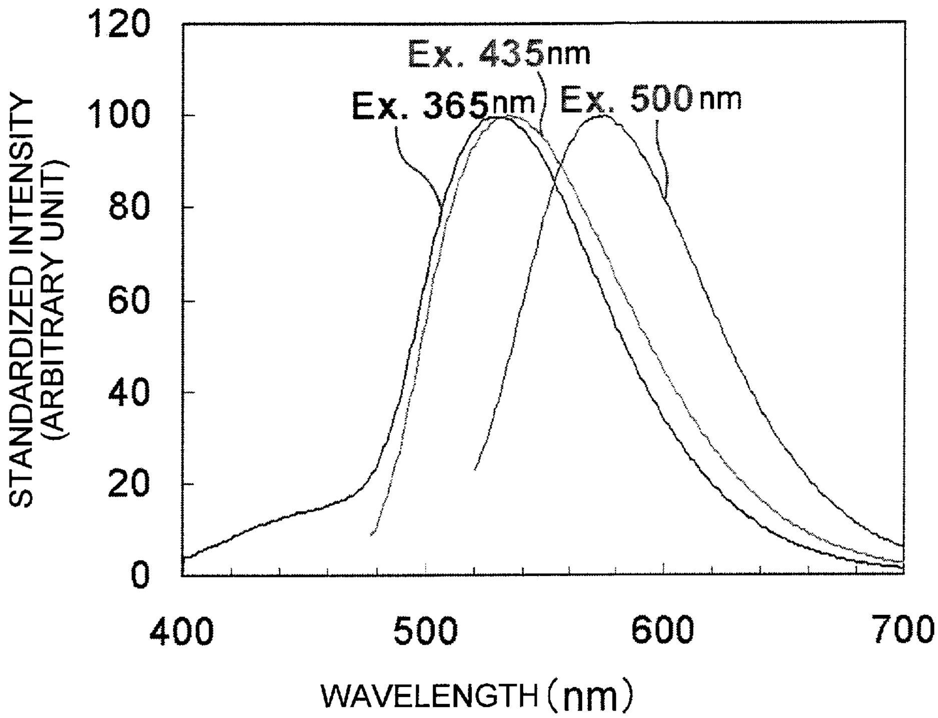


(BEFORE STANDARDIZATION)

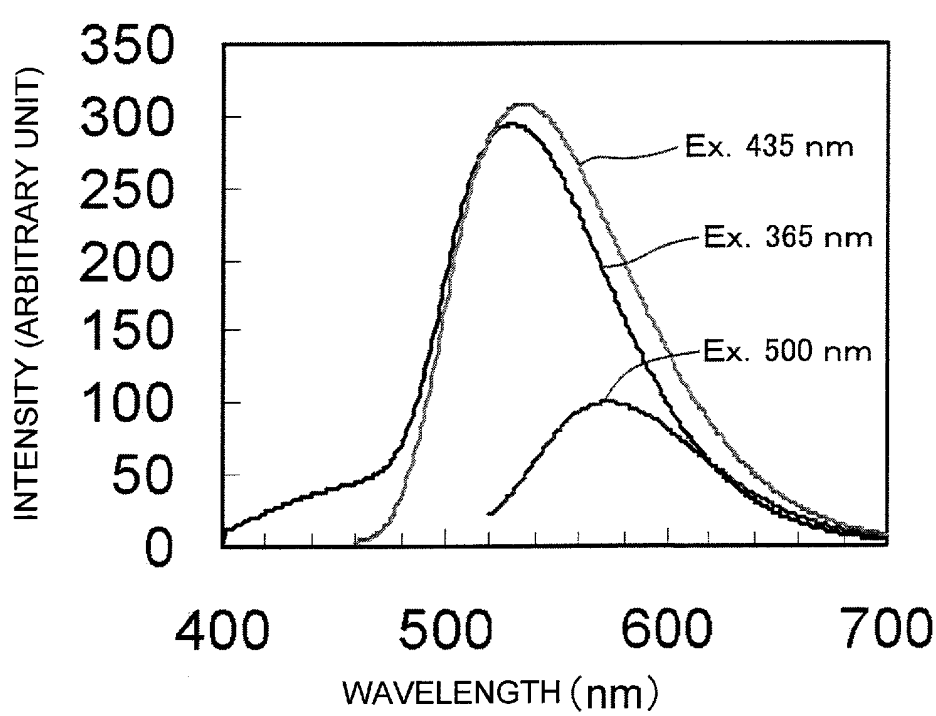

FIG. 12

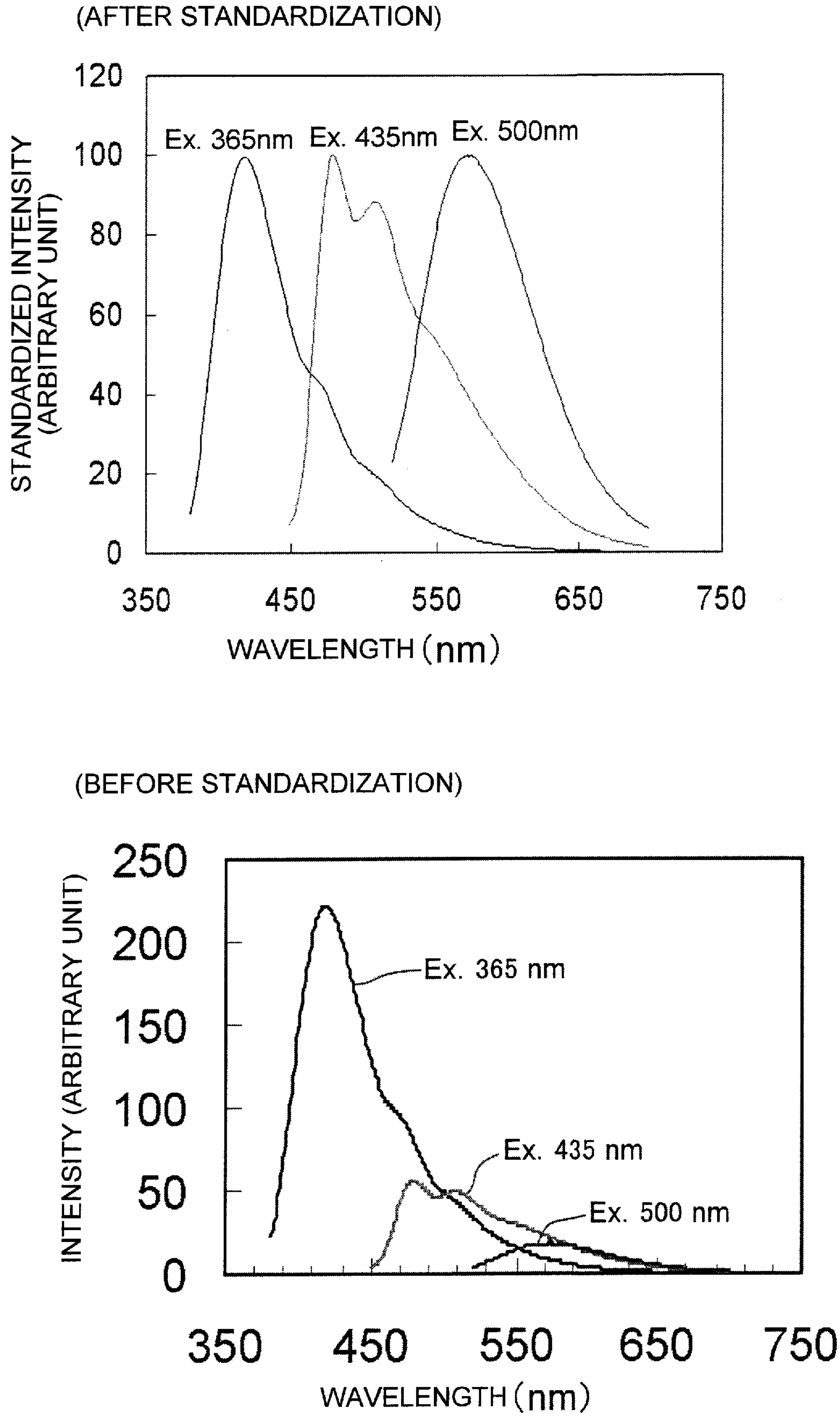
(AFTER STANDARDIZATION)
STANDARDIZED INTENSITY (ARBITRARY UNIT)
120
100
80
60
40
20
0
Ex. 365nm
Ex. 435nm
Ex. 500nm
350
450
550
650
750
WAVELENGTH (nm)
(BEFORE STANDARDIZATION)
INTENSITY (ARBITRARY UNIT)
250
200
150
100
50
0
Ex. 365 nm
Ex. 435 nm
Ex. 500 nm
350
450
550
650
750
WAVELENGTH (nm)

FIG. 13

(AFTER STANDARDIZATION)

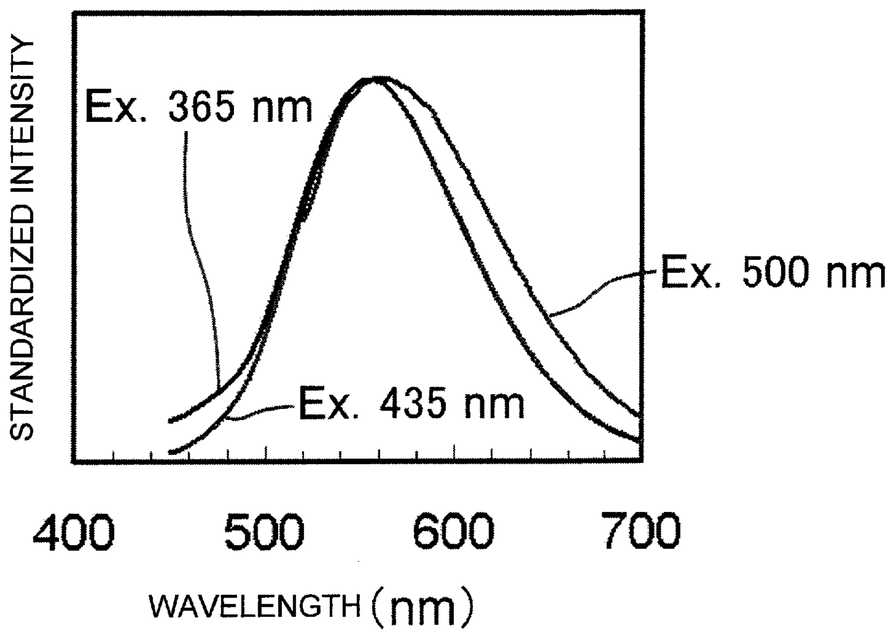


(BEFORE STANDARDIZATION)

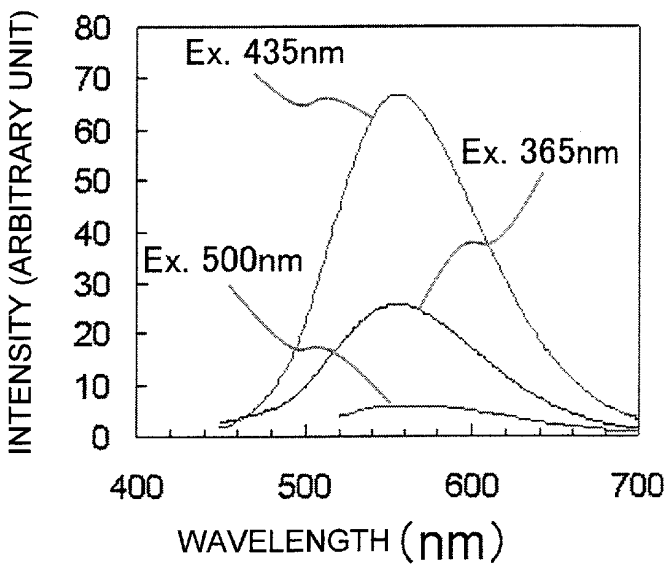

FIG. 14

(AFTER STANDARDIZATION)

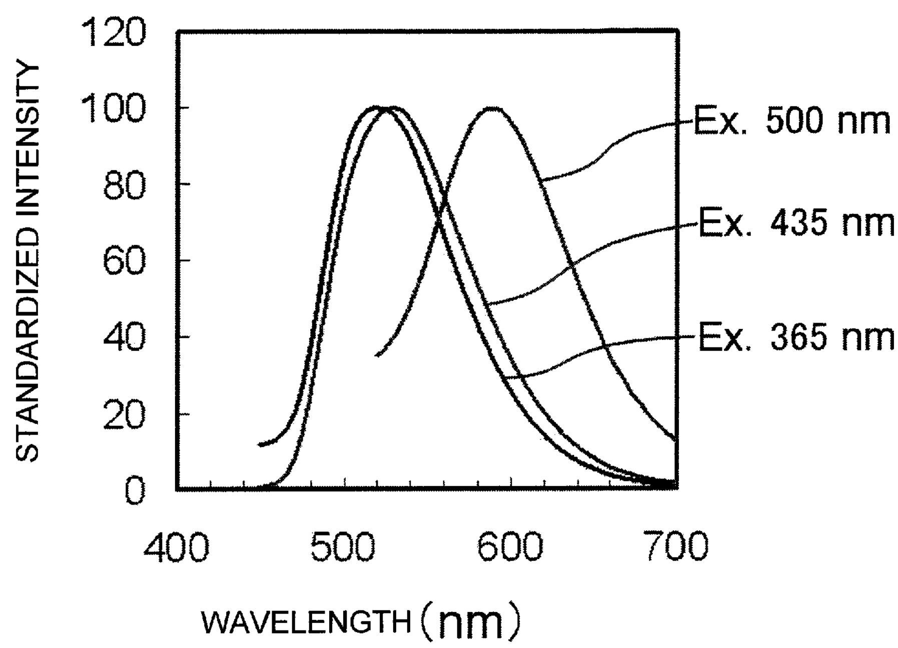


(BEFORE STANDARDIZATION)

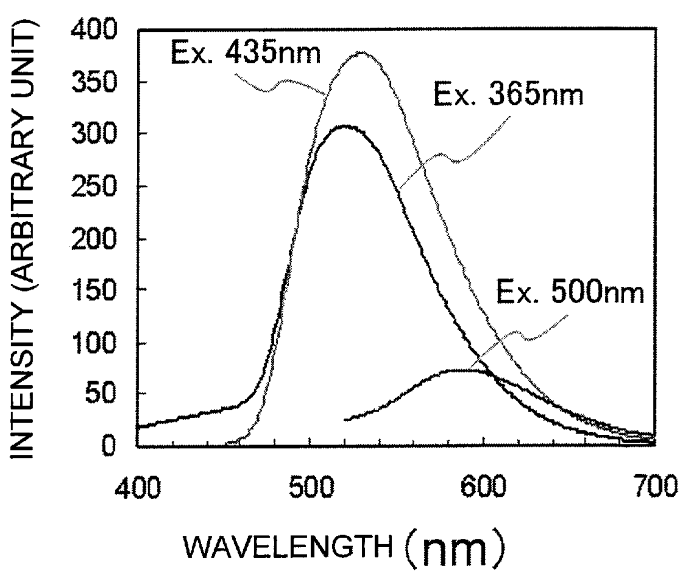

FIG. 15-1

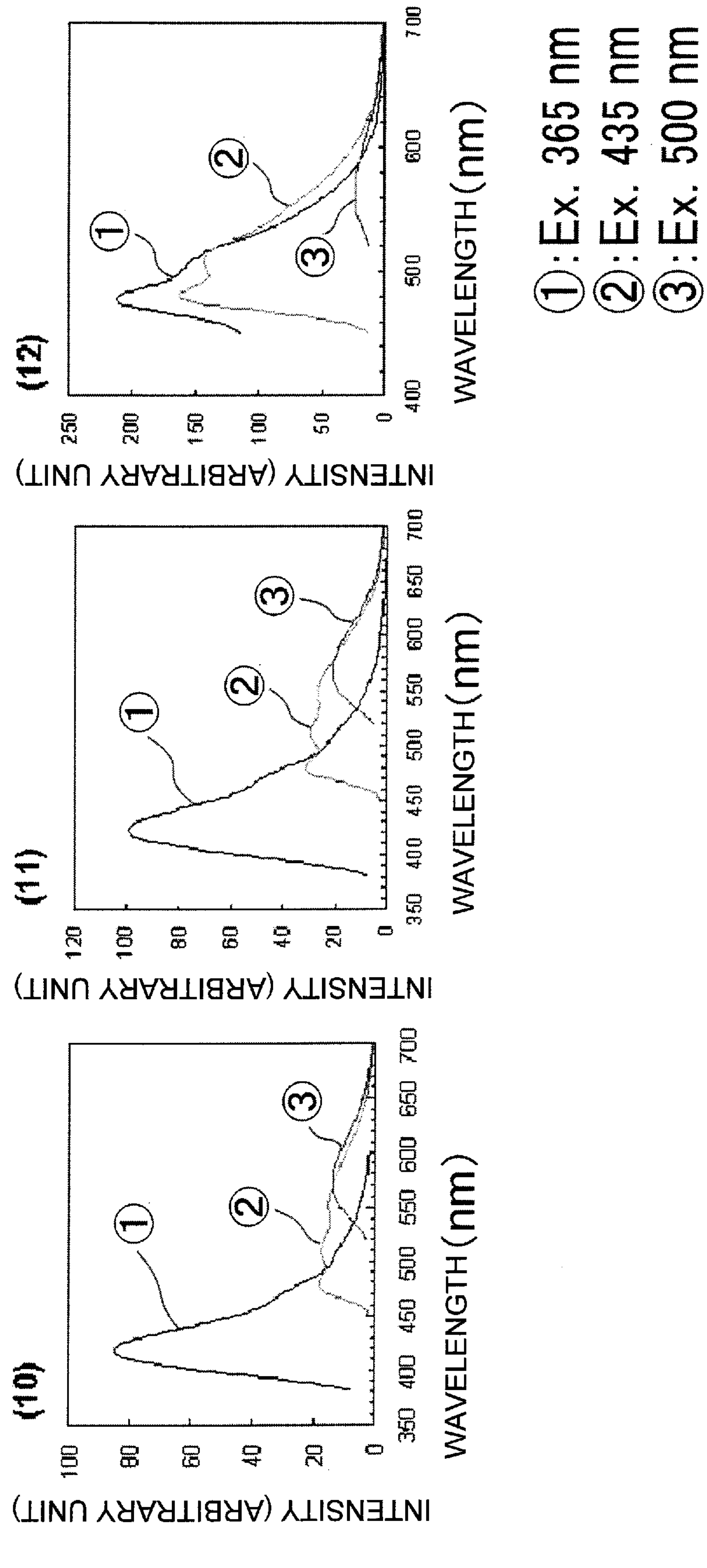

(10)
(11)
(12)
INTENSITY (ARBITRARY UNIT)
WAVELENGTH (nm)
①: Ex. 365 nm
②: Ex. 435 nm
③: Ex. 500 nm

FIG. 15-2

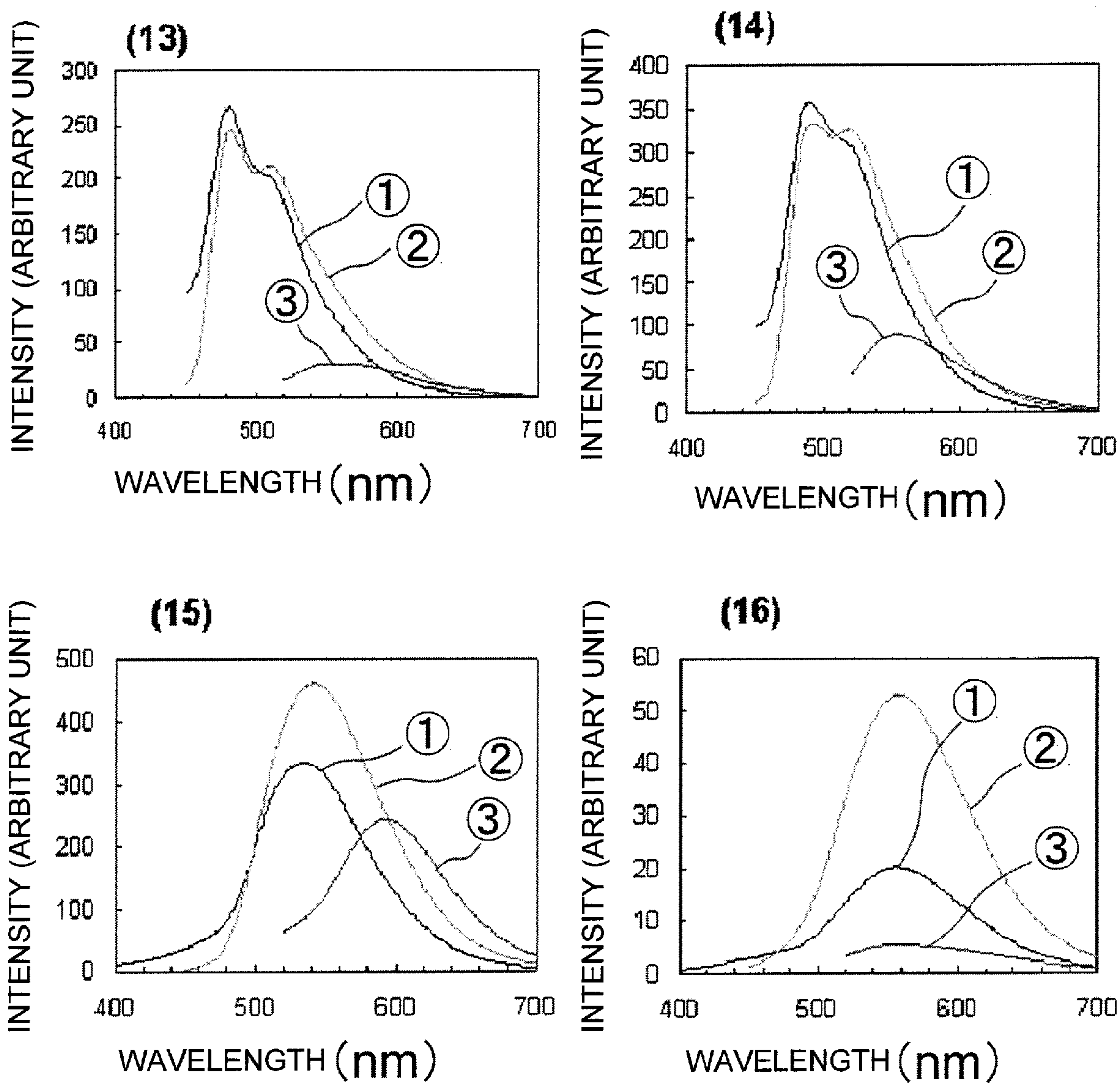


①: Ex. 365 nm
②: Ex. 435 nm
③: Ex. 500 nm

FIG. 16

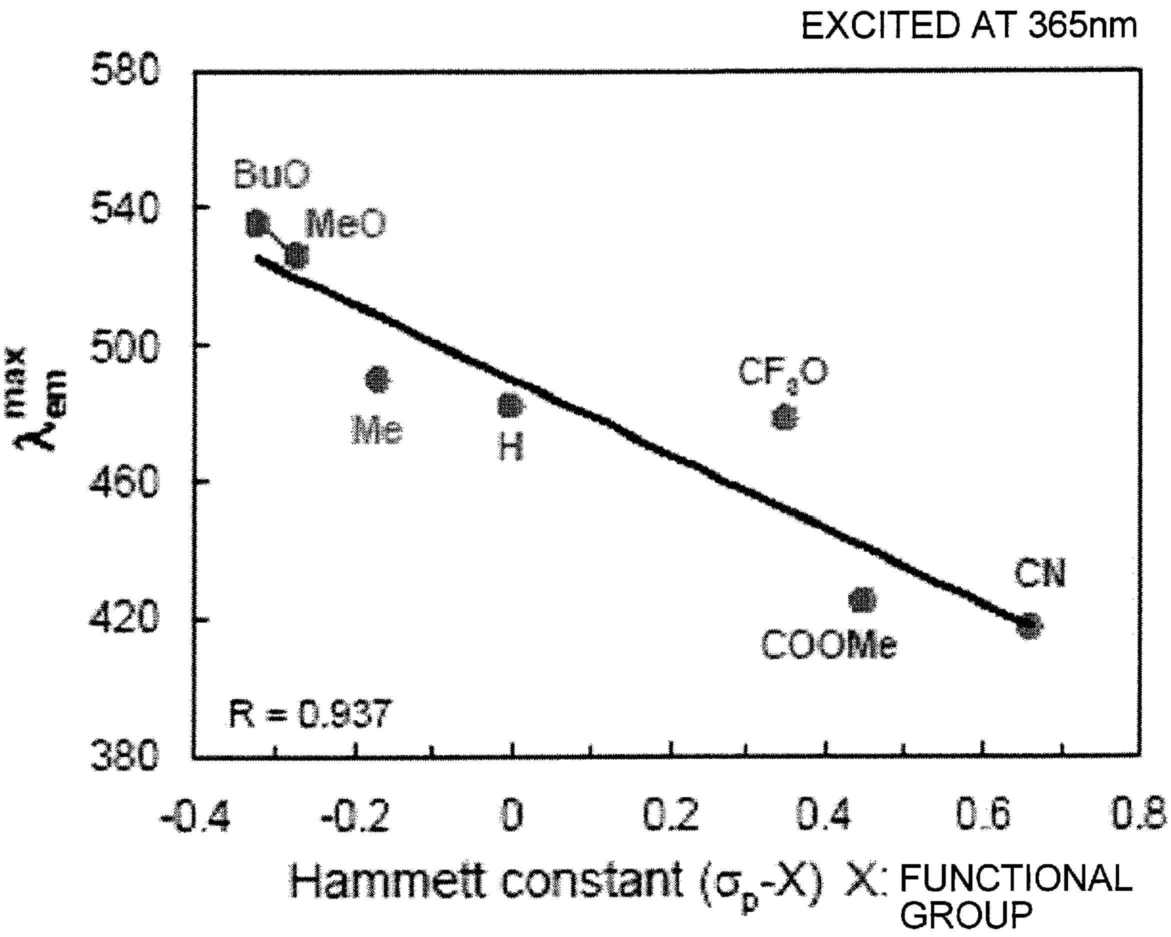
EXCITED AT 365nm
580
540
500
460
420
380
BuO
MeO
Me
H
CF3O
COOMe
CN
R = 0.937
-0.4
-0.2
0
0.2
0.4
0.6
0.8
λem max
Hammett constant (σp-X) X: FUNCTIONAL GROUP

FIG. 17-1

(i) ABSORPTION SPECTRUM

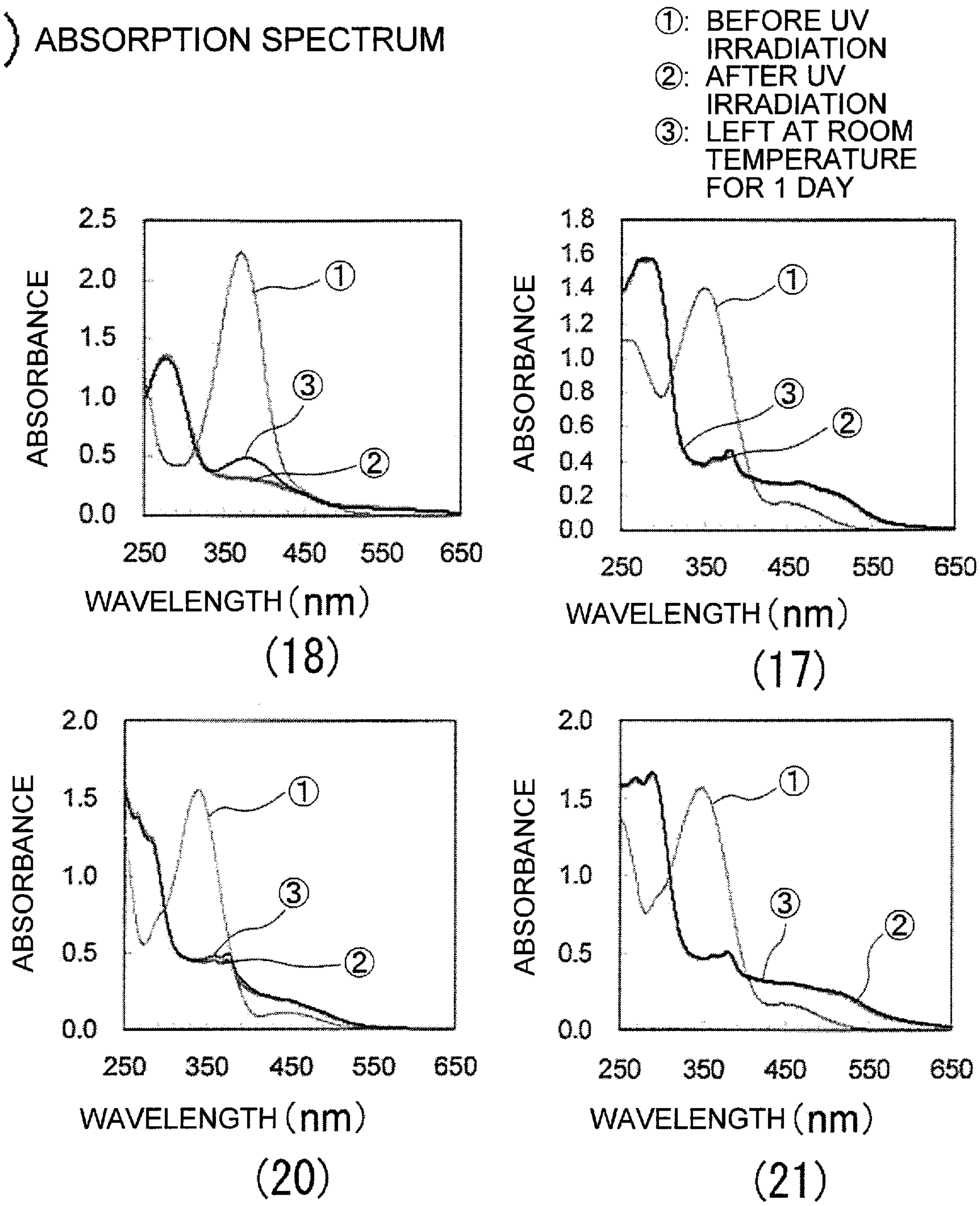

FIG. 17-2

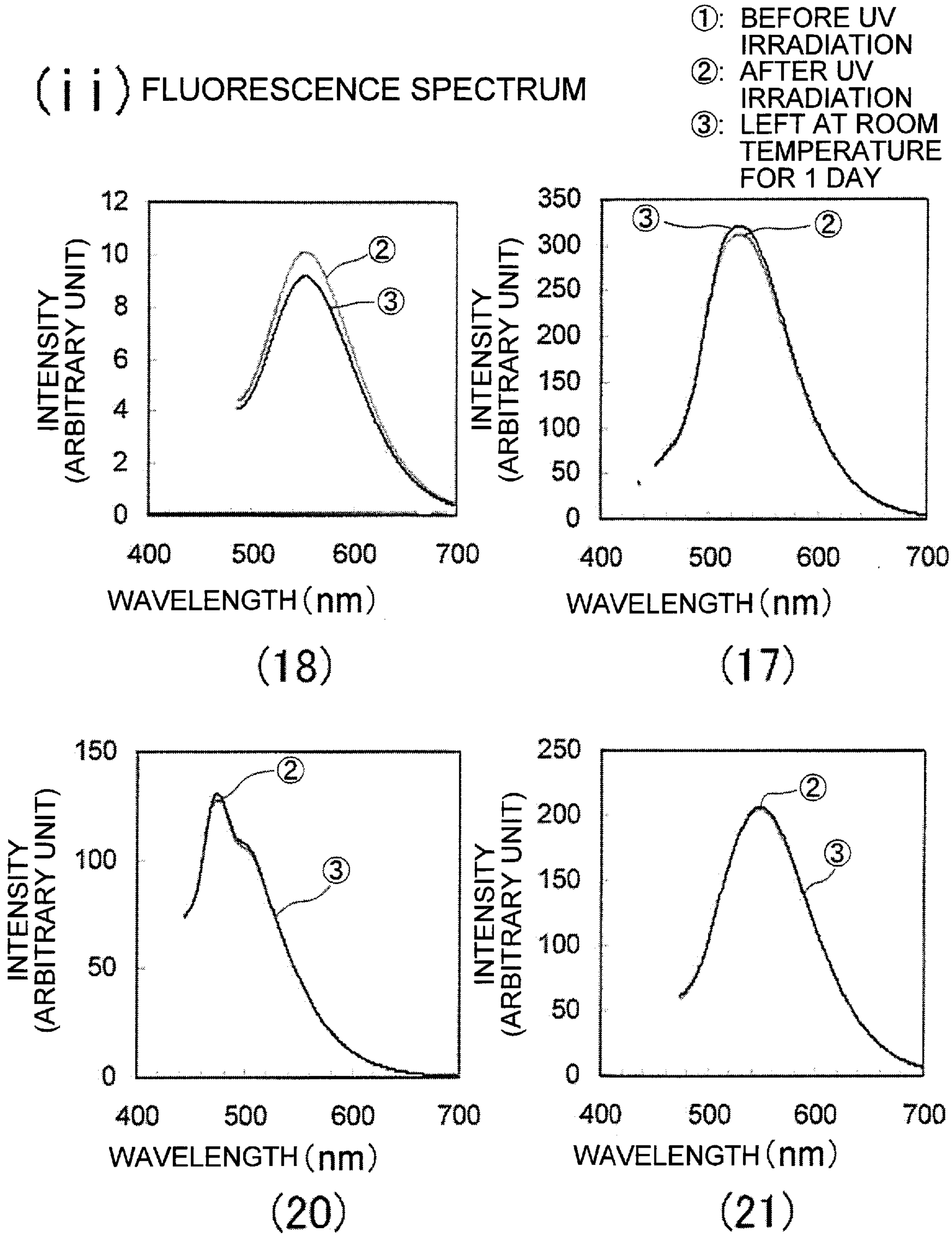
(ii) FLUORESCENCE SPECTRUM
①: BEFORE UV IRRADIATION
②: AFTER UV IRRADIATION
③: LEFT AT ROOM TEMPERATURE FOR 1 DAY
INTENSITY (ARBITRARY UNIT)
WAVELENGTH (nm)
(18)
(17)
(20)
(21)

FIG. 18

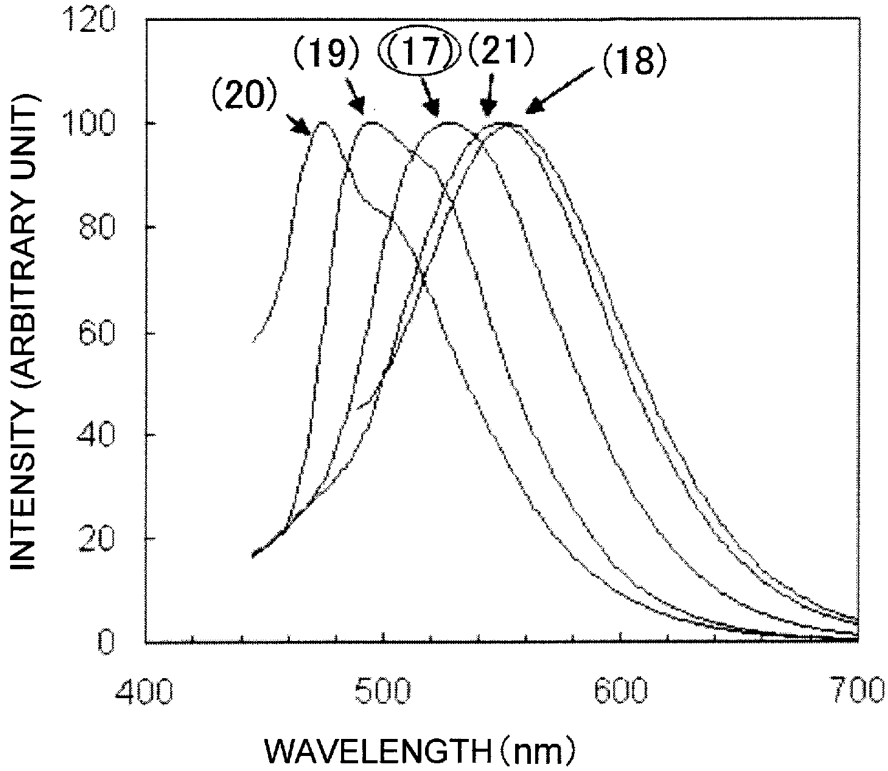
120
100
80
60
40
20
0
INTENSITY (ARBITRARY UNIT)
(20)
(19)
(17)
(21)
(18)
400
500
600
700
WAVELENGTH (nm)

FIG. 19

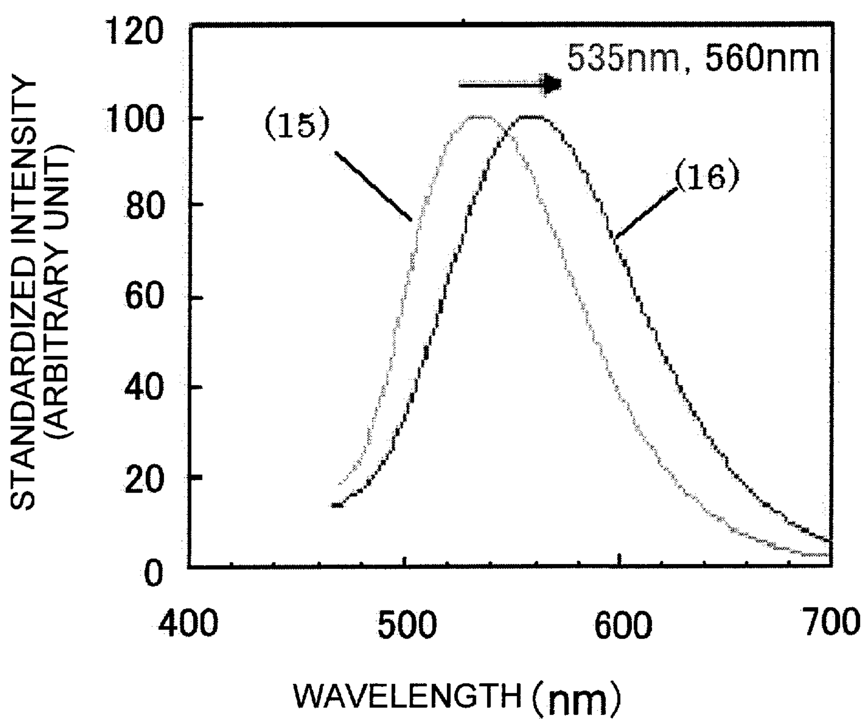
120
100
80
60
40
20
0
STANDARDIZED INTENSITY (ARBITRARY UNIT)
535nm, 560nm
(15)
(16)
400
500
600
700
WAVELENGTH (nm)

FIG. 20-1

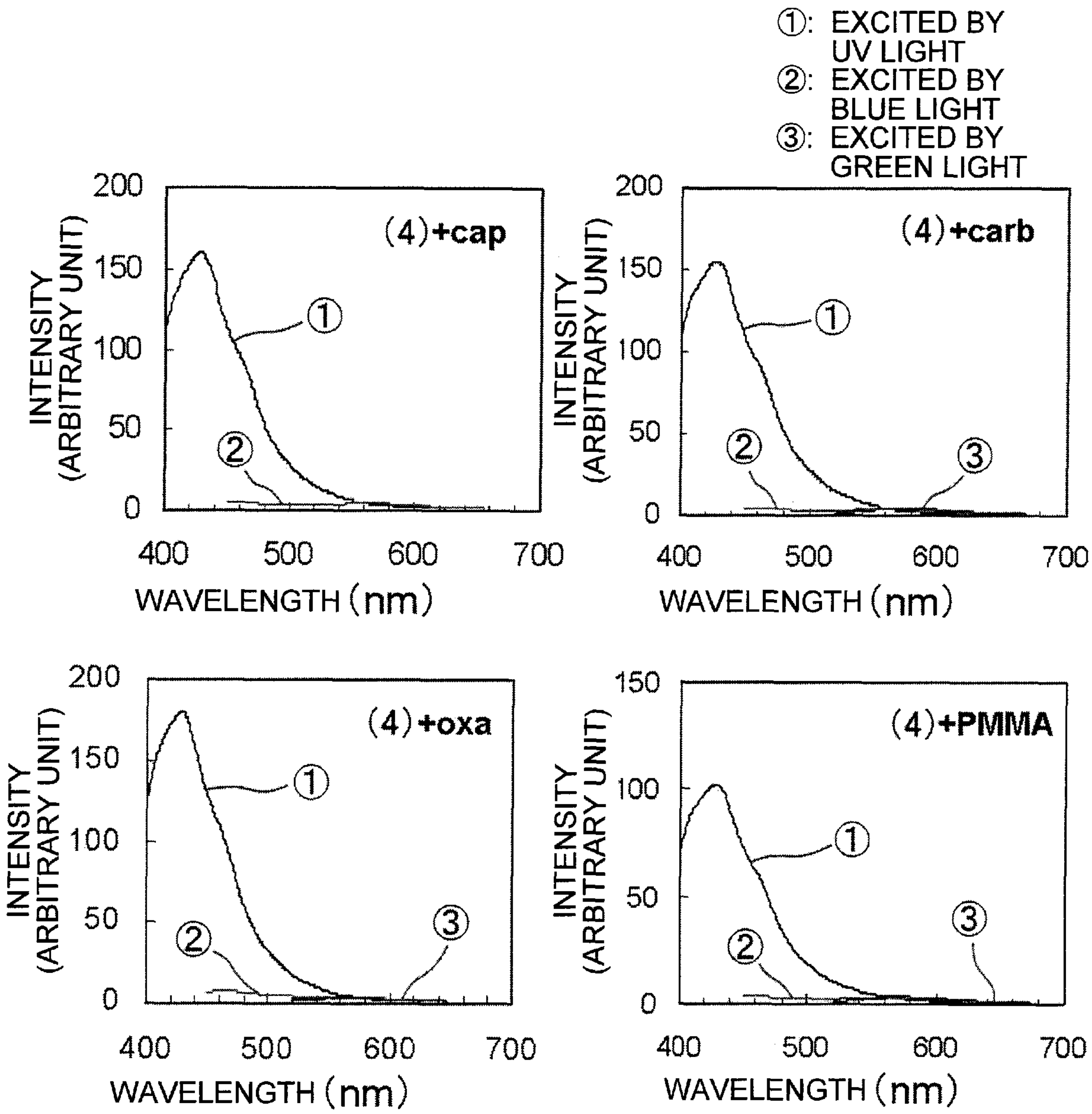
①: EXCITED BY UV LIGHT
②: EXCITED BY BLUE LIGHT
③: EXCITED BY GREEN LIGHT
(4)+cap
(4)+carb
(4)+oxa
(4)+PMMA
INTENSITY (ARBITRARY UNIT)
WAVELENGTH (nm)
200
150
100
50
0
400
500
600
700
①
②
③

FIG. 20-2

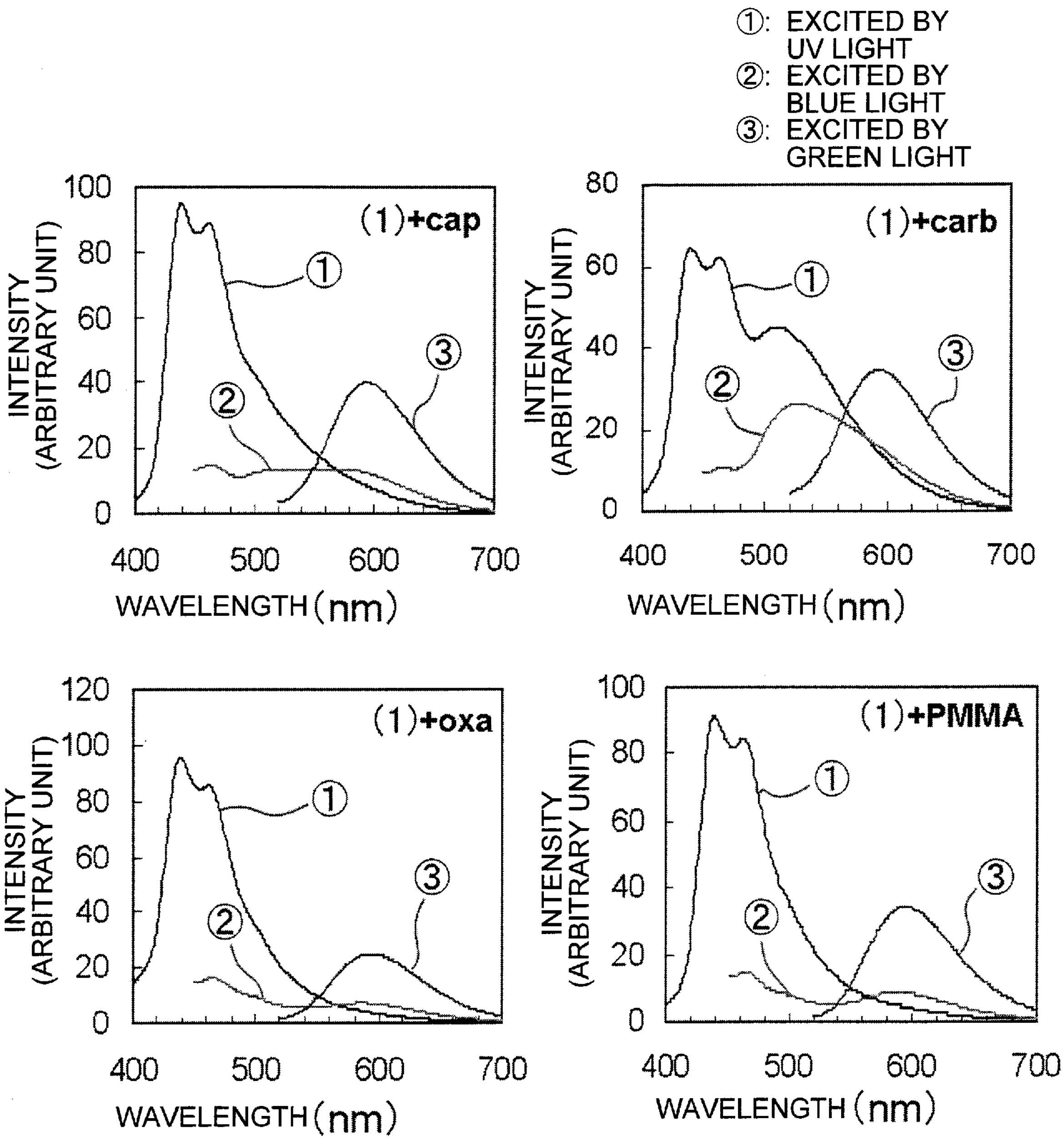
①: EXCITED BY UV LIGHT
②: EXCITED BY BLUE LIGHT
③: EXCITED BY GREEN LIGHT
(1)+cap
(1)+carb
(1)+oxa
(1)+PMMA
INTENSITY (ARBITRARY UNIT)
WAVELENGTH (nm)
0
20
40
60
80
100
120
400
500
600
700
①
②
③

FIG. 20-3

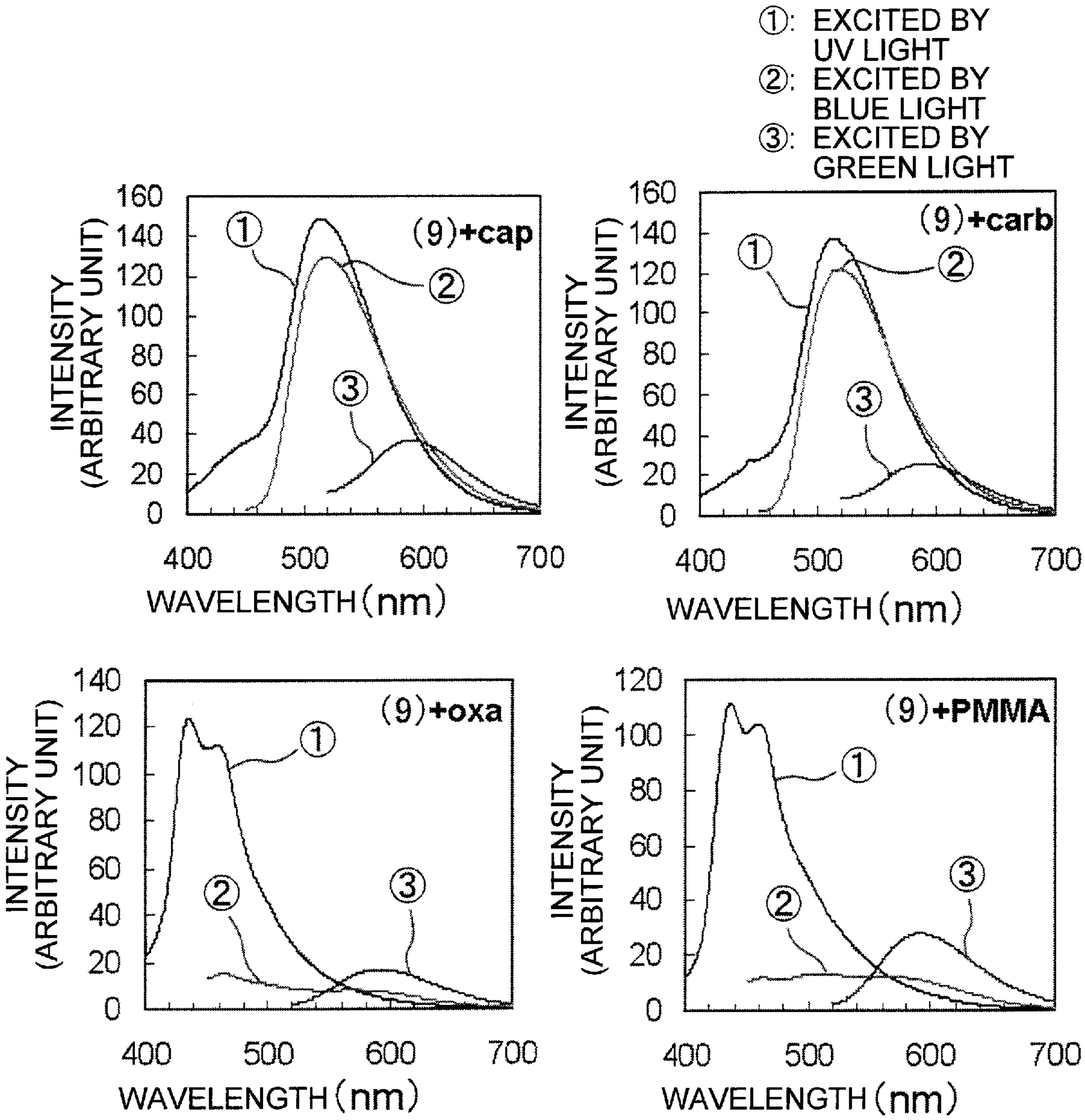
①: EXCITED BY UV LIGHT
②: EXCITED BY BLUE LIGHT
③: EXCITED BY GREEN LIGHT
(9)+cap
(9)+carb
(9)+oxa
(9)+PMMA
INTENSITY (ARBITRARY UNIT)
WAVELENGTH (nm)
0
20
40
60
80
100
120
140
160
400
500
600
700

FIG. 21

(a) OPTICAL MICROSCOPE PHOTOGRAPH

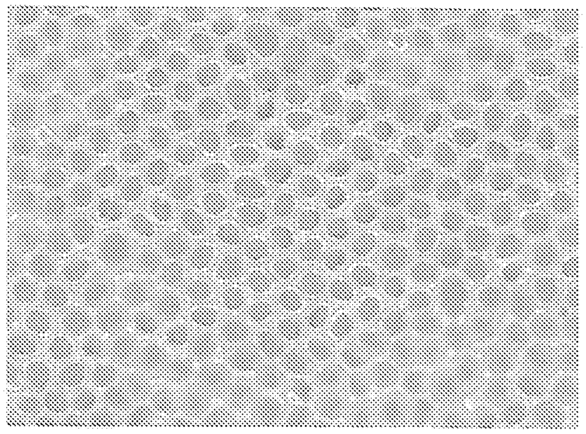

(b) FLUORESCENCE MICROSCOPE PHOTOGRAPH

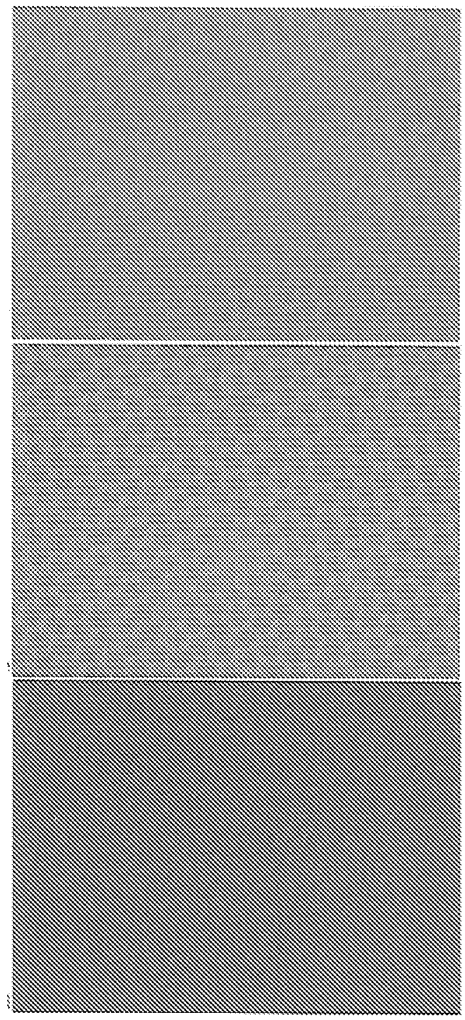

EXCITED BY ULTRAVIOLET LIGHT
→EMIT BLUE FLUORESCENCE

EXCITED BY BLUE LIGHT
→EMIT GREEN FLUORESCENCE

EXCITED BY GREEN LIGHT
→EMIT RED FLUORESCENCE

FIG. 22

(a) OPTICAL MICROSCOPE PHOTOGRAPH

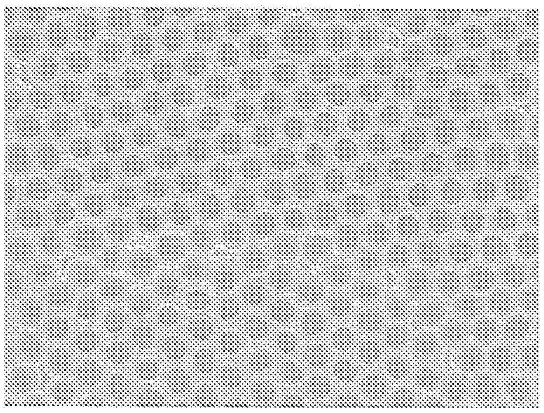

(b) FLUORESCENCE MICROSCOPE PHOTOGRAPH

EXCITED BY ULTRAVIOLET LIGHT
→EMIT BLUE FLUORESCENCE

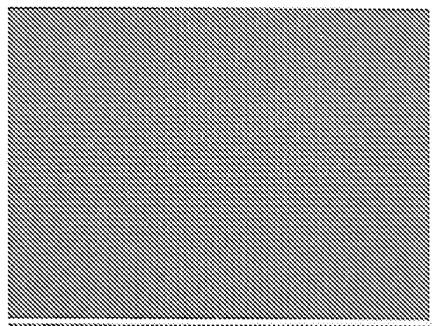

EXCITED BY BLUE LIGHT
→EMIT GREEN FLUORESCENCE

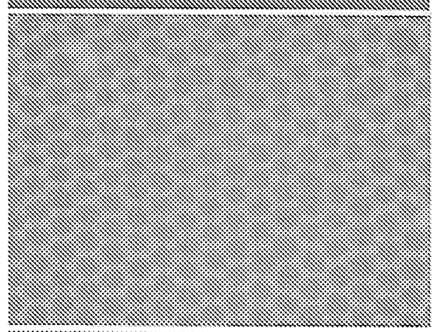

EXCITED BY GREEN LIGHT
→EMIT RED FLUORESCENCE

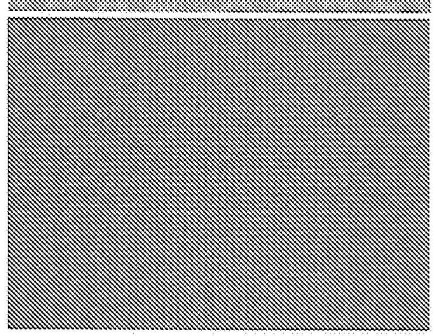

FIG. 23

(a) OPTICAL MICROSCOPE PHOTOGRAPH

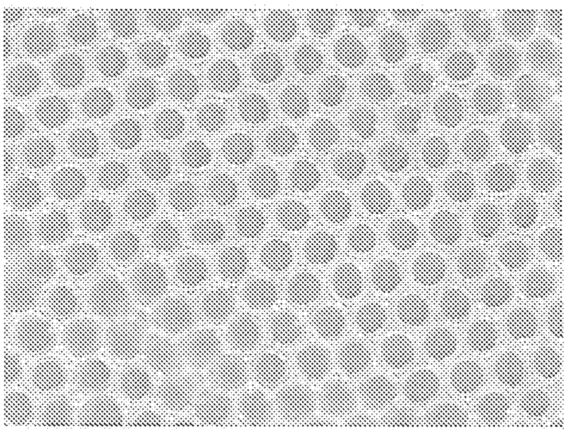

(b) FLUORESCENCE MICROSCOPE PHOTOGRAPH

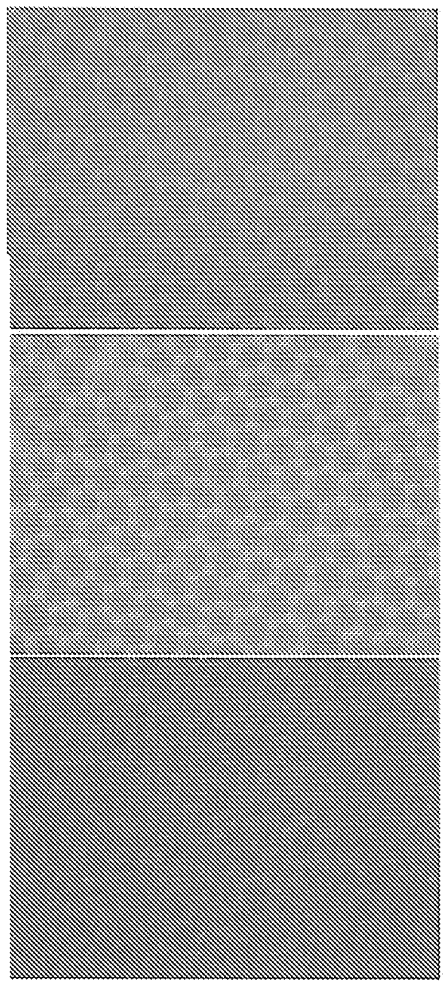

EXCITED BY ULTRAVIOLET LIGHT
→EMIT BLUE FLUORESCENCE

EXCITED BY BLUE LIGHT
→EMIT GREEN FLUORESCENCE

EXCITED BY GREEN LIGHT
→EMIT RED FLUORESCENCE

**INTERNATIONAL SEARCH REPORT**

International application No.
PCT/JP2008/054599

A. CLASSIFICATION OF SUBJECT MATTER
*C09K11/06*(2006.01)i, *C08K5/23*(2006.01)i, *C08L101/00*(2006.01)i, *C09K11/00*(2006.01)i, *C09B29/12*(2006.01)n

According to International Patent Classification (IPC) or to both national classification and IPC

B. FIELDS SEARCHED

Minimum documentation searched (classification system followed by classification symbols)
C09K11/06, C08K5/23, C08L101/00, C09K11/00, C09B29/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
CA, REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 01-100540 A (Mitsui Petrochemical Industries, Ltd.),<br>18 April, 1989 (18.04.89),<br>Claims; page 3, upper left column, lines 2 to 11; page 3, upper right column, line 17 to lower right column, line 6; page 4, example 2<br>& EP 312339 A2 & KR 1992-0006313 B1<br>& CN 1032877 A | 1,3<br>2,4,5 |
| Y | JP 07-084532 A (Fuji Xerox Co., Ltd.),<br>31 March, 1995 (31.03.95),<br>Claims; Par. Nos. [0018] to [0021], [0028], [0045]<br>& US 5568417 A | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 May, 2008 (20.05.08) | 27 May, 2008 (27.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/054599

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2006/100957 A1 (Idemitsu Kosan Co., Ltd.), 28 September, 2006 (28.09.06), Claims; Par. Nos. [0019], [0045], [0051], [0058] to [0059] & US 2007/0090755 A1 & EP 1863323 A1 | 1-5 |
| Y | JP 2007-023162 A (Fujifilm Holdings Corp.), 01 February, 2007 (01.02.07), Claims; Par. Nos. [0048], [0051] to [0052] (Family: none) | 1-5 |
| Y | JP 2006-160715 A (Riken, Japan), 22 June, 2006 (22.06.06), Claims; Par. No. [0032] & US 2006/0194771 A1 | 1-5 |
| Y | Mina Han, Masahiko Hara, "Intense Fluorescence from Light-Driven Self-Assembled Aggregates of Nonionic Azobenzene Derivative", Journal of the American Chemical Society, ACS Publications, 2005.08.10, vol.127, No.31, p.10951-10955 | 1-5 |
| A | Sang Kyu Lee, Do-Hoon Hwang, Byung-Jun Jung, Nam Sung Cho, Jaemin Lee, Jong-Don Lee, Hong-Ku Shim, "The Fabrication and Characterization of Single-Component Polymeric White-Light-Emitting Diodes", ADVANCED FUNCTIONAL MATERIALS, WILEY-VCH, 2005.10, vol.15, No.10, p.1647-1655 | 1-5 |
| A | Eyal Aharon, Michael Kalina, Gitti L. Frey, "Inhibition of Energy Transfer between Conjugated Polymer Chains in Host/Guest Nanocomposites Generates White Photo- and Electroluminescence", Journal of the American Chemical Society, ACS Publications, 2006.12.20, vol.128, No.50, p.15968-15969 | 1-5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007064242 A
- JP 2006160715 A


### Non-patent literature cited in the description


- *Adv. Funct. Mater.,* 2005, vol. 15, 1647
- *JACS,* 2006, vol. 128, 15968
- **C. Hansch et al.** *Chem. Rev.,* 1991, vol. 91, 165
- **Smith, M.B. ; March, J.** March's Advanced Organic Chemistry: Reactions, Mechanisms, and Structure. Wiley-Interscience: John Wiley & Sons, Inc, 2001
- **Xu, Z-S. ; Lemieux, R.P. ; Natansohn, A. ; Rochon, P. ; Shashidhar, R.** *Liq. Cryst.,* 1999, vol. 26, 351-359
- *Chem. Rev.,* 1991, vol. 91, 165